# EUROPÄISCHE PATENTANMELDUNG

(11) **EP 4 327 666 A1**
(43) Veröffentlichungstag der Anmeldung: **28.02.2024**
(21) Anmeldenummer: 22192457.4
(22) Anmeldetag: 26.08.2022
(51) Int. Cl.: A23F 5/20, A23F 5/22, B01D 11/02, C07D 473/12

(54) **VERFAHREN UND VORRICHTUNG ZUR HERSTELLUNG ENTKOFFEINIERTER ROHKAFFEEBOHNEN UND KOFFEIN UNTER EINSATZ VON ADSORBERHARZEN SOWIE ENTSPRECHENDE VERWENDUNGEN**

(71) Anmelder: ANKA Angewandte Kaffeetechnologie GmbH, 28237 Bremen (DE)
(72) Erfinder: Süße-Herrmann, Oliver, 27798 Hude (DE); Schwital, Jan Christoph, 22605 Hamburg (DE); Peschutter, Felix, 21244 Buchholz in der Nordheide (DE); Disqué de Guzman, Julia, 28197 Bremen (DE)
(74) Vertreter: Eisenführ Speiser

(57) **Zusammenfassung**

Beschrieben wird ein Verfahren zur Herstellung entkoffeinierter Rohkaffeebohnen. Ein Verfahrensschritt umfasst dabei die Koffeinextraktion aus Rohkaffeebohnen mittels einer wässrigen Extraktionsflüssigkeit, ein weiterer Verfahrensschritt das Binden von Koffein aus der Extraktionsflüssigkeit an ein Adsorberharz, und ein weiterer Verfahrensschritt das Lösen von Koffein von dem mit Koffein beladenen Adsorberharz mit Dichlormethan (DCM).

## Beschreibung

Die vorliegende Erfindung betrifft ein Verfahren zur Herstellung entkoffeinierter Rohkaffeebohnen. Ein Verfahrensschritt umfasst dabei die Koffeinextraktion aus Rohkaffeebohnen mittels einer wässrigen Extraktionsflüssigkeit, ein weiterer Verfahrensschritt das Binden von Koffein aus der Extraktionsflüssigkeit an ein Adsorberharz, und ein weiterer Verfahrensschritt das Lösen von Koffein von dem mit Koffein beladenen Adsorberharz mit Dichlormethan (DCM).

Die vorliegende Erfindung betrifft zudem eine Vorrichtung zur Herstellung entkoffeinierter Rohkaffeebohnen in einem erfindungsgemäßen Verfahren. Die vorliegende Erfindung betrifft auch die Verwendung einer erfindungsgemäßen Vorrichtung zur Durchführung eines erfindungsgemäßen Verfahrens, die Verwendung von Dichlormethan zum Entfernen von Koffein von einem Adsorberharz und die Verwendung eines Adsorberharzes zum Adsorbieren von Koffein aus einer an Koffein angereicherten, wässrigen Extraktionsflüssigkeit, in einem Verfahren zur Herstellung entkoffeinierter Rohkaffeebohnen.

Die Erfindung in ihren diversen Aspekten ist in den beigefügten Patentansprüchen definiert; bestimmte Begriffsdefinitionen sind in der nachfolgenden Beschreibung enthalten. Details und bevorzugte Ausgestaltungen des erfindungsgemäßen Verfahrens, der erfindungsgemäßen Vorrichtung und der erfindungsgemäßen Verwendungen ergeben sich jeweils aus den beigefügten Patentansprüchen sowie aus der nachfolgenden Beschreibung.

Die Entkoffeinierung von Rohkaffeebohnen ist ein verbreitetes Verfahren zur Herstellung von entkoffeiniertem Kaffee sowie zur Herstellung von Koffein bzw. von Koffeinkonzentraten. Die Entkoffeinierung von Rohkaffeebohnen erfolgt dabei üblicherweise in einem Extraktionsprozess. Die Extraktionsprozesse lassen sich hinsichtlich der eingesetzten Extraktionsmittel grob in drei unterschiedliche Klassen unterteilen.

Ein seit langem bekannter Entkoffeinierungsprozess beruht auf der Extraktion von Koffein aus Rohkaffeebohnen mittels organischen Lösungsmitteln wie DCM oder Ethylacetat.

Des Weiteren wurden Entkoffeinierungsverfahren entwickelt, in denen Wasser oder wässrige Lösungen als Extraktionsmittel verwendet werden. Hierzu zählen unter anderem das "Swiss Water Decaffeination"-Verfahren und das "French Water Decaffeination"-Verfahren.

Ein weiteres gängiges Extraktionsmittel zur Entkoffeinierung von Rohkaffeebohnen ist Kohlenstoffdioxid, in flüssiger oder überkritischer Form.

Sämtliche der vorgenannten Entkoffeinierungsverfahren beruhen darauf, dass die verwendeten Extraktionsmittel dazu geeignet sind, Koffein aus Rohkaffeebohnen herauszulösen bzw. zu extrahieren. Rohkaffeebohnen enthalten jedoch nicht nur Koffein, sondern auch eine Vielzahl anderer Substanzen, die unter anderem dafür verantwortlich sind, dem Kaffee seinen charakteristischen Geschmack zu geben. Es besteht somit ein Bedarf an Entkoffeinierungsverfahren, in denen Koffein selektiv aus Rohkaffeebohnen entfernt wird, so dass die sonstigen Kaffeeinhaltsstoffe zumindest weitgehend in den Rohkaffeebohnen verbleiben.

Die Kaffeeinhaltsstoffe lassen sich schematisch in zwei Klassen unterteilen: die erste Klasse an Kaffeeinhaltsstoffen besteht dabei aus polaren, gut wasserlöslichen Bestandteilen; die zweite Klasse an Kaffeeinhaltsstoffen besteht aus unpolaren, schlecht wasserlöslichen Substanzen. Koffein zählt hierbei zwar eher zur zweiten Gruppe der unpolaren Substanzen, zeichnet sich jedoch dadurch aus, dass es zu einem nicht unerheblichen Teil auch in Wasser löslich ist.

Entkoffeinierungsverfahren, in denen organische unpolare Lösungsmittel wie DCM oder Ethylacetat als Extraktionsmittel eingesetzt werden, sind somit gut geeignet, Koffein aus Rohkaffeebohnen zu entfernen. Diese Verfahren haben aber auch Nachteile, sofern keine spezifischen und aufwändigen Maßnahmen getroffen werden, die diesen Nachteilen entgegenwirken.

Ein erster Nachteil besteht darin, dass neben Koffein auch andere unpolare Kaffeeinhaltsstoffe aus den Rohkaffeebohnen extrahiert werden. Hierzu zählen insbesondere unpolare Bestandteile, die teils auch für den Geschmack von Kaffee relevant sind, also die sogenannten Geschmacks- oder Aromastoffe. Die (direkte) Extraktion von Koffein aus Rohkaffeebohnen mit organischen, unpolaren Lösungsmitteln führt also dazu, dass neben Koffein auch weitere Kaffeeinhaltsstoffe aus den Rohkaffeebohnen extrahiert werden. In Bezug auf die Beibehaltung geschmacklicher Eigenschaften in den resultierenden entkoffeinierten Rohkaffeebohnen sowie deren Folgeprodukten sind diese Entkoffeinierungsverfahren somit gegenüber Entkoffeinierungsverfahren unter Einsatz von hochselektiven Extraktionsmitteln wie z.B. flüssigem Kohlenstoffdioxid unterlegen.

Ein zweiter Nachteil von Entkoffeinierungsverfahren, in denen organische Lösungsmittel wie DCM oder Ethylacetat als Extraktionsmittel in direkten Kontakt mit Rohkaffeebohnen gebracht werden, besteht im nachteiligen Extraktionsverhalten der resultierenden Folgeprodukte. Insbesondere bei Folgeprodukten in Form von Single-Portion-Systemen wie Kaffee-Kapseln werden hier häufig sehr lange Extraktionszeiten beobachtet, die zu einem vollständigen Blockieren von Kaffeemaschinen führen können.

Ein weiterer Nachteil besteht in der Wahrnehmung der Verbraucher. Obwohl Entkoffeinierungsverfahren, in denen organische Lösungsmittel wie DCM oder Ethylacetat als Extraktionsmittel in direkten Kontakt mit Rohkaffeebohnen gebracht werden, aufgrund niedriger Restgehalte der eingesetzten Lösungsmittel nach dem Rösten prinzipiell unbedenklich sind, werden sie dennoch vom Verbraucher teils negativ wahrgenommen, was zu Nachteilen in der Vermarktung der Produkte führt.

Die Entkoffeinierung mittels flüssigem Kohlenstoffdioxid resultiert zwar aufgrund der hohen Selektivität des Extraktionsmittels für Koffein in Kaffeeprodukten mit hoher geschmacklicher Qualität, hat aber ebenfalls gewisse Nachteile. Zu diesen Nachteilen zählen insbesondere der hohe energetische und kostenintensive Aufwand, der notwendig ist, um eine gewünschte Menge an Koffein aus den Rohkaffeebohnen zu extrahieren. Auch aus diesen Gründen werden Entkoffeinierungsverfahren mittels flüssigem Kohlenstoffdioxid im großtechnischen Maßstab nur vereinzelt durchgeführt. Die Entkoffeinierung mittels überkritischen Kohlenstoffdioxid wird ebenfalls nur sehr vereinzelt durchgeführt, da auch dieses Verfahren sehr kostenintensiv ist.

Entkoffeinierungsprozesse mit wässrigen Extraktionslösungen extrahieren primär polare Inhaltsstoffe aus den Rohkaffeebohnen, sodass polare Kaffeeinhaltsstoffe wie Säuren, Mineralien und polare Aromastoffe (z.B. Chlorogensäuren, Aminosäuren, Zucker und wasserlösliche Peptide) in die wässrige Extraktionsflüssigkeit übergehen. Koffein wird mit nur geringer Selektivität aus den Rohkaffeebohnen extrahiert. Unpolare Aromastoffe, Vitamine, Lipide und weitere charakteristische Bestandteile des Rohkaffees verbleiben weitgehend in den Rohkaffeebohnen. Auch bei wässrigen Extraktionsverfahren wird somit immer eine Mischung an extrahierten Kaffeeinhaltsstoffen erhalten.

Zur Abtrennung von Koffein aus einer wässrigen Extraktionslösung werden derzeit in der Industrie im Wesentlichen zwei Methoden angewendet.

Eine erste Methode besteht darin, die koffeinhaltige wässrige Extraktionsflüssigkeit einer Flüssig-Flüssig-Extraktion mit organischen Lösungsmitteln wie Dichlormethan (DCM) zu unterziehen. Dieses Verfahren ist insofern nachteilig, als dass die wässrige Extraktionsflüssigkeit in direkten Kontakt mit organischen Lösungsmitteln wie DCM kommt. DCM ist in nicht unerheblicher Menge in Wasser löslich, sodass ein Anteil des DCM bei der Flüssig-Flüssig-Extraktion in die wässrige Extraktionsflüssigkeit übergeht. Falls ein solches Verfahren in einem einfachen Kreisprozess durchgeführt würde, also die wässrige Extraktionsflüssigkeit nach der Flüssig-Flüssig-Extraktion mit DCM erneut über die Rohkaffeebohnen geleitet würde, käme in der wässrigen Extraktionsflüssigkeit gelöstes DCM in direkten Kontakt mit den Rohkaffeebohnen. Dies ist aus den vorstehend genannten Gründen nicht erwünscht und nachteilig. Zudem werden nachteiliger Weise bei einer Flüssig-Flüssig-Extraktion mit organischen Lösungsmitteln wie Dichlormethan (DCM) große Mengen dieser Lösungsmittel benötigt, um das wässrige Extraktionsmittel in ausreichendem Maße von Koffein zu befreien.

Eine zweite Methode zur Entfernung von Koffein aus einer wässrigen Extraktionslösung besteht darin, Adsorptionsmittel einzusetzen, die Koffein aus der wässrigen Extraktionslösung adsorbieren. Bekannte Verfahren nutzen hierfür insbesondere Aktivkohlefilter, an denen das Koffein gebunden wird. Es ist hierbei jedoch insbesondere nachteilig, dass sich das Koffein anschließend sehr schlecht oder gar nicht von den Adsorptionsmitteln trennen (desorbieren) lässt, sodass eine Isolierung von Koffein bzw. Koffeinextrakten schwierig oder unmöglich ist. Zudem werden auch relevante Anteile anderer wertvoller Kaffeeinhaltsstoffe an die verwendeten Adsorbermaterialien gebunden und nicht weiter genutzt, also insbesondere nicht den entkoffeinierten Rohkaffeebohnen wieder zugeführt. Dies führt letztlich zu einem nachteiligen Qualitätsverlust der resultierenden entkoffeinierten Rohkaffeebohnen. Auch können die eingesetzten Adsorptionsmittel häufig nur einmalig verwendet werden, was aus ökonomischen und ökologischen Aspekten nicht wünschenswert ist.

Es sind Verfahren bekannt, in denen Adsorbermaterialien zum Einsatz kommen, um die in der wässrigen Extraktionsflüssigkeit enthaltenen Substanzen zu adsorbieren. Einige dieser Prozesse sind im Folgenden aufgeführt:
WO 2014/072282 A1 offenbart einen Prozess zur Gewinnung von Koffein und bioaktiven Substanzen aus Kaffee mittels Inkontaktbringen eines Kaffeeextrakts mit einem Adsorber, um Koffein und bioaktive Substanzen zu adsorbieren, und die adsorbierten Substanzen anschließend mittels Inkontaktbringen des Adsorbers mit einer wässrigen Lösung zu gewinnen und mindestens zwei Fraktionen wässriger Lösung zu sammeln.

DE 2600492 A1 offenbart ein Verfahren für die Entcoffeinisierung von wässrigen Extrakten pflanzlicher Materialien, welches dadurch ausgeführt wird, dass man den Extrakt mit einem hydrophoben Polymerharz mit einem Dipolmoment von weniger als ungefähr 2,0 Debye in Berührung bringt, wodurch Coffein und andere lösliche Bestandteile durch das Harz adsorbiert werden; das Harz und den entcoffeinisierten Extrakt trennt; das Harz mit dem daran haftenden Coffein und den daran haftenden anderen löslichen Bestandteilen mit Wasser auslaugt, um Coffein zu entfernen.

DE 2832267 A1 offenbart ein Verfahren zum Entfernen von Koffein aus grünen Kaffeebohnen, wobei die Bohnen mit einer wässrigen Flüssigkeit extrahiert werden und der erhaltene Extrakt mit einem synthetischen Polymerharz, das Koffein vorzugsweise adsorbiert, behandelt wird, dadurch gekennzeichnet, dass das anzuwendende synthetische Polymerharz vom Typ ist, der durch Polymerisation oder Copolymerisation von aromatische Ringsysteme und Säuregruppen enthaltenden Monomeren erhalten werden kann und wodurch außerdem das Verhältnis der gesamten Adsorptionskapazität für Koffein zu der gesamten lonenaustauschkapazität grösser als etwa 1 und kleiner als etwa 25 ist und vorzugsweise zwischen 5 und 15 liegt. Weitergehend wird ein Verfahren zum Regenerieren des mit Koffein beladenen Harzes offenbart, welches dadurch gekennzeichnet ist, dass das beladene Harz zunächst mit Wasser von einer Temperatur zwischen 0°C und Raumtemperatur unter Extraktion eines gewünschten Prozentsatzes anderer Feststoffe als Koffein gespült wird und sodann mit Wasser von einer Temperatur zwischen 50°C und 100°C unter Extraktion eines gewünschten Prozentsatzes an Koffein gespült wird.

EP 0 776 607 B1 offenbart die Verwendung eines durch Coffein molekular geprägten Polymers zur Entcoffeinierung eines Kaffeextrakts und ein Verfahren zum Extrahieren von Coffein aus einem wäßrigen Extrakt, der aus grünen oder gerösteten Kaffeebohnen erhalten wurde, wobei der Extrakt mit einem geprägten Polymer in Berührung gebracht wird, das nichtkovalente Wiedererkennungsstellen für Coffein aufweist und in der Lage ist, selektiv Coffein aus einem wäßrigen Extrakt zu entfernen, wodurch Coffein aus dem genannten Extrakt entfernt wird.

Auch diese veröffentlichten Wasserentkoffeinierungsverfahren haben jedoch gewisse Nachteile.

Einer dieser Nachteile besteht darin, dass die Adsorbermaterialien in manchen Fällen sehr teuer und aufwendig hergestellt werden müssen; daher haben sich die Verfahren zumindest bislang im großtechnischen Maßstab nicht durchgesetzt (vgl. EP 0 776 607 B1).

Zudem sind die genannten veröffentlichten Verfahren bzw. Adsorbermaterialien zwar dazu geeignet, Koffein aus einer wässrigen Extraktionslösung zu entfernen, keines der genannten Verfahren ist jedoch in ausreichender Weise dazu geeignet, Koffein bzw. Koffeinextrakt als Wertprodukt bereitzustellen. Insbesondere die (selektive) Desorption von am Adsorbermaterial gebundenen Koffein stellt eine signifikante Herausforderung dar. So wird bei der in manchen Fällen diskutierten Behandlung des Adsorbermaterials das gebundene Koffein nicht selektiv entfernt, sondern es wird ein Gemisch von Koffein und sonstigen Kaffeeinhaltsstoffen entfernt. In einigen Verfahren werden aufwendige und daher ineffiziente Protokolle verwendet, in denen das Adsorbermaterial mehrfach mit Wasser unterschiedlicher Temperatur gespült wird. Die so erhaltenen Spülfraktionen weisen dann zwar einen gewissen Koffeinkonzentrationsgradienten auf, dennoch erscheinen derartige Protokolle als für den großtechnischen Maßstab eher ungeeignet. Dies führt bis zum heutigen Zeitpunkt dazu, dass wässrige Extraktionsverfahren, die sich zur Abtrennung des Koffeins aus der Extraktionsflüssigkeit eines Adsorbermaterials bedienen, nachteilig sind.

Es besteht daher in der Industrie weiterhin ein Bedarf an Entkoffeinierungsverfahren zur Herstellung entkoffeinierter Rohkaffeebohnen, welche sowohl effizient sind als auch den gesteigerten Anforderungen der Verbraucher entsprechen. Idealerweise sollen dabei sowohl entkoffeinierte Rohkaffeebohnen in hoher geschmacklicher Qualität als auch Koffein bzw. Koffeinextrakt als Produkt herstellbar sein. Es war eine primäre Aufgabe der vorliegenden Erfindung, solche Verfahren und entsprechende Vorrichtungen für die Herstellung entkoffeinierter Rohkaffeebohnen anzugeben und die Nachteile der bekannten Verfahren zu lindern oder zu beseitigen. Weitere Aufgaben der vorliegenden Erfindung stehen mit der primären Aufgabe in Verbindung; sie ergeben sich aus der nachfolgenden Beschreibung.

Die primären und weiteren Aufgaben werden durch die vorliegende Erfindung gelöst. Die vorliegende Erfindung betrifft in ihren diversen Aspekten und Kategorien insbesondere:
- ein Verfahren zur Herstellung entkoffeinierter Rohkaffeebohnen,
- eine entsprechende Vorrichtung zur Herstellung entkoffeinierter Rohkaffeebohnen in einem erfindungsgemäßen Verfahren,
- die Verwendung einer erfindungsgemäßen Vorrichtung,
- die Verwendung von Dichlormethan zum Entfernen von Koffein von einem Adsorberharz
   und
- die Verwendung eines Adsorberharzes in einem spezifischen Verfahren zur Herstellung von entkoffeinierten Rohkaffeebohnen.

Mit der vorliegenden Erfindung ist es insbesondere gelungen, ein Verfahren zur Verfügung zu stellen, das die hohen Anforderungen der Kaffeeindustrie und der Verbraucher erfüllt und zudem in effizienter und wirtschaftlicher Weise qualitativ hochwertige entkoffeinierte Rohkaffeebohnen bereitstellt, die zu entsprechenden ebenfalls qualitativ hochwertigen Folgeprodukten weiterverarbeitet werden können.

Besondere Ausführungsformen, Aspekte oder Eigenschaften, die im Zusammenhang mit einem der diversen Aspekte und Kategorien der vorliegenden Erfindung beschrieben oder als bevorzugt beschrieben werden, gelten jeweils entsprechend bzw. sinngemäß auch für die jeweils anderen Aspekte und Kategorien, und umgekehrt.

Sofern es nicht im Einzelfall unmöglich oder anders angegeben ist, sind Aspekte, Kategorien und bevorzugte Ausführungsformen der Erfindung zur Kombination mit anderen Aspekten, Kategorien bzw. bevorzugten Ausführungsformen der Erfindung geeignet und vorgesehen. Kombinationen von jeweils als bevorzugt bezeichneten Aspekten oder Ausführungsformen miteinander ergeben jeweils wieder bevorzugte Aspekte oder Ausführungsformen der Erfindung.

Gemäß einem primären Aspekt der vorliegenden Erfindung werden die vorstehend angegebenen Aufgaben- und Problemstellungen gelöst durch ein Verfahren zur Herstellung entkoffeinierter Rohkaffeebohnen mit folgenden Schritten:
(S1) Kontaktieren einer Menge an koffeinhaltigen Rohkaffeebohnen mit einer wässrigen Extraktionsflüssigkeit, so dass Koffein aus den koffeinhaltigen Rohkaffeebohnen in die Extraktionsflüssigkeit extrahiert wird,
(S2) Kontaktieren der in Schritt S1 resultierenden, an Koffein angereicherten, wässrigen Extraktionsflüssigkeit mit einem Adsorberharz, so dass Koffein aus der Extraktionsflüssigkeit an das Adsorberharz gebunden wird,
(S3) Kontaktieren des in Schritt S2 resultierenden, mit Koffein beladenen Adsorberharzes, mit Dichlormethan, so dass Koffein im Dichlormethan gelöst wird.

Das Verfahren umfasst die angegebenen Schritte, jedoch können vor, nach oder zwischen diesen Schritten weitere Verfahrensschritte durchgeführt werden. Der Fachmann wählt solche zusätzlichen Schritte und/oder Zwischenschritte nach den Erfordernissen des Einzelfalls aus.

Mit dem erfindungsgemäßen Verfahren werden entkoffeinierte Rohkaffeebohnen hergestellt. Der Begriff "entkoffeiniert" hat die übliche Bedeutung. Unter dem Begriff "entkoffeinierte Rohkaffeebohnen" werden im vorliegenden Text somit Rohkaffeebohnen verstanden, deren Gehalt an Koffein niedriger ist als ein Gramm Koffein in einem Kilogramm Kaffeetrockenmasse (vgl. die deutsche Verordnung "KaffeeV 2001"); der Gehalt an Koffein ist dabei im Vergleich zu unbehandelten (natürlich vorkommenden) Rohkaffeebohnen reduziert. Eine Rohkaffeebohne, die dem erfindungsgemäßen Verfahren unterzogen wird, besitzt somit nach Durchführung des Verfahrens einen niedrigeren Koffeingehalt als vor Durchführung des Verfahrens.

Der Begriff "Rohkaffeebohne" bezeichnet Kaffeebohnen, deren Fruchthaut und Fruchtfleisch (die sogenannte "Pulpe") sowie deren Pergamenthäutchen und der darauf befindliche Schleim entfernt wurden. Erfindungsgemäß können beliebige Rohkaffeebohnen eingesetzt werden (Coffea Arabica, Coffea Canephora var. Robusta und andere). Rohkaffeebohnen können vorgequollen oder nicht vorgequollen sein.

Unter dem Begriff "wässrige Extraktionsflüssigkeit" wird im vorliegenden Text eine Wasser enthaltende, vorzugsweise zumindest zu 50 Gew.-%, bevorzugt zumindest 75 Gew.-% aus Wasser bestehende Flüssigkeit verstanden.

Diese wässrige Extraktionsflüssigkeit wird im erfindungsgemäßen Verfahren in Schritt (S1) mit einer Menge an koffeinhaltigen Rohkaffeebohnen kontaktiert, also in direkten Kontakt mit den Rohkaffeebohnen gebracht. Das Kontaktieren erfolgt dabei so, dass die wässrige Extraktionsflüssigkeit Koffein aus den koffeinhaltigen Rohkaffeebohnen extrahiert. Der Fachmann wählt hierzu und auch für die weiteren Verfahrensschritte in üblicher Weise geeignete Verfahrensparameter, insbesondere Temperatur, Druck, Kontaktierungsdauer, Menge an wässriger Extraktionsflüssigkeit etc.

Unter dem Begriff "Extrahieren" wird im vorliegenden Text das Herauslösen eines oder mehrerer Stoffe aus einem Extraktionsgut (also insbesondere den erfindungsgemäß zu extrahierenden Rohkaffeebohnen) verstanden, mithilfe geeigneter Extraktionsmittel, insbesondere in Schritt (S1) mittels der wässrigen Extraktionsflüssigkeit.

Unter dem Begriff "Adsorberharz" wird im vorliegenden Text ein polymerer Feststoff verstanden, der Stoffe adsorbieren kann. Im Zusammenhang mit den Schritten (S2) und (S3) des erfindungsgemäßen Verfahrens bezeichnet der Begriff spezifisch ein Harz, das dazu in der Lage ist, Koffein und gegebenenfalls andere Kaffeeinhaltsstoffe zu adsorbieren und gebundenes Koffein bei Kontaktierung mit Dichlormethan wieder zu desorbieren, so dass Koffein im Dichlormethan gelöst wird. Derartige spezifisch geeignete Adsorberharze sind im Handel erhältlich und können vom Fachmann anhand einfacher üblicher Vorversuche identifiziert und hinsichtlich ihrer Adsorptions- bzw. Desorptionseigenschaften bewertet werden.

Der Begriff "mit Koffein beladenes Adsorberharz" bedeutet, dass das Adsorberharz mit einer Menge an Koffein beladen ist, also das Adsorberharz eine Menge an Koffein adsorbiert hat. Ein in Schritt S2 resultierendes, mit Koffein beladenes Adsorberharz, enthält im Vergleich mit dem in Schritt S2 eingesetzten und mit der an Koffein angereicherten, wässrigen Extraktionsflüssigkeit kontaktierten Adsorberharz eine erhöhte Konzentration an adsorbiertem, d.h. durch Adsorption gebundenem Koffein. In Schritt (S3) wird Koffein von dem beladenen Adsorberharz in Dichlormethan gelöst; dadurch reduziert sich die Beladung des Adsorberharzes mit Koffein.

Um die oben dargelegten Nachteile von aus dem Stand der Technik bekannten Verfahren zur Herstellung entkoffeinierter Rohkaffeebohnen zu überwinden und ein besonders effizientes Verfahren zur Herstellung entkoffeinierter Rohkaffeebohnen bereitzustellen, haben die Erfinder eine Vielzahl von Überlegungen angestellt und Untersuchungen durchgeführt. Die Erfinder wurden hierbei vor diverse Herausforderungen gestellt und hatten Vorurteile aus dem Stand der Technik zu überwinden.

Im Rahmen der Ausarbeitung der Erfindung haben sich die Erfinder entschieden, dass die Rohkaffeebohnen nicht oder zumindest nicht in relevantem Umfang in direkten Kontakt mit organischen Lösungsmitteln wie Dichlormethan (DCM) gebracht werden sollten. Zugleich wollten sie jedoch die Löslichkeit von Koffein in Dichlormethan in vorteilhafter Weise nutzen.

Im Bemühen, die vorbeschriebenen Nachteile einer Flüssig-Flüssig-Extraktion von Koffein aus einer wässrigen Extraktionsflüssigkeit mit DCM zu vermeiden, verwendeten die Erfinder ein geeignetes Adsorberharz als eine Art "Koffeinzwischenspeicher" und entwickelten kurz gesagt eine neue und technisch vorteilhafte zweistufige Extraktionsfolge "Flüssig-Fest" (wässriger Extrakt/Adsorberharz) plus "Fest-Flüssig" (beladenes Adsorberharz/DCM) zur Entfernung und Gewinnung von Koffein aus einer wässrigen Extraktionsflüssigkeit. Diese zweistufige Extraktionsfolge entspricht den Schritten (S2) und (S3) des erfindungsgemäßen Verfahrens.

Es zeigte sich überraschenderweise,
i) dass Adsorberharze im erfindungsgemäßen Schritt (S2) nicht nur Koffein aus einer an Koffein angereicherten wässrigen Extraktionsflüssigkeit binden können
   sondern auch
ii) im erfindungsgemäßen Schritt S3 Koffein (selektiv) an Dichlormethan abgeben können.

Die Erfindung nutzt insbesondere den technischen Umstand, dass Koffein sowohl in warmem Wasser als auch in Dichlormethan gut löslich ist (im Unterschied zu anderen polaren Inhaltsstoffen des Rohkaffees). Im erfindungsgemäßen Verfahren werden weder die Rohkaffeebohnen selbst noch eine wässrige, an Koffein angereicherte Extraktionslösung in direkten Kontakt mit Dichlormethan gebracht. Hierdurch wird eine Kontamination der wässrigen Extraktionsflüssigkeit mit Dichlormethan vollständig oder zumindest weitgehend vermieden. Dies ist insbesondere im Hinblick auf die oben beschriebenen Nachteile organischer Lösungsmittelreste in Kaffeeprodukten ein besonders entscheidender Aspekt der vorliegenden Erfindung.

Der oben definierte erfindungsgemäß vorgesehene Schritt S3, insbesondere die Desorption von an Adsorberharz gebundenem Koffein mittels Dichlormethan führt zudem dazu, dass das Adsorberharz von Koffein befreit oder entladen wird und somit erneut in einem Schritt S2 eingesetzt werden kann. Das Adsorberharz kann also erneut (und mehrfach) dazu eingesetzt werden, Koffein (selektiv) aus einer wässrigen Extraktionsflüssigkeit zu binden und anschließend (selektiv) an Dichlormethan abzugeben.

Das erfindungsgemäße Verfahren ermöglicht die Herstellung von qualitativ hochwertigen entkoffeinierten Rohkaffeebohnen unter Verwendung von (mehrfach) rezyklierterwässriger Extraktionsflüssigkeit. Der Koffeingehalt der Rohkaffeebohnen wird mit dem erfindungsgemäßen Verfahren deutlich reduziert. Die für den Geschmack und das Aroma des Kaffees besonders wichtigen Kaffeeinhaltsstoffe verbleiben in den entkoffeinierten Rohkaffeebohnen, eine Kontaminierung der entkoffeinierten Rohkaffeebohnen mit Dichlormethan kann auch bei einer Rezyklierung der wässrigen Extraktionsflüssigkeit vermieden werden.

Vorteilhaft ist, dass die nach Schritt S3 resultierende, an Koffein angereicherte Dichlormethanlösung eine hohe Konzentration an Koffein und gleichzeitig eine niedrige Konzentration an sonstigen Kaffeeinhaltsstoffen aufweist. Denn Dichlormethan kann die gegebenenfalls von der wässrigen Extraktionsflüssigkeit extrahierten und vom Adsorberharz gebundenen polaren Kaffeeinhaltsstoffe nicht in relevanter Menge lösen. Dies ist insbesondere deshalb wichtig, weil auch Koffein und Koffeinextrakte wichtige Wertstoffe bzw. wertvolle Verkaufsprodukte (beispielsweise als Lebensmittelzusatzstoff oder für pharmazeutische Erzeugnisse) darstellen. Das erfindungsgemäße Verfahren ist also besonders wirtschaftlich, da in verfahrenstechnisch gut umsetzbarer Weise nicht nur ein, sondern zwei qualitativ hochwertige und werthaltige Produkte hergestellt werden (können), nämlich entkoffeinierte Rohkaffeebohnen (erstes Produkt) und Koffein bzw. Koffeinextrakt (zweites Produkt).

Zusammengefasst ist es den Erfindern gelungen, relevante Vorteile bekannter Entkoffeinierungsverfahren miteinander zu verbinden, ohne dabei die jeweiligen für die Einzelverfahren bestehenden Nachteile übernehmen zu müssen.

Bevorzugt ist ein erfindungsgemäßes Verfahren (wie vorstehend beschrieben, vorzugsweise wie vorstehend als bevorzugt bezeichnet), wobei in Schritt S1 als wässrige Extraktionsflüssigkeit
- Wasser eingesetzt wird
   oder
- eine wässrige Lösung eingesetzt wird, die einzelne oder mehrere Kaffeeinhaltsstoffe umfasst, die nicht Koffein sind, ausgewählt aus der Gruppe bestehend aus Säuren, Mineralien, Aromastoffen, durch Maillard-Reaktion in Aromastoffe überführbare Verbindungen, und Antioxidantien, so dass eine Extraktion von entsprechenden Kaffeeinhaltsstoffen aus den koffeinhaltigen Rohkaffeebohnen in die Extraktionsflüssigkeit verhindert oder erschwert wird.

Im Rahmen der vorliegenden Erfindung sind in der wässrigen Lösung enthaltene (wasserlösliche) Aromastoffe und/oder die durch Maillard-Reaktion in Aromastoffe überführbare Verbindungen vorzugsweise ausgewählt aus der Gruppe bestehend aus Chlorogensäuren, Aminosäuren, Zuckern und wasserlöslichen Peptiden.

In einem besonders bevorzugten erfindungsgemäßen Verfahren wird in Schritt S1 eine Menge an koffeinhaltigen Rohkaffeebohnen mit einerwässrigen Extraktionsflüssigkeit kontaktiert, wobei als wässrige Extraktionsflüssigkeit eine wässrige Lösung eingesetzt wird, die einzelne oder mehrere Kaffeeinhaltsstoffe umfasst, die nicht Koffein sind, ausgewählt aus der Gruppe bestehend aus Säuren, Mineralien, Aromastoffen, durch Maillard-Reaktion in Aromastoffe überführbare Verbindung, und Antioxidantien. Der Einsatz einer solchen Kaffeeinhaltsstoffe enthaltenden wässrigen Lösung führt dazu, dass die Extraktion der entsprechenden Substanzen aus den koffeinhaltigen Rohkaffeebohnen in die wässrige Lösung verhindert oder zumindest deutlich erschwert wird. Die Rohkaffeebohnen werden somit selektiv extrahiert, so dass Koffein in die wässrige Extraktionsflüssigkeit übergeht, andere Kaffeeinhaltsstoffe jedoch nicht oder nur in geringem Maße.

Dabei ist die in Schritt S1 eingesetzte wässrige Lösung vorzugsweise mit einem oder mehreren der oben genannten Kaffeeinhaltsstoffe gesättigt.

Der bevorzugte Einsatz einer solchen einzelne oder mehrere Kaffeeinhaltsstoffe umfassenden, bevorzugt einer mit einem oder mehreren Kaffeeinhaltsstoffen gesättigten, wässrigen Extraktionslösung führt dazu, dass (insbesondere sensorisch) wertvolle wasserlösliche Kaffeeinhaltsstoffe bei der Extraktion gemäß Schritt S1 des erfindungsgemäßen Verfahrens in den Rohkaffeebohnen verbleiben und nicht in die Extraktionsflüssigkeit übergehen. Dies hat zur Folge, dass die resultierenden entkoffeinierten Rohkaffeebohnen eine besonders hohe Qualität aufweisen.

Das erfindungsgemäße Verfahren kann kontinuierlich, semi-kontinuierlich oder diskontinuierlich (als Batch-Verfahren) durchgeführt werden. Eine kontinuierliche oder semi-kontinuierliche Verfahrensführung, in der zumindest Teilabläufe des Verfahrens über einen längeren Zeitraum ohne Unterbrechung durchgeführt werden, ist für industrielle Zwecke bevorzugt.

In einem erfindungsgemäßen Verfahren wird der Verfahrensschritt S1 vorzugsweise semi-kontinuierlich (halb-kontinuierlich) durchgeführt.

Besonders bevorzugt wird der Verfahrensschritt S1 semi-kontinuierlich durchgeführt, indem (i) die wässrige Extraktionsflüssigkeit im Kreis geführt und mehrfach mit den Rohkaffeebohnen in Kontakt gebracht wird (ii) oder die wässrige Extraktionsflüssigkeit in Kontakt mit den Rohkaffeebohnen gebracht, eine Zeit lang einwirken gelassen und erst dann über das Adsorberharz gegeben wird. In einem semi-kontinuierlichen Verfahren kann sich in gewissem Maße die Zusammensetzung der eingesetzten wässrigen Extraktionsflüssigkeit verändern. Beispielsweise kann die in Schritt S1 eingesetzte Extraktionsflüssigkeit zu Beginn des Verfahrens reines Wasser sein und bei mehrmaligem Durchführen des Schrittes S1 innerhalb eines semi-kontinuierlichen Verfahrens in eine wässrige Lösung überführt werden, die einzelne oder mehrere Kaffeeinhaltsstoffe umfasst (insbesondere die vorstehend genannten Kaffeeinhaltsstoffe, die nicht Koffein sind). Bei Fortschreiten des Verfahrens steigt die Konzentration der einzelnen oder mehreren oben angegebenen Kaffeeinhaltsstoffe in der wässrigen Extraktionslösung an.

Vorzugsweise ist in der in Schritt S1 eingesetzten wässrigen Extraktionsflüssigkeit der Gehalt an Koffein niedriger als 300 mg pro Liter wässrige Extraktionsflüssigkeit, besonders bevorzugt niedriger als 100 mg pro Liter.

Besonders bevorzugt ist ein erfindungsgemäßes Verfahren, wobei in Schritt S1 als wässrige Extraktionsflüssigkeit eine wässrige Lösung eingesetzt wird, die einzelne oder mehrere Kaffeeinhaltsstoffe umfasst, die nicht Koffein sind, ausgewählt aus der Gruppe bestehend aus Säuren, Mineralien, Aromastoffe, durch Maillard-Reaktion in Aromastoffe überführbare Verbindung, und Antioxidantien, wobei die wässrige Extraktionsflüssigkeit vor Beginn des Schrittes S1 hergestellt wird. Die Herstellung einer solchen wässrigen Extraktionsflüssigkeit kann der Fachmann insbesondere durch Mischen bekannter wasserlöslicher (oben beschriebener) Kaffeeinhaltsstoffe (die nicht Koffein sind) mit Wasser herstellen; es kann aber auch wässrige Extraktionsflüssigkeit eingesetzt werden, die in einem zuvor durchgeführten erfindungsgemäßen oder sonstigen Verfahren mittels Extraktion von Rohkaffeebohnen und Aufbereitung des flüssigen wässrigen Extrakts hergestellt wurde.

In einer besonders bevorzugten Ausgestaltung des erfindungsgemäßen Verfahrens ist die in Schritt S1 eingesetzte wässrige Lösung somit eine aus einem zuvor durchgeführten erfindungsgemäßen Verfahren resultierende wässrige Extraktionsflüssigkeit, bevorzugt eine wässrige Extraktionsflüssigkeit mit einem Gehalt an Koffein von weniger als 300 mg pro Liter wässrige Extraktionsflüssigkeit, besonders bevorzugt von weniger als 100 mg pro Liter, ganz besonders bevorzugt eine wässrige Extraktionsflüssigkeit ohne Koffein.

Bevorzugt ist ein erfindungsgemäßes Verfahren (wie vorstehend beschrieben, vorzugsweise wie vorstehend als bevorzugt bezeichnet), wobei in Schritt S2 ein Adsorberharz eingesetzt wird, welches vorbeladen ist mit einzelnen oder mehreren Kaffeeinhaltsstoffen, die nicht Koffein sind, ausgewählt aus der Gruppe bestehend aus Säuren, Mineralien, Aromastoffe, durch Maillard-Reaktion in Aromastoffe überführbare Verbindungen, und Antioxidantien, so dass eine Bindung von entsprechenden Kaffeeinhaltsstoffen aus der in Schritt S1 resultierenden, Koffein enthaltenden Extraktionsflüssigkeit an das Adsorberharz verhindert oder erschwert wird.

Es hat sich gezeigt, dass Schritt (S2) besonders effizient ist, wenn hierbei ein Adsorberharz eingesetzt wird, welches mit einzelnen oder mehreren der vorgenannten Kaffeeinhaltsstoffen vorbeladen ist.

Bei Verwendung eines solchen mit einzelnen oder mehreren der vorgenannten Kaffeeinhaltsstoffen vorbeladenen Adsorberharzes wird in Schritt S2 die Bindung (Adsorption) von entsprechenden (von Koffein unterschiedlichen) Kaffeeinhaltsstoffen aus der in Schritt S1 resultierenden Koffein enthaltenden wässrigen Extraktionsflüssigkeit an das Adsorberharz verhindert oder zumindest deutlich erschwert. Diese Kaffeeinhaltsstoffe verbleiben somit (zumindest im Wesentlichen) in der wässrigen Extraktionsflüssigkeit und werden vorzugsweise mit ihr erneut in einem Schritt S1 eingesetzt. Koffein hingegen wird in Schritt S2 vom Adsorberharz gebunden.

Besonders bevorzugt ist ein erfindungsgemäßes Verfahren in dem in
i) Schritt S1 eine wässrige Lösung eingesetzt wird, die einzelne oder mehrere Kaffeeinhaltsstoffe umfasst, die nicht Koffein sind, ausgewählt aus der Gruppe bestehend aus Säuren, Mineralien, Aromastoffen, durch Maillard-Reaktion in Aromastoffe überführbare Verbindung, und Antioxidantien
   und
ii) Schritt S2 ein Adsorberharz eingesetzt wird, welches vorbeladen ist mit einzelnen oder mehreren Kaffeeinhaltsstoffen, die nicht Koffein sind, ausgewählt aus der Gruppe bestehend aus Säuren, Mineralien, Aromastoffen, durch Maillard-Reaktion in Aromastoffe überführbare Verbindung, und Antioxidantien.

Diese besonders bevorzugte Ausgestaltung hat den Effekt, dass:
i) in Schritt S1 Koffein (selektiv) aus den koffeinhaltigen Rohkaffeebohnen in die wässrige Extraktionsflüssig extrahiert wird, während andere für den Geschmack und das Aroma des Kaffees besonders wichtige wasserlösliche Kaffeeinhaltsstoffe nicht oder nur in geringem Maße extrahiert werden und somit in den entkoffeinierten Rohkaffeebohnen verbleiben
   und
ii) in Schritt S2 Koffein (selektiv) an das vorbeladene Adsorberharz gebunden bzw. adsorbiert wird, während andere für den Geschmack und das Aroma des Kaffees besonders wichtige wasserlösliche Kaffeeinhaltsstoffe nicht oder nur in geringem Maße adsorbiert werden und somit in der wässrigen Extraktionslösung verbleiben.

Besonders bevorzugt ist ein erfindungsgemäßes Verfahren, mit folgendem zusätzlichen Schritt:
(pre-S2) Herstellen oder Bereitstellen eines Adsorberharzes, welches vorbeladen ist mit einzelnen oder mehreren Kaffeeinhaltsstoffen, die nicht Koffein sind, ausgewählt aus der Gruppe bestehend aus Säuren, Mineralien, Aromastoffen, durch Maillard-Reaktion in Aromastoffe überführbare Verbindung, und Antioxidantien.

Der Schritt (pre-S2) umfasst vorzugsweise eine oder mehrere der folgenden Maßnahmen:
- Herstellen oder Bereitstellen einer wässrigen Lösung umfassend einzelne oder mehrere Kaffeeinhaltsstoffe, die nicht Koffein sind, ausgewählt aus der Gruppe bestehend aus Säuren, Mineralien, Aromastoffen, durch Maillard-Reaktion in Aromastoffe überführbare Verbindung, und Antioxidantien; die hergestellte oder bereitgestellte wässrige Lösung umfasst dabei vorzugsweise kein Koffein oder weniger als 300 mg Koffein pro Liter wässriger Lösung, bevorzugt wenigerals 100 mg Koffein pro Liter wässriger Lösung;
- Herstellen oder Bereitstellen eines Adsorberharzes;
- Kontaktieren der hergestellten oder bereitgestellten wässrigen Lösung umfassend einzelne oder mehrere Kaffeeinhaltsstoffe, die nicht Koffein sind, ausgewählt aus der Gruppe bestehend aus Säuren, Mineralien, Aromastoffen, durch Maillard-Reaktion in Aromastoffe überführbare Verbindung, und Antioxidantien mit dem hergestellten oder bereitgestellten Adsorberharz, so dass ein Adsorberharz resultiert, welches vorbeladen ist mit einzelnen oder mehreren Kaffeeinhaltsstoffen, die nicht Koffein sind, ausgewählt aus der Gruppe bestehend aus Säuren, Mineralien, Aromastoffe, durch Maillard-Reaktion in Aromastoffe überführbare Verbindungen, und Antioxidantien.

Besonders bevorzugt ist der Einsatz eines vorbeladenen Adsorberharzes, welches mit einzelnen oder mehreren Kaffeeinhaltsstoffen, die nicht Koffein sind, ausgewählt aus der Gruppe bestehend aus Säuren, Mineralien, Aromastoffen, durch Maillard-Reaktion in Aromastoffe überführbare Verbindung, und Antioxidantien gesättigt ist. Sättigung bedeutet hier, dass das vorbeladene gesättigte Adsorberharz die genannten Substanzen nicht weiter binden kann.

Bevorzugt ist ein erfindungsgemäßes Verfahren (wie vorstehend beschrieben, vorzugsweise wie vorstehend als bevorzugt bezeichnet), wobei in Schritt S2
- ein makroporöses Adsorberharz eingesetzt wird, welches ausgewählt ist aus der Gruppe bestehend aus Polystyrol, Polydivinylbenzol sowie deren Copolymere miteinander und mit anderen Monomeren,
   wobei das makroporöse Adsorberharz vorzugsweise ein Polystyrol oder ein Copolymer des Polystyrols ist, bevorzugt ein vernetztes Polystyrol, besonders bevorzugt ein mit Divinylbenzol vernetztes Polystyrol, ganz besonders bevorzugt ein nicht-funktionalisiertes, nichtionisches und mit Divinylbenzol vernetztes Polystyrol,
und/oder (bevorzugt "und")
- zumindest 90 %, bevorzugt zumindest 95 %, ganz besonders bevorzugt zumindest 99 % des Koffeins aus der Koffein enthaltenden Extraktionsflüssigkeit an das Adsorberharz gebunden werden.

Im Rahmen eigener experimenteller Untersuchungen hat sich gezeigt, dass das in Schritt S2 eingesetzte Adsorberharz bevorzugt ein makroporöses Adsorberharz ist, vorzugsweise mit einem mittleren Porendurchmesser von größer als 5 nm. Bei Einsatz eines makroporösen Adsorberharzes erfolgt sowohl die Adsorption von Koffein aus der koffeinhaltigen wässrigen Extraktionslösung als auch die Desorption von Koffein mittels DCM besonders effizient.

Das makroporöse Adsorberharz ist dabei ausgewählt aus der Gruppe bestehend aus Polystyrol, Polydivinylbenzol sowie deren Copolymere miteinander und mit anderen Monomeren. Polystyrol, Polydivinylbenzol sowie deren Copolymere miteinander und mit anderen Monomeren zeichnen sich insbesondere dadurch aus, dass sie eine gute Lösungsmittelverträglichkeit aufweisen, und dies sowohl gegenüber wässrigen Extraktionsflüssigkeiten als auch gegenüber DCM. Des Weiteren zeichnen sich die vorgenannten Polymermaterialien dadurch aus, dass sie über einen weiten Temperaturbereich bis hin zu 150 °C thermisch stabil sind.

In experimentellen Untersuchungen hat sich zudem herausgestellt, dass Polystyrole bzw. Copolymere des Polystyrols im Rahmen des erfindungsgemäßen Verfahrens, insbesondere im Rahmen der Verfahrensschritte S2 und S3, sehr langlebig und stabil sind. Diese Materialien können somit mehrmalig eingesetzt werden und verlieren auch durch repetitives Durchführen der Verfahrensschritte S2 bzw. S3 kaum ihre vorteilhaften Eigenschaften.

Das bevorzugt in Schritt S2 eingesetzte makroporöse Adsorberharz ist vorzugsweise ein Polystyrol oder ein Copolymer des Polystyrols, besonders bevorzugt ein vernetztes Polystyrol, besonders bevorzugt ein mit Divinylbenzol vernetztes Polystyrol, ganz besonders bevorzugt ein nicht-funktionalisiertes, nichtionisches und mit Divinylbenzol vernetztes Polystyrol. In eigenen Untersuchungen (vgl. die Beispiele weiter unten) hat sich gezeigt, dass diese Adsorberharze besonders gut geeignet sind, um in dem hier beschriebenen erfindungsgemäßen Verfahren zur Herstellung entkoffeinierter Rohkaffeebohnen eingesetzt zu werden.

Das erfindungsgemäße Verfahren ist dabei selbstverständlich nicht beschränkt auf die hier angeführten bevorzugten Adsorberharze. Die Erfinder haben lediglich festgestellt, dass diese hier genannten bevorzugten Adsorberharze in besonderer Weise dazu geeignet sind, Koffein aus einer wässrigen Extraktionslösung zu binden und anschließend bei Kontaktieren mit Dichlormethan wieder abzugeben bzw. zu desorbieren. Es ist davon auszugehen, dass andere aus dem Stand der Technik bekannte Adsorberharze hierzu ebenfalls geeignet sind. Der Fachmann kann durch geeignete Vorexperimente feststellen, ob sich weitere Adsorberharze eignen, um in einem erfindungsgemäßen Verfahren eingesetzt zu werden. Hierfür müssen insbesondere die Adsorptionsaffinität des untersuchten Materials gegenüber Koffein und die Desorptionseigenschaften von gebundenem Koffein bei Kontaktieren mit DCM berücksichtigt werden.

Bevorzugt ist ein erfindungsgemäßer Schritt S2, in dem zumindest 90 %, bevorzugt zumindest 95 %, ganz bevorzugt zumindest 99 % des Koffeins aus der Koffein enthaltenden Extraktionsflüssigkeit an das Adsorberharz gebunden werden (sog. Koffein-Adsorptionswerte). Die Menge des Koffeins, welches aus der Koffein enthaltenden Extraktionsflüssigkeit an das Adsorberharz gebunden wird, kann anhand üblicher Analyseverfahren festgestellt werden. Hierzu bietet es sich insbesondere an, den Koffeingehalt der Koffein enthaltenden Extraktionsflüssigkeit vor dem Kontaktieren mit dem Adsorberharz zu messen und nach dem Kontaktieren mit dem Adsorberharz erneut zu bestimmen. Um die bevorzugten Koffein-Adsorptionswerte zu erreichen, wird der Fachmann insbesondere ein geeignetes Adsorberharzes in geeigneter Menge einsetzen. Besonders bevorzugt wird der Fachmann ein makroporöses Adsorberharz einsetzen, wie es vorstehend beschrieben ist. Der Fachmann wird weiterhin die Verfahrensparameter in üblicher Weise variieren und hier insbesondere Temperatur, Druck und Kontaktierungsdauer der wässrigen Extraktionsflüssigkeit mit dem Adsorberharz gezielt einstellen. Selbstverständlich wird der Fachmann bei einer größeren Menge an Rohkaffeebohnen auch eine größere Menge an geeignetem Adsorberharz zur Verfügung stellen.

Bevorzugt ist ein erfindungsgemäßes Verfahren (wie vorstehend beschrieben, vorzugsweise wie vorstehend als bevorzugt bezeichnet), wobei in Schritt S3
- das Kontaktieren so durchgeführt wird, dass zumindest 80 %, bevorzugt zumindest 90 %, besonders bevorzugt zumindest 95 %, ganz besonders bevorzugt zumindest 99 % des Koffeins aus dem mit Koffein beladenen Adsorberharz in das Dichlormethan gelöst werden,
und/oder
- die Temperatur des Dichlormethans niedriger ist als 35 °C, bevorzugt niedriger ist als 30 °C, besonders bevorzugt niedriger ist als 25 °C.

Es hat sich als besonders vorteilhaft erwiesen, dass in Schritt S3 das Kontaktieren so durchgeführt wird, dass zumindest 80 %, bevorzugt zumindest 90 %, besonderes bevorzugt zumindest 95 %, ganz besonderes bevorzugt zumindest 99 % des Koffeins aus dem mit Koffein beladenen Adsorberharz in das Dichlormethan gelöst werden. Dem Fachmann sind zur Bestimmung der hier angeführten Konzentrationswerte an Koffein in Dichlormethan geeignete Analysemethoden bekannt. Zur Einstellung der vorgenannten Werte wählt der Fachmann in üblicher Weise geeignete Verfahrensparameter aus, hierzu zählt insbesondere die Temperatur, der Druck, die Kontaktierungsdauer und die Menge an Dichlormethan, welche mit dem mit Koffein beladenen Adsorberharz in Kontakt gebracht wird.

Überraschenderweise hat sich herausgestellt, dass das in Schritt S2 bevorzugt eingesetzte makroporöse Adsorberharz, welches ausgewählt ist aus der Gruppe bestehend aus Polystyrol, Polydivinylbenzol sowie deren Copolymere miteinander und mit anderen Monomeren, in besonders guter Weise dazu geeignet ist, in Schritt S3 bei Kontaktierung mit Dichlormethan das zuvor adsorbierte Koffein selektiv an das Dichlormethan abzugeben.

Die Temperatur des Dichlormethans in Schritt S3 ist in einem breiten Bereich variierbar. Es hat sich aber gezeigt, dass eine gute Koffein-Desorption regelmäßig bereits bei unter 35 °C erreicht wird. Ein Erwärmen des Dichlormethans und ein Arbeiten unter Überdruck ist daher nicht erforderlich. Somit ist es in einem erfindungsgemäßen Verfahren möglich, mit Dichlormethan bzw. mit einer Dichlormethanlösung zu arbeiten, welche eine vergleichsweise niedrige Temperatur besitzt. Eine niedrige Temperatur des Dichlormethans ist insbesondere deshalb technisch vorteilhaft, weil Dichlormethan einen niedrigen Siedepunkt von nur 39,8 °C aufweist und somit leicht flüchtig ist.

Bevorzugt ist ein erfindungsgemäßes Verfahren (wie vorstehend beschrieben, vorzugsweise wie vorstehend als bevorzugt bezeichnet), wobei Schritt S1 so durchgeführt wird, dass zumindest eine vorbestimmte Menge an Koffein aus der Menge an koffeinhaltigen Rohkaffeebohnen extrahiert wird.

Bei der erfindungsgemäßen Entkoffeinierung von Rohkaffeebohnen werden vorzugsweise Zielwerte der Koffeinkonzentration in den herzustellenden entkoffeinierten Rohkaffeebohnen festgelegt. In einem bevorzugten erfindungsgemäßen Verfahren kann der Fachmann also vor Durchführung des erfindungsgemäßen Verfahrens bestimmen, welche Menge an Koffein aus der Menge an koffeinhaltigen Rohkaffeebohnen zu extrahieren ist. So kann er beispielsweise festlegen, dass der natürliche Koffeingehalt von z.B. 1,2 % in den zu Beginn des Schritts S1 vorliegenden koffeinhaltigen Rohkaffeebohnen nach Durchführung von Schritt S1 auf einen Wert von höchstens 0,1 % reduziert werden soll. Anschließend kann er den erfindungsgemäßen Schritt S1 so durchführen, dass der von ihm gewählte Zielwert erreicht wird. Hierzu kann er insbesondere den Schritt S1 in einem semi-kontinuierlichen Verfahren mehrfach durchführen, sodass die Rohkaffeebohnen mehrfach mit einer wässrigen Extraktionsflüssigkeit kontaktiert werden, was dazu führt, dass zumindest die zuvor definierte, d.h. vorbestimmte Menge an Koffein aus den koffeinhaltigen Rohkaffeebohnen in die Extraktionsflüssigkeit extrahiert wird.

Bevorzugt ist ein erfindungsgemäßes Verfahren (wie vorstehend beschrieben, vorzugsweise wie vorstehend als bevorzugt bezeichnet), wobei die in Schritt S1 resultierenden, entkoffeinierten Rohkaffeebohnen getrocknet werden.

Das Trocknen entkoffeinierter Rohkaffeebohnen ist ein weit verbreiteter Verfahrensschritt bei der Herstellung von entkoffeiniertem Kaffee. Da die Rohkaffeebohnen in Schritt S1 nicht in direktem Kontakt mit einem organischen Lösungsmittel wie DCM gebracht werden, enthalten die getrockneten entkoffeinierten Rohkaffeebohnen keine organischen Lösungsmittel oder nur sehr geringe Mengen an organischen Lösungsmitteln. Somit können die getrockneten entkoffeinierten Rohkaffeebohnen ohne weitere Maßnahmen direkt vertrieben werden.

Bevorzugt ist ein erfindungsgemäßes Verfahren (wie vorstehend beschrieben, vorzugsweise wie vorstehend als bevorzugt bezeichnet), umfassend den zusätzlichen Schritt nach Schritt S3:
(S4) Behandeln des Adsorberharzes
(S4-1) zum Entfernen von Dichlormethan
   und/oder (bevorzugt "und")
(S4-2) zum Regenerieren der Beladbarkeit des Adsorberharzes mit Koffein unter den Bedingungen des Schrittes S2.

In Schritt S3 des erfindungsgemäßen Verfahrens, wird das in Schritt S2 resultierende mit Koffein beladene Adsorberharz mit Dichlormethan kontaktiert, sodass Koffein im Dichlormethan gelöst wird. Dieser Schritt S3 führt zum einen dazu, dass Koffein von mit Koffein beladenem Adsorberharz gelöst wird, führt aber zum anderen auch dazu, dass das Adsorberharz anschließend von Dichlormethan umgeben ist. Damit das in Schritt S3 eingesetzte Adsorberharz nach Durchführung von Schritt S3 erneut in einem Schritt S2 eines erfindungsgemäßen, vorzugsweise semi-kontinuierlich betriebenen Verfahrens eingesetzt werden kann, wird Dichlormethan vom Adsorberharz entfernt, vorzugsweise vollständig entfernt. So wird vermieden, dass die wässrige Extraktionsflüssigkeit in direkten Kontakt mit Dichlormethan gelangt.

Das Behandeln des Adsorberharzes zum (vorzugsweise vollständigen) Entfernen von Dichlormethan gemäß Schritt S4-1 umfasst dabei bevorzugt eine oder mehrere der folgenden Maßnahmen:
- Behandeln des Adsorberharzes mit flüssigem Wasser oder einer wässrigen Lösung, bevorzugt bei einer Wassertemperatur von zumindest 70 °C, besonders bevorzugt von zumindest 85 °C, so dass DCM aus dem Adsorberharz entfernt wird, vorzugsweise aus Poren des Adsorberharzes entfernt wird,
- Behandeln des Adsorberharzes mit Wasserdampf, so dass DCM aus dem Adsorberharz entfernt wird, vorzugsweise aus Poren des Adsorberharzes entfernt wird.

Zusätzliche fachübliche Maßnahmen oder das Wiederholen von Maßnahmen sind in manchen Fällen vorteilhaft, um das Dichlormethan möglichst vollständig vom Adsorberharz zu entfernen.

Es ist besonders vorteilhaft, wenn das erfindungsgemäße Verfahren den zusätzlichen Verfahrensschritt S4-2 umfasst, wobei dieser Schritt S4-2 zum Regenerieren der Beladbarkeit des Adsorberharzes mit Koffein unter den Bedingungen des Schrittes S2 erfolgt. Nach dem Schritt S4-2 soll das Adsorberharz also für eine erneute Beladung unter den Bedingungen eines Schritts S2 vorbereitet sein und somit die frühere Beladbarkeit mit Koffein (zumindest annähernd) wiedererlangt haben. Bevorzugt umfasst der Schritt S4-2 die folgende Maßnahme:
- Behandeln des Adsorberharzes mit einer wässrigen, alkalischen Lösung, vorzugsweise einer Natriumhydroxid enthaltenden wässrigen Lösung, vorzugsweise bei einer Temperatur im Bereich von 60 °C bis 80 °C.

In eigenen Untersuchungen hat sich gezeigt, dass es vorteilhaft ist, das eingesetzte Adsorberharz zu regenerieren, um so die Beladbarkeit des Adsorberharzes mit Koffein unter den Bedingungen des Schrittes S2 wiederherzustellen bzw. zu verbessern. Dieser Verfahrensschritt S4-2 wird insbesondere dann durchgeführt, wenn sich herausstellt, dass die Adsorptions- bzw. Desorptionseigenschaft des Adsorberharzes mit der Zeit schlechter wird. Vorzugsweise erfolgt Schritt S4-2 in zeitlichen Abständen, die fest vorbestimmt sind oder von der Performance des Adsorberharzes abhängen. Der Einsatz einer wässrigen, alkalischen Lösung, vorzugsweise einer Natriumhydroxid enthaltenden wässrigen Lösung, vorzugsweise bei einer Temperatur im Bereich von 60 °C bis 80 °C, hat sich in eigenen Untersuchungen bewährt, insbesondere bei Einsatz der vorstehend als bevorzugt bezeichneten (z.B. vorbeladenen und/oder makroporösen) Adsorberharze.

Bevorzugt ist ein erfindungsgemäßes Verfahren (wie vorstehend beschrieben, vorzugsweise wie vorstehend als bevorzugt bezeichnet), wobei
das Kontaktieren in Schritt S2 das Überströmen des Adsorberharzes mit der in Schritt S1 resultierenden, an Koffein angereicherten, wässrigen Extraktionsflüssigkeit umfasst
   und/oder (bevorzugt "und")
das nachfolgende Kontaktieren in Schritt S3 das Überströmen des mit Koffein beladenen Adsorberharzes mit Dichlormethan umfasst.

Hierbei umfasst vorzugsweise das Kontaktieren in Schritt S2 das Überströmen des Adsorberharzes mit der in Schritt S1 resultierenden, an Koffein angereicherten, wässrigen Extraktionsflüssigkeit in eine definierte erste Strömungsrichtung und das nachfolgende Kontaktieren in Schritt S3 das Überströmen des mit Koffein beladenen Adsorberharzes mit Dichlormethan in eine definierte zweite Strömungsrichtung. Häufig ist es vorteilhaft, wenn die zweite Strömungsrichtung die Gegenrichtung zu der ersten Strömungsrichtung ist, in anderen Fällen (abhängig insbesondere von der Geometrie der Adsorptionseinheit) sind die erste und die zweite Strömungsrichtung identisch.

Bevorzugt erfolgt sowohl das Kontaktieren in Schritt S2 als auch das nachfolgende Kontaktieren in Schritt S3 durch jeweiliges Überströmen des Adsorberharzes bzw. des mit Koffein beladenen Adsorberharzes, nämlich in Schritt S2 mit der in Schritt S1 resultierenden an Koffein angereicherten wässrigen Extraktionsflüssigkeit bzw. in Schritt S3 mit Dichlormethan.

Der Begriff "Überströmen" bezeichnet im vorliegenden Text das Durchleiten einer Lösung in einer bestimmten Strömungsrichtung über das Adsorberharz bzw. über das mit Koffein beladene Adsorberharz. Es hat sich herausgestellt, dass sowohl die Bindung (Adsorption) von Koffein an das Adsorberharz als auch die Rücklösung (Desorption) von Koffein von dem beladenen Adsorberharz besonders effizient erfolgt, wenn das Adsorberharz bzw. das beladene Adsorberharz von der jeweiligen Flüssigkeit überströmt wird.

In vielen Fällen erfolgt das Kontaktieren in Schritt S2 durch Überströmen des Adsorberharzes mit der in Schritt S1 resultierenden an Koffein angereicherten wässrigen Extraktionsflüssigkeit in eine (erste) definierte Strömungsrichtung, während in Schritt S3 das nachfolgende Kontaktieren des mit Koffein beladenen Adsorberharzes mit Dichlormethan in Gegenrichtung dazu erfolgt. Dies bedeutet beispielsweise bei einer senkrecht angebrachten mit Adsorberharz befüllten Adsorbersäule, dass das Kontaktieren in Schritt S2 (Überströmen des Adsorberharzes mit der in Schritt S1 resultierenden, an Koffein angereicherten wässrigen Extraktionsflüssigkeit) z.B. von oben nach unten erfolgt, während das nachfolgende Kontaktieren in Schritt S3 (das Überströmen des mit Koffein beladenen Adsorberharzes mit Dichlormethan) in entgegengesetzter Richtung, also von unten nach oben erfolgt.

Dieses "Gegenstromverfahren" trägt häufig dazu bei, dass insbesondere die (selektive) Desorption von Koffein, das heißt das Rücklösen von am Adsorberharz adsorbierten Koffein in Dichlormethan in Schritt S3, besonders effizient erfolgt.

Vorzugsweise werden bei Durchführung der Kontaktierung in Schritt S2 mittels Überströmen des Adsorberharzes mit der in Schritt S1 resultierenden, an Koffein angereicherten, wässrigen Extraktionsflüssigkeit zumindest 90 %, bevorzugt zumindest 95 %, ganz besonders bevorzugt zumindest 99 % des Koffeins aus der Koffein enthaltenden Extraktionsflüssigkeit an das Adsorberharz gebunden.

Vorzugsweise werden bei Durchführung der Kontaktierung in Schritt S3 mittels Überströmen des mit Koffein beladenen Adsorberharzes mit Dichlormethan zumindest 80 %, bevorzugt zumindest 90 %, besonders bevorzugt zumindest 95 %, ganz besonders bevorzugt zumindest 99 % des Koffeins aus dem mit Koffein beladenen Adsorberharz in das Dichlormethan gelöst.

Bevorzugt ist ein erfindungsgemäßes Verfahren (wie vorstehend beschrieben, vorzugsweise wie vorstehend als bevorzugt bezeichnet), wobei
der erreichte Fortschritt der Extraktion in Schritt S1 und/oder die in Schritt S2 erreichte Beladung des Adsorberharzes mit Koffein bestimmt wird
   und
von Schritt S2 zu Schritt S3 übergegangen wird, vorzugsweise automatisch umgeschaltet wird, sobald ein vorbestimmter Fortschritt der Extraktion in Schritt S1 erreicht ist und/oder sobald in Schritt S2 eine vorbestimmte Beladung des Adsorberharzes mit Koffein erreicht ist

Der erreichte Fortschritt der Extraktion in Schritt S1 lässt sich dabei mittels fachüblicher Maßnahmen bestimmen. Beispielsweise lässt sich der erreichte Fortschritt der Extraktion in Schritt S1 aus der Differenz von zu Beginn des Schritts S1 in den Rohkaffeebohnen enthaltenem Koffein und dem zu einem bestimmten Zeitpunkt bereits in die wässrige Extraktionslösung extrahierten Koffein bzw. dem bereits am Adsorberharz gebundenen Koffein bestimmen. Alternativ lässt sich der erreichte Fortschritt der Extraktion in Schritt S1 aus dem zeitlichen Verlauf der Koffein-Konzentration in der wässrigen Extraktionsflüssigkeit bestimmen, welche mit den Rohkaffeebohnen kontaktiert ist.

Die in Schritt S2 erreichte Beladung des Adsorberharzes mit Koffein lässt sich ebenfalls mittels fachüblicher Methoden bestimmen, direkt oder indirekt. Zum Beispiel kann man im Rahmen einer indirekten Bestimmung die Konzentration an Koffein in der wässrigen Extraktionslösung vor Schritt S2, d.h. vor dem Kontaktieren mit dem Adsorberharz, und nach Schritt S2, d.h. nach dem Kontaktieren mit dem Adsorberharz, bestimmen, um so festzustellen, ob noch Koffein an das Adsorberharz gebunden wird. Wird kein Koffein mehr adsorbiert (oder nur noch wenig), ist die Beladung komplett (bzw. weit fortgeschritten).

In der diskutierten bevorzugten Ausgestaltung des erfindungsgemäßen Verfahrens wird von Schritt S2 zu Schritt S3 übergegangen, vorzugsweise automatisch umgeschaltet, sobald ein vorbestimmter Fortschritt der Extraktion in Schritt S1 (wie oben beschrieben) erreicht ist und/oder (bevorzugt "und") sobald in Schritt S2 eine vorbestimmte Beladung des Adsorberharzes mit Koffein erreicht ist (wie oben beschrieben).

Mit anderen Worten wird bevorzugt dann von Schritt S2 (Beladung des Adsorberharzes mit Koffein) zu Schritt S3 (Entladung des Adsorberharzes von Koffein) übergegangen, sobald eine vorbestimmte Menge an Koffein aus den Rohkaffeebohnen extrahiert wurde und/oder eine vorbestimmte Menge an Koffein an das Adsorberharz gebunden wurde. In einem solchen bevorzugten Verfahren wird in effizienter und technisch vorteilhafter Weise zwischen der "Flüssig-Fest" (wässriger Extrakt/Adsorberharz) -Extraktion und der "Fest-Flüssig" (beladenes Adsorberharz/DCM) -Extraktion umgeschaltet.

Der beschriebene bevorzugte Übergang von Schritt S2 zu S3 führt dazu, dass bei Erreichen der Koffeinbeladungsgrenze des Adsorberharzes das in der wässrigen Extraktionsflüssigkeit enthaltene Koffein nicht rezykliert und in Kontakt mit Rohkaffeebohnen gebracht wird. Vielmehr wird durch Übergang auf Schritt S3 gebundenes Koffein vom Adsorberharz gelöst, so dass das resultierende (von Koffein befreite) Adsorberharz erneut für den Einsatz in einem Schritt S2 zur Verfügung steht.

Bevorzugt ist ein erfindungsgemäßes Verfahren (wie vorstehend beschrieben, vorzugsweise wie vorstehend als bevorzugt bezeichnet), wobei wässrige Extraktionsflüssigkeit ein oder mehrfach im Kreis gefördert wird, wobei vorzugsweise die in Schritt S2 resultierende, an Koffein abgereicherte, wässrige Extraktionsflüssigkeit oder ein Aufbereitungsprodukt davon in Schritt S1 erneut als wässrige Extraktionsflüssigkeit eingesetzt wird.

Es ist insoweit insbesondere bevorzugt, wenn die ein oder mehrfach im Kreis geförderte wässrige Extraktionsflüssigkeit zumindest nach ihrem ersten Kreislauf einzelne oder mehrere Kaffeeinhaltsstoffe umfasst, die nicht Koffein sind, ausgewählt aus der Gruppe bestehend aus Säuren, Mineralien, Aromastoffe, durch Maillard-Reaktion in Aromastoffe überführbare Verbindung, und Antioxidantien.

Durch die bevorzugte ein- oder mehrfache Rezyklierung der wässrigen Extraktionsflüssigkeit ("Rezyklierung" bezeichnet hier ein einfaches oder mehrfaches Fördern im Kreis) wird die Eigenschaft des Adsorberharzes als eine Art "Koffeinzwischenspeicher" in besonders vorteilhafter Weise ausgenutzt, nämlich dadurch ausgenutzt, dass das Adsoberharz mehrfach Koffein aus der wässrigen Extraktionsflüssigkeit binden kann. Es wird hierbei insbesondere ausgenutzt, dass das Adsorberharz eine hohe Affinität zu Koffein besitzt, sodass Koffein in Schritt S2 aus der wässrigen Extraktionsflüssigkeit (selektiv) an das Adsorberharz gebunden wird. Es hat sich gezeigt, dass die Koffeinadsorption am Adsorberharz auch und insbesondere in einem semi-kontinuierlichen Verfahren besonders effizient ist.

Da die wässrige Extraktionsflüssigkeit nach dem Kontaktieren mit dem Adsorberharz in Schritt S2 an Koffein abgereichert ist, bevorzugt weniger als 300 mg Koffein pro Liter wässriger Lösung umfasst, besonders bevorzugt weniger als 100 mg Koffein pro Liter wässriger Lösung, ganz besonders bevorzugt kein Koffein umfasst, eignet sich diese an Koffein abgereicherte wässrige Extraktionsflüssigkeit dazu, in Schritt S1 erneut als wässrige Extraktionsflüssigkeit eingesetzt zu werden. Bevorzugt enthält die an Koffein abgereicherte wässrige Extraktionsflüssigkeit, die erneut als wässrige Extraktionsflüssigkeit eingesetzt werden soll, einzelne oder mehrere Kaffeeinhaltsstoffe, die nicht Koffein sind, ausgewählt aus der Gruppe bestehend aus Säuren, Mineralien, Aromastoffe, durch Maillard-Reaktion in Aromastoffe überführbare Verbindungen, und Antioxidantien, so dass eine Extraktion von entsprechenden Kaffeeinhaltsstoffen aus den koffeinhaltigen Rohkaffeebohnen in die Extraktionsflüssigkeit verhindert oder erschwert wird. Diese Kaffeeinhaltsstoffe, die nicht Koffein sind, werden also vorzugsweise nicht bzw. nicht vollständig von dem Adsorberharz adsorbiert, vorzugsweise weil das Adsorberharz bereits in einem vorangegangenen Schritt mit diesen Kaffeeinhaltsstoffen beladen wurde. Siehe zu diesen Aspekten auch die individuellen Ausführungen weiter oben.

Bevorzugt ist ein erfindungsgemäßes Verfahren (wie vorstehend beschrieben, vorzugsweise wie vorstehend als bevorzugt bezeichnet), mit folgenden Schritten:
(S1) Kontaktieren einer Menge an koffeinhaltigen Rohkaffeebohnen mit einer wässrigen Extraktionsflüssigkeit, so dass Koffein aus den koffeinhaltigen Rohkaffeebohnen in die Extraktionsflüssigkeit extrahiert wird,
   wobei in Schritt S1 als wässrige Extraktionsflüssigkeit
   - Wasser eingesetzt wird
      oder
   - eine wässrige Lösung eingesetzt wird, die einzelne oder mehrere Kaffeeinhaltsstoffe umfasst, die nicht Koffein sind, ausgewählt aus der Gruppe bestehend aus Säuren, Mineralien, Aromastoffe, durch Maillard-Reaktion in Aromastoffe überführbare Verbindungen, und Antioxidantien, so dass eine Extraktion von entsprechenden Kaffeeinhaltsstoffen aus den koffeinhaltigen Rohkaffeebohnen in die Extraktionsflüssigkeit verhindert oder erschwert wird
(S2) Kontaktieren der in Schritt S1 resultierenden, an Koffein angereicherten, wässrigen Extraktionsflüssigkeit mit einem Adsorberharz, so dass Koffein aus der Extraktionsflüssigkeit an das Adsorberharz gebunden wird,
   wobei in Schritt S2 ein Adsorberharz eingesetzt wird, welches
   vorbeladen ist mit einzelnen oder mehreren Kaffeeinhaltsstoffen, die nicht Koffein sind, ausgewählt aus der Gruppe bestehend aus Säuren, Mineralien, Aromastoffe, durch Maillard-Reaktion in Aromastoffe überführbare Verbindungen, und Antioxidantien, so dass eine Bindung von entsprechenden Kaffeeinhaltsstoffen aus der in Schritt S1 resultierenden, Koffein enthaltenden Extraktionsflüssigkeit an das Adsorberharz verhindert oder erschwert wird
      und wobei in Schritt S2
      - ein makroporöses Adsorberharz eingesetzt wird, welches ausgewählt ist aus der Gruppe bestehend aus Polystyrol, Polydivinylbenzol sowie deren Copolymere miteinander und mit anderen Monomeren,
         wobei das makroporöse Adsorberharz vorzugsweise ein Polystyrol oder ein Copolymer des Polystyrols ist, bevorzugt ein vernetztes Polystyrol, besonders bevorzugt ein mit Divinylbenzol vernetztes Polystyrol, ganz besonders bevorzugt ein nicht-funktionalisiertes, nichtionisches und mit Divinylbenzol vernetztes Polystyrol,
         und/oder (vorzugsweise "und")
      - zumindest 90 %, bevorzugt zumindest 95 %, ganz besonders bevorzugt zumindest 99 % des Koffeins aus der Koffein enthaltenden Extraktionsflüssigkeit an das Adsorberharz gebunden werden,
(S3) Kontaktieren des in Schritt S2 resultierenden, mit Koffein beladenen Adsorberharzes, mit Dichlormethan, so dass Koffein im Dichlormethan gelöst wird,
   wobei in Schritt S3
   - das Kontaktieren so durchgeführt wird, dass zumindest 80 %, bevorzugt zumindest 90 %, besonders bevorzugt zumindest 95 %, ganz besonders bevorzugt zumindest 99 % des Koffeins aus dem mit Koffein beladenen Adsorberharz in das Dichlormethan gelöst werden,
      und/oder (vorzugsweise "und")
   - die Temperatur des Dichlormethans niedriger ist als 35 °C, bevorzugt niedriger ist als 30 °C, besonders bevorzugt niedriger ist als 25 °C
   wobei vorzugsweise wässrige Extraktionsflüssigkeit ein oder mehrfach im Kreis gefördert und die in Schritt S2 resultierende, an Koffein abgereicherte, wässrige Extraktionsflüssigkeit oder ein Aufbereitungsprodukt davon in Schritt S1 erneut als wässrige Extraktionsflüssigkeit eingesetzt wird.

Bevorzugt ist ein erfindungsgemäßes Verfahren (wie vorstehend beschrieben, vorzugsweise wie vorstehend als bevorzugt bezeichnet), wobei das Verfahren ein Verfahren ist zur Herstellung von entkoffeinierten Rohkaffeebohnen und von Koffeinkonzentrat, umfassend den zusätzlichen Schritt:
(S5) Gewinnen von Koffeinkonzentrat aus der nach Schritt S3 vorliegenden Lösung von Koffein in Dichlormethan, vorzugsweise durch Abtrennen von Koffein.

Vorzugsweise werden sowohl der oben beschriebene Schritt (S4) als auch dieser Schritt (S5) durchgeführt; dabei ist die Reihenfolge der Schritte (S4) und (S5) beliebig. Es kann aber in Einzelfällen auch nur Schritt (S5) oder nur Schritt (S4) durchgeführt werden.

Bevorzugt ist somit ein erfindungsgemäßes Verfahren, in dem nicht nur entkoffeinierte Rohkaffeebohnen als Produkt erhalten werden, sondern darüber hinaus in Schritt S5 ein Koffeinkonzentrat gewonnen wird. Dieses wird aus der nach Schritt S3 vorliegenden Lösung von Koffein in Dichlormethan erhalten, vorzugsweise durch Abtrennen von Koffein.

Dem Fachmann sind dabei fachübliche Methoden bekannt, um Koffein aus einer koffeinhaltigen Dichlormethanlösung abzutrennen. Hierzu zählt insbesondere die Erwärmung einer solchen koffeinhaltigen Dichlormethanlösung oder das Extrahieren von Koffein aus der koffeinhaltigen Dichlormethanlösung mittels einer anderen Extraktionsflüssigkeit. Zudem kann Koffein aus der koffeinhaltigen Dichlormethanlösung auskristallisiert werden, indem der Gehalt an Dichlormethan beispielsweise durch Anlegen von Vakuum oder durch Erwärmung sukzessive reduziert wird.

Gemäß einem weiteren primären Aspekt der vorliegenden Erfindung werden die vorstehend angegebenen Aufgaben- und Problemstellung gelöst durch eine Vorrichtung zur Herstellung entkoffeinierter Rohkaffeebohnen in einem erfindungsgemäßen Verfahren (bevorzugt in einem als bevorzugt bezeichneten Verfahren), umfassend
- einen mit einer Menge an Rohkaffeebohnen befüllbaren Extraktor zum Kontaktieren der Menge an koffeinhaltigen Rohkaffeebohnen mit einer wässrigen Extraktionsflüssigkeit,
- eine Adsorptionseinheit mit einem Adsorberharz, zum Kontaktieren einer wässrigen, an Koffein angereicherten Extraktionsflüssigkeit mit dem Adsorberharz, wobei der Extraktor so mit der Adsorptionseinheit verbunden ist, dass wässrige, an Koffein angereicherte Extraktionsflüssigkeit aus dem Extraktor in die Adsorptionseinheit geleitet werden kann,
- einen Vorratsbehälter für wässrige Extraktionsflüssigkeit, der so mit dem Extraktor verbunden ist, dass wässrige Extraktionsflüssigkeit aus dem Vorratsbehälter für wässrige Extraktionsflüssigkeit in den Extraktor geleitet werden kann, und der vorzugsweise so mit dem Extraktor verbunden ist, dass nach einem Extraktionsvorgang wässrige Extraktionsflüssigkeit aus dem Extraktor oder der Adsorptionseinheit in den Vorratsbehälter rückgeführt werden kann, vorzugsweise aus der Adsorptionseinheit,
- einen Vorratsbehälter für Dichlormethan, der so mit der Adsorptionseinheit verbunden ist, dass Dichlormethan in Kontakt mit dem Adsorberharz gebracht werden kann,
- ein oder mehrere Steuerungseinrichtungen
   zum Steuern der Förderung von wässriger Extraktionsflüssigkeit und/oder von Dichlormethan innerhalb der Vorrichtung
   und/oder (vorzugsweise "und")
   zum automatischen Umschalten von Schritt S2 zu Schritt S3, sobald ein vorbestimmter Fortschritt der Extraktion in Schritt S1 erreicht ist und/oder sobald in Schritt S2 eine vorbestimmte Beladung des Adsorberharzes mit Koffein erreicht ist.

Eine erfindungsgemäße Vorrichtung umfasst somit einen mit einer Menge an Rohkaffeebohnen befüllbaren Extraktor zum Kontaktieren einer Menge an koffeinhaltigen Rohkaffeebohnen mit einer wässrigen Extraktionsflüssigkeit (gemäß Schritt S1 des erfindungsgemäßen Verfahrens). In dem mit einer Menge an Rohkaffeebohnen befüllbaren Extraktor findet vorzugsweise der (gesamte) Verfahrensschritt S1 statt, das heißt in dem Extraktor wird eine Menge an koffeinhaltigen Rohkaffeebohnen mit einerwässrigen Extraktionsflüssigkeit kontaktiert, sodass Koffein aus den koffeinhaltigen Rohkaffeebohnen in die Extraktionsflüssigkeit extrahiert wird.

Der Fachmann wählt hierbei den Extraktor in üblicher Weise aus, und berücksichtigt hierbei insbesondere jene Eigenschaften des Extraktors die entscheidend sind, um eine effiziente Kontaktierung der Rohkaffeebohnen mit der wässrigen Extraktionsflüssigkeit sicher zu stellen. Zu diesen Eigenschaften gehören unter anderem die Form und Größe und die Implementierung von Rühr- bzw. Mischeinheiten innerhalb des Extraktors.

Vorzugsweise besitzt der mit einer Menge an Rohkaffeebohnen befüllbare Extraktor einen Einlass zum Befüllen mit der wässrigen Extraktionsflüssigkeit. Dieser Einlass ist vorzugsweise über Rohrleitungen mit anderen Vorrichtungselementen verbunden, z.B. mit einem Vorratsbehälter oder mit der Ausgangsseite der Adsorptionseinheit.

Vorzugsweise besitzt der mit einer Menge an Rohkaffeebohnen befüllbare Extraktor einen Auslass, aus dem die an Koffein angereicherte wässrige Extraktionsflüssigkeit z.B. in ein weiteres Vorrichtungselement wie die Adsorptionseinheit, überführt werden kann, beispielsweise über Rohrleitungen.

Bevorzugt umfasst der mit einer Menge an Rohkaffeebohnen befüllbare Extraktor sowohl einen Einlass als auch einen Auslass für die wässrige Extraktionsflüssigkeit (wie vorstehend beschrieben).

Vorzugsweise umfasst der mit einer Menge an Rohkaffeebohnen befüllbare Extraktor einen Einlass für Rohkaffeebohnen sowie vorzugsweise einen davon getrennten Auslass für entkoffeinierte Rohkaffeebohnen.

Eine erfindungsgemäße Vorrichtung umfasst eine Adsorptionseinheit mit einem Adsorberharz, zum Kontaktieren einer wässrigen, an Koffein angereicherten Extraktionsflüssigkeit mit dem Adsorberharz, wobei der Extraktor so mit der Adsorptionseinheit verbunden ist, dass wässrige, an Koffein angereicherte Extraktionsflüssigkeit aus dem Extraktor in die Adsorptionseinheit geleitet werden kann.

In dieser Adsorptionseinheit finden vorzugsweise die Verfahrensschritte S2 und S3 statt. Die Adsorptionseinheit mit einem Adsorberharz ist dazu so ausgestaltet, dass sie
i) ein Kontaktieren der in Schritt S1 resultierenden, an Koffein angereicherten, wässrigen Extraktionsflüssigkeit mit dem Adsorberharz ermöglicht, so dass Koffein aus der Extraktionsflüssigkeit an das Adsorberharz gebunden wird
   und
ii) ein Kontaktieren des in Schritt S2 resultierenden, mit Koffein beladenen Adsorberharzes, mit Dichlormethan ermöglicht, sodass Koffein im Dichlormethan gelöst wird.

In einer erfindungsgemäßen Vorrichtung ist der Extraktor so mit der Adsorptionseinheit verbunden, dass wässrige, an Koffein angereicherte Extraktionsflüssigkeit aus dem Extraktor in die Adsorptionseinheit geleitet werden kann. Die Verbindung des Extraktors mit der Adsorptionseinheit erfolgt dabei zum Beispiel durch geeignete Rohleitungssysteme zwischen entsprechenden Anschlüssen (Ein- bzw. Auslässen) des Extraktors und der Adsorptionseinheit.

Vorzugsweise ist die Adsorptionseinheit so mit dem Extraktor verbunden, dass wässrige, an Koffein abgereicherte Extraktionsflüssigkeit aus der Adsorptionseinheit zurück in den Extraktor geleitet werden kann. Eine solche Ausgestaltung ist insbesondere vorteilhaft, wenn ein erfindungsgemäßes Verfahren, insbesondere die Schritte S1 und S2, in bevorzugter Weise semi-kontinuierlich durchgeführt wird.

Vorzugsweise ist die Adsorptionseinheit so ausgestaltet, dass ein bevorzugtes erfindungsgemäßes Verfahren durchgeführt werden kann, wobei die wässrige Extraktionsflüssigkeit ein oder mehrfach im Kreis gefördert wird, wobei vorzugsweise die in Schritt S2 resultierende an Koffein abgereicherte wässrige Extraktionsflüssigkeit oder ein Aufbereitungsprodukt davon in Schritt S1 erneuert als wässrige Extraktionsflüssigkeit eingesetzt wird.

Die genaue Ausgestaltung der Adsorptionseinheit wählt der Fachmann anhand der Bedürfnisse des Einzelfalls. Eine Adsorptionseinheit besteht dabei vorzugsweise aus einer oder mehreren Adsorbersäulen, welche (jeweils) mit Adsorberharz befüllt ist bzw. sind. Bevorzugt zum Einsatz in Schritt S2 des erfindungsgemäßen Verfahrens sind Adsorberharze, die vorbeladen sind mit einzelnen oder mehreren Kaffeeinhaltsstoffen, die nicht Koffein sind, ausgewählt aus der Gruppe bestehend aus Säuren, Mineralien, Aromastoffen, durch Maillard-Reaktion in Aromastoffe überführbare Verbindungen, und Antioxidantien.

Bei Vorhandensein mehrerer mit Adsorberharz befüllter Adsorbersäulen innerhalb der Adsorptionseinheit ist es bevorzugt, dass diese Adsorbersäulen jeweils einen Einlass und einen Auslass besitzen und so angeordnet und miteinander verbunden sind, dass sowohl eine (in einem Schritt S1) mit Koffein angereicherte als auch eine (in einem Schritt S2) an Koffein abgereicherte wässrige Extraktionsflüssigkeit von einer ersten mit Adsorberharz befüllten Adsorbersäule zu einer zweiten mit Adsorberharz befüllten Adsorbersäule geleitet werden kann usw. Die genaue Ausgestaltung der Adsorptionseinheit und der Adsorbersäulen sowie die Wahl der Art und der Menge des Adsorberharzes ist dabei vorzugsweise an die Bedürfnisse des Einzelfalls angepasst. So sind vorzugsweise die Größe, das Volumen und die Anzahl der Adsorbersäulen, sowie Art und der Menge des Adsorberharzes an die Art und Menge der zu entkoffeinierenden Rohkaffeebohnen und/oder an die Menge an zu extrahierendem Koffein angepasst.

Eine erfindungsgemäße Vorrichtung umfasst zudem einen Vorratsbehälter für wässrige Extraktionsflüssigkeit, der so mit dem Extraktor verbunden ist, dass wässrige Extraktionsflüssigkeit aus dem Vorratsbehälter für wässrige Extraktionsflüssigkeit in den Extraktor geleitet werden kann. Je nach Verfahrensstadium, kann hierbei die wässrige Extraktionsflüssigkeit innerhalb des Vorratsbehälters für wässrige Extraktionsflüssigkeit eine unterschiedliche Zusammensetzung haben, so kann beispielsweise der Gehalt an Kaffeeinhaltsstoffen und/oder Koffein im Laufe des Verfahrens variieren. Die Ausgestaltung des Vorratsbehälters für wässrige Extraktionsflüssigkeit, insbesondere die Größe und Form, wird der Fachmann den Gegebenheiten des Einzelfalls anpassen.

In einer bevorzugten Ausgestaltung ist die erfindungsgemäße Vorrichtung dazu eingerichtet, eine wässrige Extraktionsflüssigkeit im Kreislauf zu fördern, wobei der Extraktor und die Adsorptionseinheit sowie vorzugsweise der Vorratsbehälter für wässrige Extraktionsflüssigkeit Teil des Kreislaufs sind.

Diese bevorzugte Ausgestaltung der Vorrichtung ist insbesondere dann relevant, wenn die wässrige Extraktionsflüssigkeit (vorzugsweise im semi-kontinuierlichen Betrieb) ein oder mehrfach im Kreis gefördert wird, wobei vorzugsweise die in Schritt S2 resultierende, an Koffein abgereicherte, wässrige Extraktionsflüssigkeit oder ein Aufbereitungsprodukt davon in Schritt S1 erneut als wässrige Extraktionsflüssigkeit eingesetzt wird.

Eine erfindungsgemäße Vorrichtung umfasst zudem einen Vorratsbehälter für Dichlormethan, der so mit der Adsorptionseinheit verbunden ist, dass Dichlormethan in Kontakt mit dem Adsorberharz gebracht werden kann.

Vorzugsweise stimmen in der erfindungsgemäßen Vorrichtung ein Dichlormethankreislauf (Koffeindesorptionskreislauf) und ein wässriger Extraktionskreislauf (Koffeinadsorptionskreislauf) nur im Bereich der Adsorptionseinheit überein, sind aber ansonsten baulich getrennt. Das bedeutet, dass die Vorrichtungselemente die spezifisch für den Dichlormethankreislauf vorgesehen sind, zum Beispiel der Vorratsbehälter für Dichlormethan und Leitungen zur Durchleitung von Dichlormethan zur Adsorptionseinheit, baulich getrennt sind von Vorrichtungselementen die spezifisch für wässrige Extraktionsflüssigkeit vorgesehen sind, wie der mit einer Menge an Rohkaffeebohnen befüllbare Extraktor und der Vorratsbehälter für wässrige Extraktionsflüssigkeit sowie deren Zu- bzw. Ableitungen. Eine solche bevorzugte Ausgestaltung ist insbesondere deshalb vorteilhaft, da so gewährleistet werden kann, dass die zur Desorption von am Adsorberharz gebundenem Koffein eingesetzte Dichlormethanlösung nicht in direkten Kontakt mit den Rohkaffeebohnen gelangt. Selbstverständlich muss dabei die Adsorptionseinheit, welche mit dem Adsorberharz befüllt ist, sowohl für die wässrige Extraktionsflüssigkeit als auch für Dichlormethan zugänglich sein.

Die erfindungsgemäße Vorrichtung umfasst vorzugsweise eine Schalteinrichtung, die dazu eingerichtet ist umzuschalten zwischen
- einem ersten Betriebszustand, in dem eine in einem Schritt S1 resultierende, an Koffein angereicherte, wässrige Extraktionsflüssigkeit mit einem Adsorberharz in der Adsorptionseinheit kontaktiert wird, so dass Koffein aus der Extraktionsflüssigkeit an das Adsorberharz gebunden wird
   und
- einem zweiten Betriebszustand, in dem ein in einem Schritt S2 resultierendes, mit Koffein beladenes Adsorberharz, mit Dichlormethan kontaktiert wird, so dass Koffein im Dichlormethan gelöst wird.

Im ersten Betriebszustand wird vorzugsweise der vorstehend erläuterte wässrige Extraktionskreislauf (Koffeinadsorptionskreislauf) durchströmt.

Im zweiten Betriebszustand wird vorzugsweise der vorstehend erläuterte Dichlormethankreislauf (Koffeindesorptionskreislauf) durchströmt.

Vorzugsweise wird das erfindungsgemäße Verfahren so durchgeführt und die erfindungsgemäße Vorrichtung so betrieben, dass der erste und der zweite Betriebszustand nicht gleichzeitig vorliegen. Bei Einsatz mehrerer, unabhängig voneinander betreibbarer Adsorptionssäulen innerhalb der Adsorptionseinheit kann es jedoch vorteilhaft sein, dass in einer oder mehreren ersten Adsorptionssäulen der erste Betriebszustand vorliegt (wässriger Extraktionskreislauf bzw. Koffeinadsorptionskreislauf), während in einer oder mehreren zweiten Adsorptionssäulen der zweite Betriebszustand vorliegt (Dichlormethankreislauf bzw. Koffeindesorptionskreislauf). Hierbei sind die ersten Adsorptionssäulen und die zweiten Adsorptionssäulen voneinander unabhängig betreibbar.

Eine bevorzugte erfindungsgemäße Vorrichtung umfasst eine Abtrenneinheit zum Abtrennen von Koffein aus einer Lösung von Koffein in Dichlormethan, wobei die Vorrichtung dazu eingerichtet ist, Dichlormethan aus dem Vorratsbehälter für Dichlormethan zur Adsorptionseinheit und von dort (nach Beladung von Dichlormethan mit Koffein) zu der Abtrenneinheit zu fördern. Dort wird Dichlormethan (DCM) von Koffein getrennt und steht dann (aufgereinigt) zur erneuten Verwendung in Schritt (S3) zur Verfügung.

Diese bevorzugte Ausgestaltung ist deshalb insbesondere (erstens) relevant, um Schritt S3, das heißt das Kontaktieren des in Schritt S2 resultierenden, mit Koffein beladenen Adsorberharzes, mit Dichlormethan, so dass Koffein im Dichlormethan gelöst wird, effizient zu gestalten. Vorzugsweise umfasst die Abtrenneinheit einen Behälter, bevorzugt einen Edelstahlbehälter, in dem das DCM kontrolliert verdampft wird. Dabei geht das Koffein in eine Wasservorlage über, wird also umgelöst. Das verdampfte DCM wird wieder verflüssigt, ist dann aufgereinigt und steht zur erneuten Verwendung in Schritt (S3) zur Verfügung.

Diese bevorzugte Ausgestaltung ist zudem (zweitens) relevant für den bevorzugten Schritt S5, das heißt für das Gewinnen von Koffeinkonzentrat (oder von Koffein) aus der nach Schritt S3 vorliegenden Lösung von Koffein in Dichlormethan, vorzugsweise durch Abtrennen von Koffein.

In einer erfindungsgemäßen Vorrichtung sind die Anlagenelemente für Dichlormethan (beispielsweise Zu- bzw. Ableitungen des Vorratsbehälters für Dichlormethan) sowie der Abtrenneinheit vom wässrigen Extraktionskreislauf vorzugsweise getrennt. Die Abtrenneinheit ist bevorzugt so gestaltet, dass sie ein effizientes Trennen von in Dichlormethan gelöstem Koffein aus der koffeinhaltigen Dichlormethanlösung erlaubt. Eine bevorzugte erfindungsgemäße Vorrichtung erlaubt somit die Herstellung zweier qualitativ hochwertiger Produkte, nämlich sowohl die Herstellung von entkoffeinierten Rohkaffeebohnen als auch die Herstellung von Koffein bzw. Koffeinkonzentrat (in der genannten Abtrenneinheit).

Bevorzugt ist eine erfindungsgemäße Vorrichtung (wie vorstehend beschrieben, vorzugsweise wie vorstehend als bevorzugt bezeichnet), wobei
- der Extraktor mit Rohkaffeebohnen befüllt ist,
- der Vorratsbehälter für wässrige Extraktionsflüssigkeit eine wässrige Extraktionsflüssigkeit enthält,
- der Vorratsbehälter für Dichlormethan eine Menge an Dichlormethan enthält
   und/oder (vorzugsweise "und")
- das Adsorberharz ein makroporöses Adsorberharz ist, welches ausgewählt ist aus der Gruppe bestehend aus Polystyrol, Polydivinylbenzol sowie deren Copolymere miteinander und mit anderen Monomeren,
   wobei das makroporöse Adsorberharz vorzugsweise ein Polystyrol oder ein Copolymer des Polystyrols ist, bevorzugt ein vernetztes Polystyrol, besonders bevorzugt ein mit Divinylbenzol vernetztes Polystyrol, ganz besonders bevorzugt ein nicht-funktionalisiertes, nichtionisches und mit Divinylbenzol vernetztes Polystyrol.

Eine solche bevorzugte erfindungsgemäße Vorrichtung ist vorbereitet für die Durchführung des erfindungsgemäßen Verfahrens.

Ein weiterer Aspekt der vorliegenden Erfindung betrifft die Verwendung einer erfindungsgemäßen Vorrichtung (wie vorstehend beschrieben, vorzugsweise wie vorstehend als bevorzugt bezeichnet) zur Durchführung eines erfindungsgemäßen Verfahrens (wie vorstehend beschrieben, vorzugsweise wie vorstehend als bevorzugt bezeichnet). Es versteht sich, dass die erfindungsgemäße Vorrichtung dabei vorzugsweise an die gewünschte Ausgestaltung des erfindungsgemäßen Verfahrens angepasst ist.

Ein weiterer Aspekt der vorliegenden Erfindung betrifft die Verwendung von Dichlormethan zum Entfernen von Koffein von einem Adsorberharz, welches mit Koffein und weiteren Kaffeeinhaltsstoffen beladen ist,
wobei das Adsorberharz vorzugsweise ein makroporöses Adsorberharz ist (wie oben beschrieben), welches ausgewählt ist aus der Gruppe bestehend aus Polystyrol, Polydivinylbenzol sowie deren Copolymere miteinander und mit anderen Monomeren,
wobei das makroporöse Adsorberharz besonders vorzugsweise ein Polystyrol oder ein Copolymer des Polystyrols ist, bevorzugt ein vernetztes Polystyrol, besonders bevorzugt ein mit Divinylbenzol vernetztes Polystyrol, ganz besonders bevorzugt ein nicht-funktionalisiertes, nichtionisches und mit Divinylbenzol vernetztes Polystyrol.

Diese erfindungsgemäße Verwendung von Dichlormethan wird im erfindungsgemäßen Verfahren in Schritt S3 verwirklicht. Die bevorzugte Auswahl des Adsorberharzes entspricht der für das erfindungsgemäße Verfahren; die vorstehenden Ausführungen gelten entsprechend.

Vorzugsweise erfolgt die erfindungsgemäße Verwendung von Dichlormethan zum Entfernen von Koffein von einem Adsorberharz, welches mit Koffein und weiteren Kaffeeinhaltsstoffen beladen ist, in einer erfindungsgemäßen Vorrichtung (wie vorstehend beschrieben, vorzugsweise wie vorstehend als bevorzugt bezeichnet).

Ein weiterer Aspekt der vorliegenden Erfindung betrifft die Verwendung eines Adsorberharzes,
wobei das Adsorberharz vorzugsweise ein makroporöses Adsorberharz ist, welches ausgewählt ist aus der Gruppe bestehend aus Polystyrol, Polydivinylbenzol sowie deren Copolymere miteinander und mit anderen Monomeren,
wobei das makroporöse Adsorberharz besonders vorzugsweise ein Polystyrol oder ein Copolymer des Polystyrols ist, bevorzugt ein vernetztes Polystyrol, besonders bevorzugt ein mit Divinylbenzol vernetztes Polystyrol, ganz besonders bevorzugt ein nicht-funktionalisiertes, nichtionisches und mit Divinylbenzol vernetztes Polystyrol,
zum Adsorbieren von Koffein aus einer an Koffein angereicherten, wässrigen Extraktionsflüssigkeit,
in einem Verfahren zur Herstellung entkoffeinierter Rohkaffeebohnen, wobei das mit aus den Rohkaffeebohnen extrahiertem Koffein beladene Adsorberharz mit Dichlormethan behandelt wird, so dass Koffein im Dichlormethan gelöst wird.

Diese erfindungsgemäße Verwendung eines Adsorberharzes wird im erfindungsgemäßen Verfahren in den Schritten S2 (Adsorption; Beladen mit Koffein) und S3 (Behandeln mit DCM; Entladen des Koffeins) verwirklicht.

Vorzugsweise erfolgt die erfindungsgemäße Verwendung eines Adsorberharzes in einem erfindungsgemäßen Verfahren (wie vorstehend beschrieben, vorzugsweise wie vorstehend als bevorzugt bezeichnet) und/oder (bevorzugt "und") in einer erfindungsgemäßen Vorrichtung (wie vorstehend beschrieben, vorzugsweise wie vorstehend als bevorzugt bezeichnet).

Nachfolgend werden weitere bevorzugte bzw. besonders bevorzugte Aspekte der Erfindung beschrieben. Diese Aspekte betreffen sowohl das erfindungsgemäße Verfahren als auch die erfindungsgemäße Vorrichtung sowie die erfindungsgemäßen Verwendungen (wie vorstehend beschrieben, vorzugsweise wie vorstehend als bevorzugt bezeichnet). Sämtliche der nachfolgenden bevorzugten bzw. besonders bevorzugten Aspekte sind zur Kombination mit anderen Aspekten der Erfindung geeignet und vorgesehen, insbesondere mit solchen Aspekten die als bevorzugt bezeichnet werden, soweit sich nicht im Einzelfall etwas anderes ergibt.

Bevorzugt umfasst ein erfindungsgemäßes Verfahren zur Herstellung entkoffeinierter Rohkaffeebohnen (wie vorstehend beschrieben, vorzugsweise wie vorstehend als bevorzugt bezeichnet) einen oder mehrere der folgenden Schritte:
- Befüllen eines Extraktors mit Rohkaffeebohnen, bevorzugt mit trockenen Rohkaffeebohnen,
- Aufheizen der Rohkaffeebohnen innerhalb eines/des Extraktors, bevorzugt Aufheizen mittels indirekter Mantelheizung,
- Aufschließen und/oder zusätzliches Aufheizen der Rohkaffeebohnen mittels Direktdampf, bevorzugt mittels Wasserdampf,
- Festlegen einer definierten Zieltemperatur der Rohkaffeebohnen,
- Einstellen einer zuvor festgelegten Zieltemperatur der Rohkaffeebohnen, bevorzugt Einstellen der zuvor festgelegten Zieltemperatur mittels Zugabe von temperiertem Wasser, wässrigen Lösungen oder Wasserdampf,
- Sättigung der Rohkaffeebohnen mit Wasser, bevorzugt Sättigung der Rohkaffeebohnen bis zu einer Grenzfeuchte von > 40 Gew.-% besonders bevorzugt von > 50 Gew.-%,
- Durchleiten einer temperierten wässrigen Extraktionsflüssigkeit, vorzugsweise aus einem Vorratsbehälter für wässrige Extraktionsflüssigkeit, durch in dem/in einem Extraktor befindliche Rohkaffeebohnen,
- Durchleiten der in Schritt S1 des erfindungsgemäßen Verfahrens resultierenden, an Koffein angereicherten, wässrigen Extraktionsflüssigkeit durch einen Partikelfilter, einen Dekanter und/oder eine Zentrifuge, bevorzugt einen Dekanter, sodass Partikel aus der wässrigen Extraktionslösung entfernt werden,
- in Schritt S2 des erfindungsgemäßen Verfahrens Durchleiten der in Schritt S1 resultierenden, an Koffein angereicherten, wässrigen Extraktionsflüssigkeit, bevorzugt einer zuvor filtrierten Extraktionsflüssigkeit, durch ein Adsorberharz, sodass (selektiv) Koffein aus der wässrigen Extraktionsflüssigkeit an das Adsorberharz gebunden wird,
- Rückführen der in Schritt S2 des erfindungsgemäßen Verfahrens resultierenden, an Koffein abgereicherten, wässrigen Extraktionsflüssigkeit zum Extraktor und Verwenden der rückgeführten, an Koffein abgereicherten wässrigen Extraktionsflüssigkeit zur (erneuten) Extraktion von Koffein aus koffeinhaltigen Rohkaffeebohnen (dieselbe Charge wie im vorangegangen Schritt S1 oder eine neue Charge an koffeinhaltigen Rohkaffeebohnen),
- Entfernen der wässrigen Extraktionsflüssigkeit aus dem/einem Extraktor, bevorzugt Entfernen nach einer vorgegebenen Extraktionszeit oder nach einem zuvor vorgegebenen und erreichten Extraktionsfortschritt, vorzugsweise bestimmt durch Messen der Koffein-konzentration in der wässrigen Extraktionsflüssigkeit oder durch Bestimmen des Entkoffeinierungsgrads der Rohkaffeebohnen,
- Überführen der entkoffeinierten, noch feuchten Rohkaffeebohnen aus dem Extraktor in einen Trockner,
- Trocknen der feuchten entkoffeinierten Rohkaffeebohnen, bevorzugt in einem Trockner,
- Überführen einer wässrigen Extraktionsflüssigkeit in einen Vorratsbehälter zur Aufbewahrung von wässrigen Extraktionsflüssigkeiten, bevorzugt nach Schritt S2 eines erfindungsgemäßen Verfahrens,
- Bevorraten einer wässrigen Extraktionsflüssigkeit in einem Vorratsbehälter zur Aufbewahrung von wässrigen Extraktionsflüssigkeiten, wobei die bevorratete wässrige Extraktionsflüssigkeit bevorzugt aus Schritt S1 oder aus Schritt S2 eines erfindungsgemäßen Verfahrens resultiert,
- Entkeimen einer in einem erfindungsgemäßen Verfahren, insbesondere in den Schritten S1 und S2, eingesetzten wässrigen Extraktionsflüssigkeit, bevorzugt mittels einer PEF-Behandlung (PEF = gepulste elektrische Felder),
- Entkeimen der wässrigen Extraktionsflüssigkeit mittels PEF-Behandlung, wobei die wässrige Extraktionsflüssigkeit vorzugsweise in einem separaten Entkeimungskreislauf im Kreis geführt wird und innerhalb jenes separaten Kreislaufs einer PEF-Behandlung unterzogen wird,
- Entfernen von gelöstem freien Asparagin aus einer im erfindungsgemäßen Verfahren eingesetzten wässrigen Extraktionsflüssigkeit, vorzugsweise einer wässrigen Extraktionsflüssigkeit, wie sie unmittelbar vor Schritt S1 oder unmittelbar nach Schritt S1 oder unmittelbar nach Schritt S2 vorliegt, bevorzugt mittels Zugabe einer Enzymlösung umfassend Asparaginase,

Durch Entfernen von freiem Asparagin aus der wässrigen Extraktionslösung (und somit auch dem Entfernen von freiem Asparagin aus den behandelten Rohkaffeebohnen) kann die Acrylamidbildung bei anschließender Röstung der aus dem erfindungsgemäßen Verfahren hergestellten, entkoffeinierten Rohkaffeebohnen deutlich reduziert werden.
- Bereitstellen einer oder mehrerer Säulenmodule, welche mit einem Adsorberharz befüllt sind, bevorzugt mit einem Adsorberharz, welches mit einzelnen oder mehreren Kaffeeinhaltsstoffen, die nicht Koffein sind, beladen ist,
- Periodisches Regenerieren des Adsorberharzes, bevorzugt erfolgt dabei das periodische Regenerieren des Adsorberharzes nach vollständiger Sättigung des Adsorberharzes mit Koffein,
- Regenieren des Adsorberharzes durch Spülen mit einem oder mehreren Lösungsmitteln, bevorzugt durch Spülen in einer vorbestimmten Reihenfolge mit unterschiedlichen Lösungsmitteln, besonders bevorzugt erfolgt das Spülen des Adsorberharzes mit Lösungsmitteln ausgewählt aus der Gruppe bestehend aus organischen Lösungsmitteln, insbesondere Dichlormethan und/oder Alkohole, Wasser und Wasserdampf,
- Überführen von in Schritt S3 eines erfindungsgemäßen Verfahrens vom Adsorberharz in DCM rückgelöstem Koffein in eine Abtrenneinheit,
- Aufbereiten des rückgelösten Koffeins in einer Koffeinaufbereitungsanlage, sodass Koffein oder ein Koffeinextrakt gewonnen wird,
- Umlösen von in Schritt S3 eines erfindungsgemäßen Verfahrens rückgelöstem Koffein aus einer koffeinhaltigen Dichlormethanlösung, wobei das Umlösen von Koffein bevorzugt mittels einer Flüssig-Flüssig-Extraktion erfolgt, besonders bevorzugt wird das Koffein mittels Umlösen aus der koffeinhaltigen Dichlormethanlösung in eine wässrige koffeinhaltige Lösung überführt,
- Aufbereitung und/oder Wiederverwendung von in einem erfindungsgemäßen Verfahren eingesetztem Wasserdampf,
- Aufbereitung und/oder Wiederverwendung von in einem erfindungsgemäßen Verfahren eingesetztem Dichlormethan,
- Aufbereitung und/oder Wiederverwendung einer in einem erfindungsgemäßen Verfahren verwendeten wässrigen Extraktionsflüssigkeit
- Aufbereitung und/oder Wiederverwendung einer in einem erfindungsgemäßen Verfahren eingesetzten Spüllösung
- Wiederverwendung, bevorzugt mehrmalige Wiederverwendung einer in einem erfindungsgemäßen Verfahren eingesetzten wässrigen Extraktionsflüssigkeit
- Abwasserbehandlung einer in einem erfindungsgemäßen Verfahren eingesetzten wässrigen Extraktionsflüssigkeit, bevorzugt erfolgt die Abwasserbehandlung erst dann, wenn die wässrige Extraktionsflüssigkeit aufgrund von Verunreinigung (beispielsweise nach vielfacher Verwendung in einem erfindungsgemäßen Verfahren) nicht erneut in einem erfindungsgemäßen Verfahren eingesetzt werden kann oder soll.

Ein bevorzugtes erfindungsgemäßes Verfahren zur Herstellung entkoffeinierter Rohkaffeebohnen umfasst ein oder mehrere der folgenden Schritte, wobei in eckigen Klammern der jeweilige Zustand oder Status des Adsorberharzes angegeben ist:
i. (insbesondere beim Anfahren des Verfahrens) Herstellen oder Bereitstellen eines geeigneten Adsorberharzes [Adsorberharz]
ii. (insbesondere beim Anfahren des Verfahrens) Sättigung oder Beladung des Adsorberharzes mit Kaffeeinhaltsstoffen, die nicht Koffein sind, wobei die Sättigung oder Beladung bevorzugt im laufenden Betrieb des Verfahrens erreicht wird [Adsorberharz + Kaffeeinhaltsstoffe]; dieser Schritt ii wird vorzugsweise vor Schritt S2 des erfindungsgemäßen Verfahrens durchgeführt
iii. Durchleiten einer koffeinhaltigen wässrigen Extraktionsflüssigkeit durch das mit Kaffeeinhaltsstoffen, die nicht Koffein sind, vorgesättigte Adsorberharz, so dass Koffein aus der Extraktionsflüssigkeit an das Adsorberharz gebunden wird [Adsorberharz + Kaffeeinhaltsstoffe + Koffein], vorzugsweise in oder als Schritt S2 des erfindungsgemäßen Verfahrens
iv. Kontaktieren des in Schritt iii. resultierenden mit Koffein beladenen Adsorberharzes, mit Dichlormethan, so dass Koffein im Dichlormethan gelöst wird, bevorzugt erfolgt die Lösung in Dichlormethan durch selektive Desorption des Koffeins vom Adsorberharz [Adsorberharz + Kaffeeinhaltsstoffe + DCM], vorzugsweise in oder als Schritt S3 des erfindungsgemäßen Verfahrens
v. Entfernen von Dichlormethan aus dem Adsorberharz und Regeneration des Adsorberharzes [Adsorberharz + Kaffeeinhaltsstoffe], vorzugsweise nach Schritt S3 des erfindungsgemäßen Verfahrens
vi. Periodische Grundreinigung des Adsorberharzes mit einer Natriumhydroxid-Lösung.

Es ist zu beachten, dass die vorstehend angegebenen Verfahrensschritte i. und ii. vorzugsweise nur dann durchgeführt werden, wenn ein erfindungsgemäßes Verfahren angefahren wird, z.B. im industriellen Maßstab. Die Verfahrensschritte i. und ii. sind insbesondere dann erforderlich bzw. sinnvoll, wenn ein Adsorberharz erstmalig in Betrieb genommen wird. Die Verfahrensschritte bzw. Zustände des Adsorberharzes in den Schritten iii. bis vi. betreffen insbesondere die (repetitive) Durchführung eines erfindungsgemäßen Verfahrens innerhalb eines kontinuierlichen bzw. semi-kontinuierlichen Verfahrens zur Herstellung von entkoffeinierten Rohkaffeebohnen. Insbesondere ist die Durchführung der Schritte iii bis v bevorzugt, unabhängig von der Durchführung oder Nicht-Durchführung der Schritte i, ii und vi.

Die Wahl eines geeigneten Adsorberharzes kann mittels Vorversuchen im Labor und mithilfe der Durchführung von Experimenten an einer Pilotanlage erprobt werden.

Im erfindungsgemäßen Verfahren wird das Adsorberharz vorzugsweise vor erstmaliger Inbetriebnahme mit Wasser umspült und/oder eingeweicht, bevorzugt für einen Zeittraum von mindestens einer Stunde. Es ist weiterhin bevorzugt, dass das Adsorberharz nach dieser Spülungs- bzw. Einweichungsphase erneut mit Wasser gespült wird, um mögliche Produktionsrückstände (Störstoffe) zu beseitigen. Zudem dient das erneute Spülen mit Wasser dazu, Lufteinschlüsse aus dem Adsorberharz zu verdrängen, insbesondere Lufteinschlüsse aus den Makroporen zu verdrängen.

Bevorzugt ist ein erfindungsgemäßes Verfahren mit folgendem (zusätzlichem) Schritt:
ii. Sättigung oder Beladung eines Adsorberharzes mit Kaffeeinhaltsstoffen, die nicht Koffein sind (dieser Schritt ii wird vorzugsweise vor Schritt S2 des erfindungsgemäßen Verfahrens durchgeführt):
Die Beladung bzw. Sättigung des Adsorberharzes mit Kaffeeinhaltsstoffen, die nicht Koffein sind, kann hierbei auf zumindest zwei unterschiedliche Arten erfolgen:
In einer ersten Variante wird das Adsorberharz mit Kaffeeinhaltsstoffen beladen, indem ein zuvor erzeugter Kaffeeextrakt (Wasser mit zugesetzten Kaffeeinhaltsstoffen, wobei die Kaffeeinhaltsstoffe nicht Koffein sind) das Adsorberharz überströmt und die im zuvor erzeugten Kaffeeextrakt enthaltenen Kaffeeinhaltstoffe an das Adsorberharz gebunden werden. Diese Variante findet insbesondere bei (erstmaliger) Inbetriebnahme von neuem, noch nicht beladenem Adsorberharz Anwendung, um die Adsorption von wasserlöslichen Bestandteilen, die nicht Koffein sind, aus der wässrigen Extraktionslösung auf dem Adsorberharz zu reduzieren.

Eine zweite Variante der Sättigung bzw. Beladung des Adsorberharzes mit Kaffeeinhaltsstoffen besteht darin, ein sowohl mit Kaffeeinhaltsstoffen als auch mit Koffein beladenes oder gesättigtes Adsorberharz mittels Dichlormethan zu behandeln, so dass Koffein selektiv entfernt wird, aber die sonstigen Kaffeeinhaltsstoffe zumindest zu einem großen Teil am Adsorberharz gebunden bleiben. Diese zweite Variante wird insbesondere dann durchgeführt, wenn ein erfindungsgemäßer Verfahrensschritt S2 bereits durchgeführt wurde. Unter Umständen kann es dann sinnvoll sein, das Adsorberharz vor der (erneuten) Beladung mit Koffein aus einer wässrigen Extraktionsflüssigkeit zu konditionieren. Unter dem Begriff "Konditionieren" fallen beispielsweise Verfahrensschritte wie eine Re-Hydratisierung durch Spülung mit Wasser, Wasserdampf oder wässrigen Lösungen.

Bevorzugt ist ein erfindungsgemäßes Verfahren mit folgendem (zusätzlichem) Schritt:
iii. Durchleiten einer koffeinhaltigen wässrigen Extraktionsflüssigkeit durch das mit Kaffeeinhaltsstoffen, die nicht Koffein sind, vorgesättigte Adsorberharz, so dass Koffein aus der Extraktionsflüssigkeit an das Adsorberharz gebunden wird (vorzugsweise in oder als Schritt S2 des erfindungsgemäßen Verfahrens):
Schritt iii. bewirkt im Entkoffeinierungsprozess die sogenannte "Beladung" des Adsorberharzes mit Koffein.

Eine zusätzliche oder erneute Beladung mit Kaffeeinhaltsstoffen, die nicht Koffein sind, ist ebenfalls möglich. Eine solche zusätzliche oder erneute Beladung mit Kaffeeinhaltsstoffen, die nicht Koffein sind, ist insbesondere dann sinnvoll, wenn durch eine zuvor durchgeführte periodische Grundreinigung des Adsorberharzes Teile der Kaffeeinhaltsstoffe, die nicht Koffein sind, vom Adsorberharz desorbiert (gelöst) wurden.

Die in Schritt iii. durch das Adsorberharz geleitete koffeinhaltige wässrige Extraktionsflüssigkeit wird vorzugsweise wie folgt erzeugt/erhalten:
- eine bestimmte Menge an Rohkaffeebohnen wird in einen Extraktor gegeben
- der mit einer bestimmten Menge an Rohkaffeebohnen befüllte Extraktor wird mit einer wässrigen Extraktionsflüssigkeit, bevorzugt mit einer koffeinfreien oder koffeinarmen aber mit anderen Kaffeeinhaltsstoffen gesättigten wässrigen Extraktionsflüssigkeit, befüllt bis die Rohkaffeebohnen bedeckt sind
- Im Sonderfall einer erstmaligen Extraktion, in der noch keine (mit Kaffeeinhaltsstoffen gesättigte) wässrige Extraktionsflüssigkeit zur Verfügung steht, können die Rohkaffeebohnen mit zuvor hergestelltem Kaffeeextrakt oder mit Wasser bedeckt werden
- Mittels Rühren, bevorzugt mittels Rühren durch ein Rührwerk im Extraktor, wird die Mischung aus Rohkaffeebohnen und wässriger Extraktionsflüssigkeit durchmischt, um ein effektives Extrahieren des Koffeins aus den Rohkaffeebohnen zu gewährleisten
- Die koffeinarme oder koffeinfreie wässrige Extraktionsflüssigkeit extrahiert Koffein aus den Rohkaffeebohnen, so dass eine koffeinhaltige wässrige Extraktionsflüssigkeit resultiert; dieser letzte Teilschritt wird vorzugsweise in oder als Schritt S1 eines erfindungsgemäßen Verfahrens durchgeführt.

Das Durchleiten einer koffeinhaltigen wässrigen Extraktionsflüssigkeit durch das mit Kaffeeinhaltsstoffen, die nicht Koffein sind, vorgesättigte Adsorberharz, so dass Koffein aus der Extraktionsflüssigkeit an das Adsorberharz gebunden wird gemäß Schritt iii. umfasst bevorzugt einen oder mehrere der folgenden Maßnahmen:
- Die koffeinhaltige wässrige Extraktionsflüssigkeit wird über eine oder mehrere mit Adsorberharz befüllte Adsorbersäulen geleitet, bevorzugt über mindestens zwei mit Adsorberharz befüllte Adsorbersäulen geleitet
- Die koffeinhaltige wässrige Extraktionsflüssigkeit wird über zwei mit Adsorberharz befüllte Adsorbersäulen geleitet,
   wobei bevorzugt zunächst eine erste mit Adsorberharz befüllte Adsorbersäule von der koffeinhaltigen wässrigen Extraktionsflüssigkeit durchströmt wird, bis diese erste mit Adsorberharz befüllte Adsorbersäule mit Koffein beladen ist, bevorzugt mit Koffein gesättigt ist, und anschließend eine zweite ebenfalls mit Adsorberharz befüllte Adsorbersäule von der koffeinhaltigen wässrigen Extraktionsflüssigkeit durchströmt wird, bis auch diese zweite mit Adsorberharz befüllte Adsorbersäule mit Koffein beladen ist, bevorzugt mit Koffein gesättigt ist
- Die koffeinhaltige wässrige Extraktionsflüssigkeit wird über mehrere in Reihe geschaltete mit Adsorberharz befüllte Adsorbersäulen geleitet, wobei jeweils nur eine oder ein Teil der mehreren in Reihe geschalteten mit Adsorberharz befüllten Adsorbersäulen mit der koffeinhaltigen wässrigen Extraktionsflüssigkeit durchströmt wird, während ein oder mehrere der anderen, nicht durchströmten und mit Adsorberharz befüllten Adsorbersäulen
   i) mit Dichlormethan gespült werden, um Koffein (selektiv) vom Adsorberharz zu lösen
      und/oder
   ii) regeneriert werden, bevorzugt durch Spülung mit Wasser, Wasserdampf und/oder Natriumhydroxid enthaltenden Lösungen

Es ist bevorzugt, dass das mit Kaffeeinhaltsstoffen, die nicht Koffein sind, vorgesättigte Adsorberharz, nach Beendigung von Schritt iii. mit Koffein beladen ist, bevorzugt mit Koffein gesättigt ist.

Es ist bevorzugt, dass die ebenfalls durch Schritt iii. resultierende koffeinarme oder koffeinfreie wässrige Extraktionsflüssigkeit erneut in den mit Rohkaffeebohnen befüllten Extraktor geleitet wird, gegebenenfalls nach weiterer Aufbereitung (die insbesondere die Abtrennung oder Zugabe weiterer Bestandteile umfasst), um Koffein aus den Rohkaffeebohnen zu extrahieren (Kreisprozess).

Es ist bevorzugt, Schritt iii. so lange durchzuführen, bis ein gewünschter Entkoffeinierungsgrad der Rohkaffeebohnen erreicht ist. Besonders bevorzugt wird Schritt iii. so durchgeführt, dass bei den im Verfahren eingesetzten mit Adsorberharz befüllten Adsorbersäulen (mehrmals) zwischen Beladungszyklen (Durchleiten von wässriger Extraktionsflüssigkeit, bevorzugt Durchleiten innerhalb eines Kreislaufsystems) und Koffeindesorptions- und Regenerationszyklen umgeschaltet wird. Eine mit Adsorberharz befüllte Adsorbersäule kann sich also entweder im Koffeinadsorptionskreislauf (Beladung mit Koffein), im Koffeindesorptionskreislauf (Lösen von Koffein) oder im Regenerationskreislauf befinden und kann durch gezieltes Umschalten von einem ersten Kreislauf in einen beliebigen anderen Kreislauf überführt werden.

Bevorzugt ist ein erfindungsgemäßes Verfahren mit folgendem (zusätzlichem) Schritt:
iv. Kontaktieren des in Schritt iii. resultierenden mit Koffein beladenen Adsorberharzes, mit Dichlormethan, so dass Koffein im Dichlormethan gelöst wird, bevorzugt erfolgt die Lösung in Dichlormethan durch selektive Desorption des Koffeins vom Adsorberharz (vorzugsweise in oder als Schritt S3 des erfindungsgemäßen Verfahrens):
Schritt iv. bewirkt im Entkoffeinierungsprozess die sogenannte "Entladung" des Adsorberharzes, insbesondere die Entladung (Desorption) von an Adsorberharz gebundenem Koffein. Schritt iv. führt zudem dazu, dass das Adsorberharz erneut zur Beladung mit Koffein befähigt ist.

Die Desorption soll so selektiv wie möglich geschehen, damit bevorzugt nur Koffein vom in Schritt iii. resultierenden mit Koffein beladenen Adsorberharzes desorbiert wird und die Kaffeeinhaltsstoffe, die nicht Koffein sind, am Adsorberharz gebunden bleiben. Für eine solche selektive Desorption wird in Schritt S3 des erfindungsgemäßen Verfahrens Dichlormethan (DCM) verwendet.

Es ist bevorzugt, dass sich das in Schritt iii. resultierende mit Koffein beladene Adsorberharz in einer Adsorbersäule befindet. Es ist insbesondere bevorzugt, dass die mit Adsorberharz befüllte Adsorbersäule vor Kontaktieren mit Dichlormethan in Schritt iv. durch Kontaktieren, bevorzugt durch Spülen, mit einer wässrigen Extraktionsflüssigkeit, Wasser oder einer sonstigen wässrigen Lösung auf eine Temperatur von niedriger als 25 °C abgekühlt wird.

Bevorzugt erfolgt Schritt iv. mittels Durchleiten von DCM, besonders bevorzugt mittels Durchleiten von DCM in Gegenrichtung zu der Strömungsrichtung, mit welcher die wässrige Extraktionsflüssigkeit in Schritt iii durch das Adsorberharz geleitet wurde. Auch ein Durchleiten in gleicher Strömungsrichtung ist jedoch in Einzelfällen vorteilhaft.

Bevorzugt ist ein erfindungsgemäßes Verfahren mit folgendem (zusätzlichem) Schritt:
v. Entfernen von Dichlormethan aus dem Adsorberharz und/oder Regeneration des Adsorberharzes, vorzugsweise in oder als Schritt S4 eines bevorzugten erfindungsgemäßen Verfahrens:
Vorzugsweise erfolgt zwischen Schritt iv. (Koffeindesorption mittels DCM) und erneuter Durchführung von Schritt iii. (Koffeinadsorption aus einer wässrigen Extraktionsflüssigkeit) ein Entfernen von Dichlormethan aus dem Adsorberharz und/oder eine Regeneration des Adsorberharzes (Schritt v.).

Dieser (zusätzliche) Schritt v., insbesondere das Entfernen von DCM aus dem Adsorberharz, erfolgt beispielsweise, um eine Kontamination der Rohkaffeebohnen mit DCM auszuschließen und damit das Adsorberharz wieder vollständig mit Koffein beladen werden kann. Nach Schritt iv. befindet sich regelmäßig "freies" (nicht adsorbiertes) DCM im Adsorberharz, sowohl äußerlich als auch in den Poren des Adsorberharzes. Zudem können Teile des in Schritt iv. verwendeten Dichlormethans auf der Oberfläche des Adsorberharzes adsorbiert sein.

Zum Entfernen von DCM aus dem Adsorberharz stehen insbesondere folgende Maßnahmen zur Verfügung, die in beliebiger Reihenfolge und beliebig oft durchgeführt werden können:
- Entfernen von "freiem" (nicht adsorbiertem) und nicht in Poren vorliegendem DCM aus dem Adsorberharz mittels
   o Durchleiten von Wasser durch das Adsorberharz
- Entfernen von "freiem" (nicht adsorbiertem) DCM aus den Poren des Adsorberharzes mittels
   ∘ Durchleiten von Wasser, bevorzugt von Wasser mit einer Temperatur von größer als 50 °C durch das Adsorberharz
   ∘ Durchleiten von Wasserdampf durch das Adsorberharz
- Entfernen von auf der Oberfläche des Adsorberharzes adsorbiertem DCM mittels
   ∘ Durchleiten von Wasser, bevorzugt von Wasser mit einer Temperatur von größer als 50 °C durch das Adsorberharz
   ∘ Durchleiten von Wasserdampf durch das Adsorberharz.

Vorzugsweise sollte bei Entfernen von DCM aus dem Adsorberharz so wenig wie möglich mit Wasser gearbeitet werden, da Wasser bzw. wässrige Lösungen einen Teil der adsorbierten Kaffeeinhaltsstoffe, die nicht Koffein sind, ebenfalls desorbieren kann.

Das Adsorberharz wird vorzugsweise nach mehrmaligem Kreislauf regeneriert, wobei dann bevorzugt unmittelbar zuvor DCM aus dem Adsorberharz entfernt wird. Zum Regenieren des Adsorberharzes stehen folgende Maßnahmen zur Verfügung, die in beliebiger Reihenfolge und beliebig oft durchgeführt können:
- Spülung des Adsorberharzes mit Wasser, wässrigen Lösungen oder wässriger Extraktionsflüssigkeit
- Entfernen von Gaseinschlüssen mittels Spülung des Adsorberharzes mit Wasser, wässrigen Lösungen oder wässriger Extraktionsflüssigkeit

Es ist bevorzugt, dass eine Regeneration des Adsorberharzes erst stattfindet, nachdem zunächst DCM (möglichst vollständig) aus dem Adsorberharz entfernt wird. Es ist insbesondere bevorzugt, dass am Ende von Schritt v. eine Re-Hydratisierung des Adsorberharzes erfolgt, bevorzugt erfolgt die Re-Hydratisierung mittels Spülung des Adsorberharzes mit Wasser, wässrigen Lösungen oder wässriger Extraktionsflüssigkeit.

Bevorzugt ist ein erfindungsgemäßes Verfahren mit folgendem (zusätzlichem) Schritt:
vi. Periodische Grundreinigung des Adsorberharzes mit einer Natriumhydroxid Lösung. Insbesondere nach mehrmaligem Durchführen der Verfahrensschritte iii. bis v., ist eine Grundreinigung des Adsorberharzes mit einer Natriumhydroxid Lösung sinnvoll, um die volle Koffein-Beladungskapazität des Adsorberharzes wiederzuerlangen bzw. dauerhaft aufrecht zu erhalten.

Die Erfindung wird nachfolgend unter Bezugnahme auf die beigefügten Figuren näher erläutert.

Es zeigen:
- **Fig.1:**: schematischer Aufbau einer erfindungsgemäßen Vorrichtung zur Herstellung entkoffeinierter Rohkaffeebohnen.
- **Fig. 2:**: schematische Darstellung eines (ersten) erfindungsgemäßen Verfahrens zur Herstellung entkoffeinierter Rohkaffeebohnen.
- **Fig. 3:**: schematische Darstellung eines (zweiten) erfindungsgemäßen Verfahrens zur Herstellung entkoffeinierter Rohkaffeebohnen.

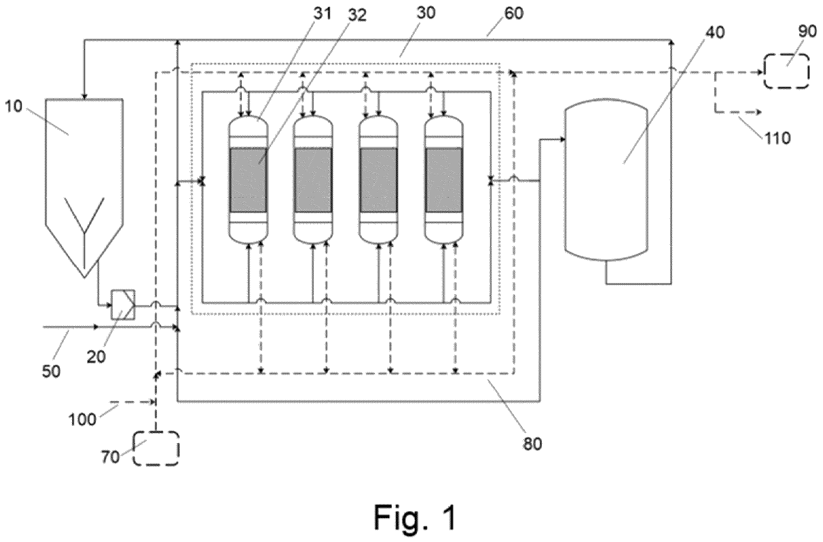

**Fig. 1** zeigt beispielhaft den schematischen Aufbau einer bevorzugten erfindungsgemäßen Vorrichtung zur Herstellung entkoffeinierter Rohkaffeebohnen. Die in Figur 1 dargestellte Vorrichtung umfasst dabei folgende Elemente: Extraktor **10,** Abscheider **20,** Adsorbtionseinheit **30,** Adsorbersäule gefüllt mit Adsorberharz **31,** Adsorberharz **32,** Vorratsbehälter für wässrige Extraktionsflüssigkeit 40, Einlass für wässrige Extraktionsflüssigkeit 50, Koffeinadsorptionskreislauf für wässrige Extraktionsflüssigkeit **60,** Vorratsbehälter für Dichlormethan **70,** Koffeindesorptionskreislauf für Dichlormethan und/oder koffeinhaltige Dichlormethanlösung bzw. Regenerationskreislauf für Spüllösungen **80,** Abtrenneinheit **90,** Einlass für Spüllösungen **100,** Auslass für Spüllösungen **110.**

Selbstverständlich ist eine erfindungsgemäße Vorrichtung nicht auf die in Figur 1 dargestellte Ausgestaltung beschränkt. Eine erfindungsgemäße Vorrichtung kann z.B. zusätzliche in Figur 1 nicht dargestellte Elemente umfassen. Auch kann die Anordnung und/oder die Anzahl einzelner Elemente in einer erfindungsgemäßen Vorrichtung von der in Figur 1 dargestellten Vorrichtung abweichen.

Die in Figur 1 dargestellte Vorrichtung eignet sich (wie jede erfindungsgemäße Vorrichtung) insbesondere dazu und ist dazu vorgesehen, ein erfindungsgemäßes Verfahren zur Herstellung entkoffeinierter Rohkaffeebohnen mit folgenden Schritten durchzuführen:
(S1) Kontaktieren einer Menge an koffeinhaltigen Rohkaffeebohnen mit einer wässrigen Extraktionsflüssigkeit, so dass Koffein aus den koffeinhaltigen Rohkaffeebohnen in die Extraktionsflüssigkeit extrahiert wird,
(S2) Kontaktieren der in Schritt S1 resultierenden, an Koffein angereicherten, wässrigen Extraktionsflüssigkeit mit einem Adsorberharz, so dass Koffein aus der Extraktionsflüssigkeit an das Adsorberharz gebunden wird,
(S3) Kontaktieren des in Schritt S2 resultierenden, mit Koffein beladenen Adsorberharzes, mit Dichlormethan, so dass Koffein im Dichlormethan gelöst wird.

Die in Figur 1 dargestellte bevorzugte Vorrichtung zur Herstellung entkoffeinierter Rohkaffeebohnen, bevorzugt zur Herstellung entkoffeinierter Rohkaffeebohnen in einem erfindungsgemäßen Verfahren umfassend die Schritte S1, S2 und S3, umfasst:
- Einen mit einer Menge an Rohkaffeebohnen befüllbaren Extraktor **10** zum Kontaktieren der Menge an koffeinhaltigen Rohkaffeebohnen mit einer wässrigen Extraktionsflüssigkeit,
- Einen Abscheider **20,** zum Abscheiden von festen Bestandteilen aus der wässrigen Extraktionsflüssigkeit, nach der Extraktion der koffeinhaltigen Rohkaffeebohnen. Der Abscheider muss nicht in jeder erfindungsgemäßen Vorrichtung vorgesehen sein; dies gilt entsprechend für sämtliche Vorrichtungselemente, die nicht in der Definition der erfindungsgemäßen Vorrichtung in den Ansprüchen genannt sind,
- Eine Adsorptionseinheit **30** mit einem Adsorberharz **32** (in Adsorbersäulen 31, dazu sogleich), zum Kontaktieren einerwässrigen, an Koffein angereicherten Extraktionsflüssigkeit mit dem Adsorberharz **32.** Dabei ist der Extraktor gemäß Fig. 1 über den Abscheider **20** so mit der Adsorptionseinheit **30** verbunden, dass wässrige, an Koffein angereicherte Extraktionsflüssigkeit aus dem Extraktor **10** in die Adsorptionseinheit **30** geleitet werden kann,
- Mit dem Adsorberharz **32** gefüllte Adsorbersäulen **31** innerhalb der Adsorptionseinheit **30.** Die Adsorbersäulen sind zur Durchleitung von wässriger Extraktionsflüssigkeit vorgesehen. Bevorzugt ist das Adsorberharz **32** ein makroporöses Adsorberharz, welches ausgewählt ist aus der Gruppe bestehend aus Polystyrol, Polydivinylbenzol sowie deren Copolymere miteinander und mit anderen Monomeren, wobei das makroporöse Adsorberharz vorzugsweise ein Polystyrol oder ein Copolymer des Polystyrol ist, bevorzugt ein vernetztes Polystyrol, besonders bevorzugt ein mit Divinylbenzol vernetztes Polystyrol, ganz besonders bevorzugt ein nicht-funktionalisiertes, nichtionisches und mit Divinylbenzol vernetztes Polystyrol ist,
- Einen Vorratsbehälter **40** für wässrige Extraktionsflüssigkeit, der so mit dem Extraktor **10** verbunden ist, dass wässrige Extraktionsflüssigkeit (gemäß Fig. 1 über entsprechende Leitungen) aus dem Vorratsbehälter **40** für wässrige Extraktionsflüssigkeit in den Extraktor **10** geleitet werden kann,
- Einen Einlass für wässrige Extraktionsflüssigkeit **50,** der so mit dem Extraktor **10,** der Adsorptionseinheit **30** und dem Vorratsbehälter **40** für wässrige Extraktionsflüssigkeit verbunden ist (gemäß Fig. 1 über entsprechende Leitungen), dass wässrige Extraktionsflüssigkeit aus dem Einlass für wässrige Extraktionsflüssigkeit 50 in die jeweiligen Elemente geleitet werden kann,
- Einen Vorratsbehälter **70** für Dichlormethan, der so mit der Adsorptionseinheit **30** verbunden ist, dass Dichlormethan in Kontakt mit dem Adsorberharz **32** gebracht werden kann,
- Eine Abtrenneinheit **90** zur Abtrennung von Koffein aus einer Dichlormethanlösung,
- Einen Einlass für Spüllösungen **100,** der so mit einem Koffeindesorptionskreislauf (siehe dazu unten) für Dichlormethan und/oder koffeinhaltige Dichlormethanlösung bzw. einem Regenerationskreislauf (siehe dazu unten) für Spüllösungen **80** und der Adsorptionseinheit **30** verbunden ist, dass Spüllösungen aus dem Einlass für Spüllösungen **100** in die Adsorptionseinheit **30** geleitet werden können,
- Einen Auslass für Spüllösungen **110,** der so mit dem Koffeindesorptionskreislauf für Dichlormethan und/oder koffeinhaltige Dichlormethanlösung bzw. Regenerationskreislauf für Spüllösungen **80** und der Adsorptionseinheit **30** verbunden ist, dass Spüllösungen aus der Adsorptionseinheit 30 über den Auslass für Spüllösungen **110** aus der Vorrichtung herausgeleitet werden können,
- Ein oder mehr Fördereinrichtungen zum Fördern von Flüssigkeit innerhalb der Vorrichtung (in Figur 1 nicht abgebildet),
- Ein oder mehr Ventileinrichtungen zum gezielten Öffnen und Schließen von Leitungen, Leitungsabschnitten und sonstigen Vorrichtungselementen (in Figur 1 nicht abgebildet),
- Ein oder mehrere Steuerungseinrichtungen (in Figur 1 nicht abgebildet)
   zum Steuern der Förderung von wässriger Extraktionsflüssigkeit und/oder von Dichlormethan innerhalb der Vorrichtung (die Steuerungseinrichtungen wirken dabei mit den Fördereinrichtungen und den Ventileinrichtungen in üblicher Weise zusammen, so dass das erfindungsgemäße Verfahren in der erfindungsgemäßen Vorrichtung durchgeführt werden kann)
      und/oder
   zum automatischen Umschalten von Schritt S2 zu Schritt S3 im erfindungsgemäßen Verfahren, sobald ein vorbestimmter Fortschritt der Extraktion in Schritt S1 erreicht ist und/oder sobald in Schritt S2 eine vorbestimmte Beladung des Adsorberharzes **32** mit Koffein erreicht ist (die Steuerungseinrichtungen wirken dabei mit ein oder mehreren Mess- und Auswerteeinrichtungen zusammen, welche den Fortschritt der Extraktion bzw. den Beladungszustand bestimmen).

Die in Figur 1 dargestellte erfindungsgemäße Vorrichtung ist dazu eingerichtet, eine wässrige Extraktionsflüssigkeit im Kreislauf zu fördern, wobei der Extraktor **10**, die Adsorptionseinheit **30** und der Vorratsbehälter **40** fürwässrige Extraktionsflüssigkeit Teil des Kreislaufs sind (Koffeinadsorptionskreislauf **60**). Über eine nicht eingezeichnete Bypass-Leitung kann der Vorratsbehälter alternativ umfahren werden.

Die in Figur 1 dargestellte erfindungsgemäße Vorrichtung ist zudem dazu eingerichtet, Dichlormethan und/oder koffeinhaltige Dichlormethanlösung durch die Adsorptionseinheit **30** zu fördern, vorzugsweise im Kreislauf **80** zu fördern (hier: Koffeindesorptionskreislauf **80**). Dabei wird Dichlormethan aus dem Vorratsbehälter **70** für Dichlormethan zur Adsorptionseinheit **30** und von dort zu der Abtrenneinheit **90** gefördert. Die Vorrichtung ist zudem dazu eingerichtet Spüllösungen im Kreislauf **80** durch die Adsorptionseinheit **30** zu fördern (hier: Regenerationskreislauf **80**). Dabei wird Spüllösung durch den Einlass **100** in den Kreislauf eingebracht und nach komplettierter Spülung durch den Auslass **110** abgeführt.

Die in Figur 1 dargestellte erfindungsgemäße Vorrichtung umfasst eine Abtrenneinheit **90** zum Abtrennen von Koffein aus einer Lösung des Koffeins in Dichlormethan und ist dazu eingerichtet, Dichlormethan aus dem Vorratsbehälter **70** für Dichlormethan zur Adsorptionseinheit **30** und von dort zu der Abtrenneinheit **90** zu fördern.

In der erfindungsgemäßen Vorrichtung gemäß Figur 1 stimmen der Koffeinadsorptionskreislauf für wässrige Extraktionsflüssigkeit **60**, der dazu eingerichtet ist, eine wässrige Extraktionsflüssigkeit im Kreislauf zu fördern und der Koffeindesorptionskreislauf für Dichlormethan und/oder koffeinhaltige Dichlormethanlösung bzw. der Regenerationskreislauf für Spüllösungen **80** im Bereich der Adsorptionseinheit 30 überein, sind aber ansonsten baulich getrennt. Ebenso sind Vorrichtungselemente, die spezifisch für den Koffeindesorptionskreislauf für Dichlormethan und/oder koffeinhaltige Dichlormethanlösung bzw. für den Regenerationskreislauf für Spüllösungen **80** vorgesehen sind, also insbesondere der Vorratsbehälter für Dichlormethan **70** und Leitungen zur Durchleitung von Dichlormethan zur Adsorptionseinheit **30**, baulich getrennt von Vorrichtungselementen, die spezifisch für den Koffeinadsorptionskreislauf für wässrige Extraktionsflüssigkeit vorgesehen sind, wie der mit einer Menge an Rohkaffeebohnen befüllbare Extraktor **10** und der Vorratsbehälter **40** für wässrige Extraktionsflüssigkeit sowie deren Zu- bzw. Ableitungen. Eine solche Ausgestaltung ist insbesondere deshalb vorteilhaft, weil so gewährleistet werden kann, dass die zur Desorption von am Adsorberharz gebundenem Koffein eingesetzte Dichlormethanlösung nicht in direkten Kontakt mit den im Extraktor **10** befindlichen Rohkaffeebohnen gelangt.

In der erfindungsgemäßen Vorrichtung gemäß Figur 1 findet der Verfahrensschritt S1 des erfindungsgemäßen Verfahrens, also das Kontaktieren einer Menge an koffeinhaltigen Rohkaffeebohnen mit einer wässrigen Extraktionsflüssigkeit, so dass Koffein aus den koffeinhaltigen Rohkaffeebohnen in die Extraktionsflüssigkeit extrahiert wird, innerhalb des Extraktors **10** statt. Hierfür ist der Extraktor **10** mit Rohkaffeebohnen befüllt. Zudem ist der Extraktor mit Ein- bzw. Auslässen für die Zu- bzw. Ableitung einer wässrigen Extraktionsflüssigkeit ausgestattet. Die Zuleitung der wässrigen Extraktionsflüssigkeit in den Extraktor **10** erfolgt dabei innerhalb des Koffeinadsorptionskreislaufs **60** für wässrige Extraktionsflüssigkeit durch eine oder mehrere Leitungen, die entweder aus dem Vorratsbehälter **40** für wässrige Extraktionsflüssigkeit und/oder der Adsorptionseinheit **30** mit wässriger Extraktionsflüssigkeit gespeist werden.

In der erfindungsgemäßen Vorrichtung gemäß Figur 1 findet der Verfahrensschritt S2 des erfindungsgemäßen Verfahrens innerhalb der Adsorptionseinheit **30** statt, also das Kontaktieren der in Schritt S1 resultierenden, an Koffein angereicherten, wässrigen Extraktionsflüssigkeit mit einem Adsorberharz **32**, so dass Koffein aus der Extraktionsflüssigkeit an das Adsorberharz **32** gebunden wird. Hierfür sind die Adsorbersäulen **31** innerhalb der Adsorptionseinheit **30** mit Adsorberharz **32** befüllt, bevorzugt mit einem Adsorberharz **32**, welches vorbeladen ist mit einzelnen oder mehreren Kaffeeinhaltsstoffen, die nicht Koffein sind, ausgewählt aus der Gruppe bestehend aus Säuren, Mineralien, Aromastoffe, durch Maillard-Reaktion in Aromastoffe überführbare Verbindungen, und Antioxidantien. Die in Schritt S1 resultierende, an Koffein angereicherte, wässrige Extraktionsflüssigkeit wird aus dem Extraktor 10 über entsprechende Leitungen in die Adsorptionseinheit 30 geleitet, wo sie mit Adsorberharz **32** kontaktiert wird. Entsprechende Leitungen innerhalb der Adsorptionseinheit **30**, insbesondere Leitungen zwischen den mit Adsorberharz **32** befüllten Adsorbersäulen **31**, gewährleisten hierbei das Durchleiten der an Koffein angereicherten, wässrigen Extraktionsflüssigkeit über das Adsorberharz **32**. Die vor Schritt S2 an Koffein angereicherte, wässrige Extraktionsflüssigkeit wird durch das Kontaktieren mit Adsorberharz **32** an Koffein abgereichert; das Adsorberharz **32** bindet/adsorbiert das Koffein aus der wässrigen Extraktionsflüssigkeit. Die nach Schritt S2 resultierende, an Koffein abgereicherte wässrige Extraktionsflüssigkeit wird bevorzugt über entsprechende Leitungen erneut dem Extraktor **10** zugeführt, um dort erneut für den Verfahrensschritt S1 des erfindungsgemäßen Verfahrens eingesetzt zu werden (Kreislaufprozess durch den Koffeinadsorptionskreislauf **60** für wässrige Extraktionsflüssigkeit).

In der erfindungsgemäßen Vorrichtung gemäß Figur 1 findet der Verfahrensschritt S3 des erfindungsgemäßen Verfahrens innerhalb der Adsorptionseinheit **30** statt, also das Kontaktieren des in Schritt S2 resultierenden, mit Koffein beladenen Adsorberharzes **32** mit Dichlormethan, so dass Koffein im Dichlormethan gelöst wird. Die für Schritt S2 ausgeführte Ausgestaltung der Adsorptionseinheit **30** gilt hier entsprechend. Zur Kontaktierung mit dem mit Koffein beladenen Adsorberharz **32** wird Dichlormethan aus dem Vorratsbehälter **70** für Dichlormethan über entsprechende Leitungen in die Adsorptionseinheit **30** geleitet, wo es mit dem mit Koffein beladenem Adsorberharz **32** kontaktiert wird. Entsprechende Leitungen innerhalb der Adsorptionseinheit **30**, insbesondere Leitungen zwischen den mit Adsorberharz **32** befüllten Adsorbersäulen **31**, gewährleisten hierbei das Durchleiten von Dichlormethan über das Adsorberharz **32**. Das vor Schritt S3 mit Koffein beladene Adsorberharz **32** desorbiert Koffein bei Durchleiten von Dichlormethan, so dass Koffein im Dichlormethan gelöst wird und eine koffeinhaltige Dichlormethanlösung resultiert. Diese nach Schritt S3 resultierende koffeinhaltige Dichlormethanlösung wird bevorzugt über entsprechende Leitungen von der Adsorptionseinheit **30** zur Abtrenneinheit **90** gefördert (siehe Koffeindesorptionskreislauf **80** in Figur 1).

In der erfindungsgemäßen Vorrichtung gemäß Figur 1 findet der optionale (zusätzliche) Verfahrensschritt S4, also das Behandeln des Adsorberharzes **32** zum Entfernen von Dichlormethan und/oderzum Regenerieren der Beladbarkeit des Adsorberharzes **32** mit Koffein unter den Bedingungen des Schrittes S2 ebenfalls in der Adsorptionseinheit **30** statt. Zur Durchleitung entsprechender (vorzugsweise erwärmter, wässriger) Spüllösungen oder von Wasserdampf über das Adsorberharz **32** wird bevorzugt das Leitungssystem des Koffeindesorptionskreislaufs **80** verwendet (hier: Regenerationskreislauf **80**). Entsprechende Spüllösungen werden in diesem Fall durch den Einlass **100** in den Regenerationskreislauf **80** eingebracht, der Adsorptionseinheit **30** zugeführt und nach erfolgter Behandlung des Adsorberharzes **32** zum Entfernen von Dichlormethan und/oder zum Regenerieren des Adsorberharzes **32** durch den Auslass **110** aus der Vorrichtung abgeführt.

Entsprechende (in Figur 1 nicht abgebildete) Fördereinrichtungen zum Fördern von Flüssigkeit innerhalb der Vorrichtung, Ventileinrichtungen zum gezielten Öffnen und Schließen von Leitungen, Leitungsabschnitten und sonstigen Vorrichtungselementen und Steuerungseinrichtungen zum Steuern der Förderung von wässriger Extraktionsflüssigkeit und/oder von Dichlormethan und/oder von Spüllösungen innerhalb der Vorrichtung sorgen dafür, dass der Koffeinadsorptionskreislauf **60** für wässrige Extraktionsflüssigkeit und der Koffeindesorptionskreislauf für Dichlormethan und/oder koffeinhaltige Dichlormethanlösung bzw. der Regenerationskreislauf für Spüllösungen **80** voneinander getrennt werden. So kann vollständig oder zumindest weitestgehend vermieden werden, dass die im Extraktor **10** befindlichen Rohkaffeebohnen in direkten Kontakt mit Dichlormethan und/oder Spüllösungen kommen. Hierdurch wird eine Kontamination der Rohkaffeebohnen mit Dichlormethan vollständig oder zumindest weitgehend vermieden. Dies ist insbesondere im Hinblick auf die oben beschriebenen Bedenken der Verbraucher hinsichtlich organischer Lösungsmittelreste in Kaffeeprodukten ein besonders entscheidender Aspekt der vorliegenden Erfindung.

Zugleich kann mit der erfindungsgemäßen Vorrichtung gemäß Figur 1 die wässrige Extraktionsflüssigkeit ein oder mehrfach im Kreis gefördert werden, wobei vorzugsweise die in Schritt S2 resultierende, an Koffein abgereicherte, wässrige Extraktionsflüssigkeit oder ein Aufbereitungsprodukt davon in Schritt S1 erneut als wässrige Extraktionsflüssigkeit eingesetzt wird. Dies führt zu einem besonders effizienten Wasserentkoffeinierungsprozess.

Die in Figur 1 gezeigte Vorrichtung ist zudem exemplarisch für die Verwendung eines geeigneten Adsorberharzes in einem erfindungsgemäßen Verfahren als eine Art "Koffeinzwischenspeicher" mit der hier neu entwickelten und technisch vorteilhaften zweistufigen Extraktionsfolge "Flüssig-Fest" (Beladungsschritt S2; wässrige Extraktionsflüssigkeit/Adsorberharz) plus "Fest-Flüssig" (Entladungsschritt S3; beladenes Adsorberharz/DCM) zur Entfernung und Gewinnung von Koffein aus einer wässrigen Extraktionsflüssigkeit und somit zur effizienten Herstellung qualitativ hochwertiger entkoffeinierter Rohkaffeebohnen.

### Bezuaszeichenliste zu Fig. 1:

- **10**: Extraktor
- **20**: Abscheider
- **30**: Adsorbtionseinheit
- **31**: Adsorbersäule gefüllt mit Adsorberharz
- **32**: Adsorberharz
- **40**: Vorratsbehälter für wässrige Extraktionsflüssigkeit
- **50**: Einlass für wässrige Extraktionsflüssigkeit
- **60**: Koffeinadsorptionskreislauf für wässrige Extraktionsflüssigkeit
- **70**: Vorratsbehälter für Dichlormethan
- **80**: Koffeindesorptionskreislauf für Dichlormethan und/oder koffeinhaltige Dichlormethanlösung bzw. Regenerationskreislauf für Spüllösungen
- **90**: Abtrenneinheit
- **100**: Einlass für Spüllösungen
- **110**: Auslass für Spüllösungen

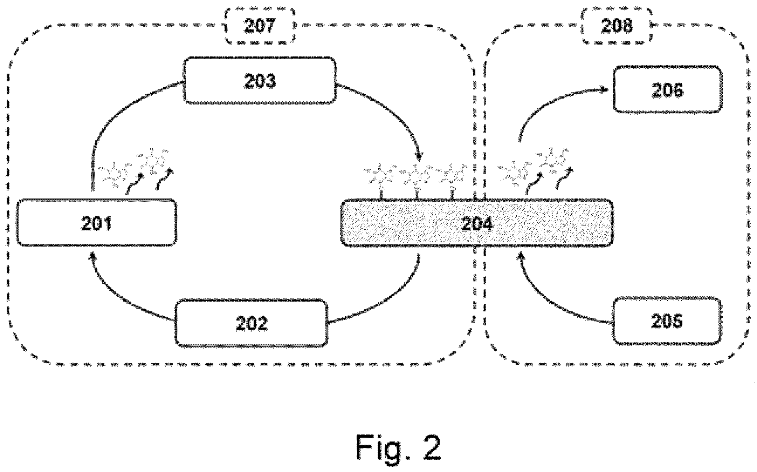

**Fig. 2** zeigt im schematischen Fließbild eine erste Ausführungsform eines erfindungsgemäßen Verfahrens zur Herstellung entkoffeinierter Rohkaffeebohnen. Vorzugsweise wird das erfindungsgemäße Verfahren zur Herstellung entkoffeinierter Rohkaffeebohnen in einer erfindungsgemäßen Vorrichtung zur Herstellung entkoffeinierter Rohkaffeebohnen (wie vorstehend beschrieben, vorzugsweise wie vorstehend als bevorzugt bezeichnet) durchgeführt, beispielsweise in einer Vorrichtung gemäß Figur 1 (siehe die entsprechende Beschreibung).

In einem ersten Schritt S1 des Verfahrens wird eine Menge an koffeinhaltigen Rohkaffeebohnen **201** mit einer wässrigen Extraktionsflüssigkeit **202** kontaktiert, so dass Koffein aus den koffeinhaltigen Rohkaffeebohnen **201** in die Extraktionsflüssigkeit extrahiert wird. Die in Schritt S1, d.h. dem Kontaktieren mit den koffeinhaltigen Rohkaffeebohnen **201** resultierende, an Koffein angereicherte, wässrige Extraktionsflüssigkeit **203** wird in einem nächsten Schritt S2 mit einem Adsorberharz **204** kontaktiert, so dass Koffein aus der an Koffein angereicherten, wässrigen Extraktionsflüssigkeit **203** an das Adsorberharz **204** gebunden wird.

Bevorzugt ist das in Schritt S2 eingesetzte Adsorberharz 204 ein makroporöses Adsorberharz, welches ausgewählt ist aus der Gruppe bestehend aus Polystyrol, Polydivinylbenzol sowie deren Copolymere miteinander und mit anderen Monomeren, wobei das makroporöse Adsorberharz vorzugsweise ein Polystyrol oder ein Co-polymerdes Polystyrol ist, bevorzugt ein vernetztes Polystyrol, besonders bevorzugt ein mit Divinylbenzol vernetztes Polystyrol, ganz besonders bevorzugt ein nicht-funktionalisiertes, nichtionisches und mit Divinylbenzol vernetztes Polystyrol.

Bevorzugt ist das in Schritt S2 eingesetzte Adsorberharz **204** vorbeladen mit einzelnen oder mehreren Kaffeeinhaltsstoffen, die nicht Koffein sind, ausgewählt aus der Gruppe bestehend aus Säuren, Mineralien, Aromastoffe, durch Maillard-Reaktion in Aromastoffe überführbare Verbindungen, und Antioxidantien, so dass eine Bindung von entsprechenden Kaffeeinhaltsstoffen aus der an Koffein angereicherten, wässrigen Extraktionsflüssigkeit **203** an das Adsorberharz **204** verhindert oder erschwert wird.

Bevorzugt wird die wässrige Extraktionsflüssigkeit nach Kontaktieren mit dem Adsorberharz **204** als an Koffein abgereicherte wässrige Extraktionslösung **202** erneut mit einer Menge an koffeinhaltigen Rohkaffeebohnen **201** kontaktiert, so dass Koffein aus den koffeinhaltigen Rohkaffeebohnen **201** in die Extraktionsflüssigkeit extrahiert wird.

Besonders bevorzugt wird die wässrige Extraktionsflüssigkeit **202/203** in einem kontinuierlichen oder semi-kontinuierlichen Verfahren ein oder mehrfach im Kreis gefördert (wässriger Extraktionskreislauf **207**), wobei vorzugsweise die an Koffein abgereicherte, wässrige Extraktionsflüssigkeit **202** oder ein Aufbereitungsprodukt davon ein- oder mehrfach erneut als wässrige Extraktionsflüssigkeit zur Extraktion von Koffein aus den koffeinhaltigen Rohkaffeebohnen **201** eingesetzt wird.

In einem weiteren Schritt des Verfahrens (entsprechend einem spezifischen Schritt S3 des erfindungsgemäßen Verfahrens) wird das mit Koffein beladene Adsorberharz **204** mit Dichlormethan **205** kontaktiert, so dass Koffein im Dichlormethan gelöst wird und eine koffeinhaltige Dichlormethanlösung **206** resultiert (Desorption von am Adsorberharz gebundenem Koffein in Koffein-Desorptionsschritt **208**). Die resultierende koffeinhaltige Dichlormethanlösung **206** wird bevorzugt einer Abtrenneinheit (nicht in Figur 2 eingezeichnet) zugeführt, um Koffein bzw. Koffeinkonzentrat aus der koffeinhaltige Dichlormethanlösung **206** zu gewinnen.

Mittels des in Figur 2 gezeigten Verfahrens können also entkoffeinierte Rohkaffeebohnen (durch Verfahrensschritte im wässrigen Extraktionskreislauf **207**) und zudem Koffein bzw. Koffeinkonzentrat (durch Verfahrensschritte im Koffein-Desorptionsschritt **208**) als Produkt gewonnen werden. Das erfindungsgemäße Verfahren ist also besonders wirtschaftlich, da in verfahrenstechnisch gut umsetzbarer Weise nicht nur ein, sondern zwei qualitativ hochwertige und werthaltige Produkte hergestellt werden (können), nämlich entkoffeinierte Rohkaffeebohnen (erstes Produkt) und Koffein bzw. Koffeinextrakt (zweites Produkt).

Die Rohkaffeebohnen **201** kommen dabei nicht in direkten Kontakt mit Dichlormethan **205**. Hierdurch wird eine Kontamination der Rohkaffeebohnen **201** mit Dichlormethan **205** vollständig oder zumindest weitgehend vermieden. Dies ist insbesondere im Hinblick auf die oben beschriebenen Bedenken der Verbraucher hinsichtlich organischer Lösungsmittelreste in Kaffeeprodukten ein besonders entscheidender Aspekt der vorliegenden Erfindung.

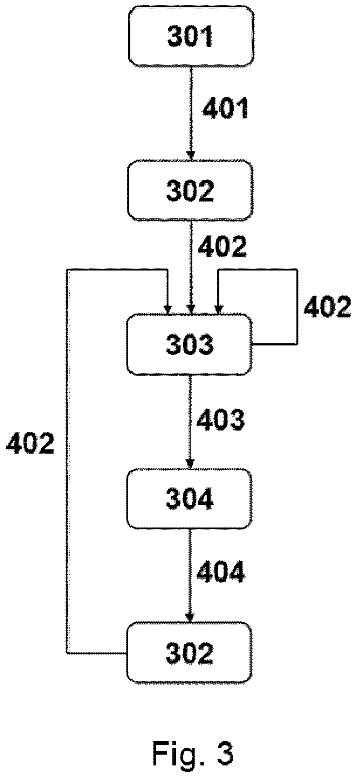

**Fig. 3** zeigt im Fließbild eine weitere Ausführungsform eines erfindungsgemäßen Verfahrens zur Herstellung entkoffeinierter Rohkaffeebohnen. Vorzugsweise wird dabei das erfindungsgemäße Verfahren zur Herstellung entkoffeinierter Rohkaffeebohnen in einer erfindungsgemäßen Anlage zur Herstellung entkoffeinierter Rohkaffeebohnen (wie vorstehend beschrieben, vorzugsweise wie vorstehend als bevorzugt bezeichnet) durchgeführt, beispielsweise in einer Vorrichtung gemäß Figur 1 (siehe die entsprechende Beschreibung).

In einem ersten Schritt **401** des in Figur 3 gezeigten Verfahrens wird ein hergestelltes oder bereitgestelltes Adsorberharz **301** mit einzelnen oder mehreren Kaffeeinhaltsstoffen, die nicht Koffein sind, vorbeladen, bevorzugt gesättigt. Bevorzugt erfolgt der Schritt **401** mittels Kontaktieren einer hergestellten oder bereitgestellten wässrigen Lösung umfassend einzelne oder mehrere Kaffeeinhaltsstoffe, die nicht Koffein sind, ausgewählt aus der Gruppe bestehend aus Säuren, Mineralien, Aromastoffen, durch Maillard-Reaktion in Aromastoffe überführbare Verbindung, und Antioxidantien mit dem hergestellten oder bereitgestellten Adsorberharz **301**, so dass ein mit Kaffeeinhaltsstoffen vorbeladenes Adsorberharz **302** resultiert, welches vorbeladen ist mit einzelnen oder mehreren Kaffeeinhaltsstoffen, die nicht Koffein sind, ausgewählt aus der Gruppe bestehend aus Säuren, Mineralien, Aromastoffe, durch Maillard-Reaktion in Aromastoffe überführbare Verbindungen, und Antioxidantien.

Das hergestellte oder bereitgestellte Adsorberharz **301** ist dabei bevorzugt ein makroporöses Adsorberharz, welches ausgewählt ist aus der Gruppe bestehend aus Polystyrol, Polydivinylbenzol sowie deren Copolymere miteinander und mit anderen Monomeren, wobei das makroporöse Adsorberharz vorzugsweise ein Polystyrol oder ein Copolymer des Polystyrol ist, bevorzugt ein vernetztes Polystyrol, besonders bevorzugt ein mit Divinylbenzol vernetztes Polystyrol, ganz besonders bevorzugt ein nicht-funktionalisiertes, nichtionisches und mit Divinylbenzol vernetztes Polystyrol.

In einem nächsten Schritt **402** des Verfahrens (entsprechend einem spezifischen Schritt S2 des erfindungsgemäßen Verfahrens) wird das mit Kaffeeinhaltsstoffen vorbeladene Adsorberharz **302** mit einer an Koffein angereicherten, wässrigen Extraktionsflüssigkeit kontaktiert, wobei diese an Koffein angereicherte, wässrige Extraktionsflüssigkeit durch vorheriges Kontaktieren einer wässrigen (noch nicht an Koffein angereicherten) Extraktionsflüssigkeit mit einer Menge an koffeinhaltigen Rohkaffeebohnen erhalten wurde (entsprechend der vorherigen Durchführung eines Schrittes S1 des erfindungsgemäßen Verfahrens). Durch Kontaktieren des mit Kaffeeinhaltsstoffen vorbeladenen Adsorberharzes **302** mit der an Koffein angereicherten, wässrigen Extraktionsflüssigkeit in Schritt **402** wird Koffein aus der Extraktionsflüssigkeit an das Adsorberharz gebunden, so dass ein mit Kaffeeinhaltsstoffen und Koffein beladenes Adsorberharz **303** resultiert.

Vorzugsweise wird der Schritt **402** in einem kontinuierlichen oder semi-kontinuierlichen Verfahren ein- oder mehrfach durchgeführt, besonders bevorzugt so oft durchgeführt, bis eine vorbestimmte Beladung des Adsorberharzes mit Koffein erreicht ist, ganz besonders bevorzugt so oft durchgeführt, bis das Adsorberharz mit Koffein gesättigt ist. Die mehrfache Durchführung ist in Figur 3 schematisch angedeutet durch eine vom mit Kaffeeinhaltsstoffen und Koffein beladenen Adsorberharz **303** ausgehende und dahin zurückgeführte Prozesslinie mit Bezugszeichen **402**.

In einem nächsten Schritt **403** des Verfahrens wird das mit Kaffeeinhaltsstoffen und Koffein beladene Adsorberharz **303** mit Dichlormethan kontaktiert, so dass Koffein im Dichlormethan gelöst wird und hierdurch eine mit Kaffeeinhaltsstoffen beladene und mit Dichlormethan umspülte Form des Adsorberharzes **304** resultiert (entsprechend einem spezifischen Schritt S3 des erfindungsgemäßen Verfahrens).

In einem nächsten Schritt **404** des Verfahrens erfolgt ein Behandeln der mit Kaffeeinhaltsstoffen beladenen und mit Dichlormethan umspülten Form des Adsorberharzes **304**. Dieser Schritt **404** umfasst das Entfernen von Dichlormethan und/oder (bevorzugt "und") das Regenerieren der Beladbarkeit des Adsorberharzes mit Koffein zur Vorbereitung eines (erneuten) Verfahrensschrittes **402**. Bevorzugt wird der Schritt **404** so durchgeführt, dass das Adsorberharz hierdurch in die mit Kaffeeinhaltsstoffen vorbeladene Form 302 überführt wird und erneut in einem Verfahrensschritt 402 eingesetzt werden kann, also erneut zur Bindung von Koffein aus einer koffeinhaltigen wässrigen Extraktionslösung eingesetzt werden kann. Das erneute Einsetzen des Adsorberharzes in seiner mit Kaffeeinhaltsstoffen vorbeladenen Form **302** in Verfahrensschritt **402** ist in Figur 3 schematisch angedeutet durch eine Prozesslinie, die links vom unten eingezeichneten, mit Kaffeeinhaltsstoffen vorbeladenen Adsorberharz **302** nach oben zum mit Kaffeeinhaltsstoffen und Koffein beladenen Adsorberharz **303** führt.

Bevorzugt umfasst der Schritt **404** eine oder mehrere der folgenden Maßnahmen:
- Behandeln des Adsorberharzes mit flüssigem Wasser oder einer wässrigen Lösung, bevorzugt bei einer Wassertemperatur von zumindest 70 °C, besonders bevorzugt von zumindest 85 °C, so dass DCM aus dem Adsorberharz entfernt wird, vorzugsweise aus Poren des Adsorberharzes entfernt wird,
- Behandeln des Adsorberharzes mit Wasserdampf, so dass DCM aus dem Adsorberharz entfernt wird, vorzugsweise aus Poren des Adsorberharzes entfernt wird,
- zum Regenerieren der Beladbarkeit des Adsorberharzes mit Koffein Behandeln des Adsorberharzes mit einer wässrigen, alkalischen Lösung, vorzugsweise einer Natriumhydroxid enthaltenden wässrigen Lösung.

Das in Figur 3 gezeigte Verfahren ist exemplarisch für die erfindungsgemäße Verwendung eines geeigneten Adsorberharzes als eine Art "Koffeinzwischenspeicher" mit der im Rahmen der vorliegenden Erfindung neu entwickelten und technisch vorteilhaften zweistufigen Extraktionsfolge zur Entfernung und Gewinnung von Koffein aus einer wässrigen Extraktionsflüssigkeit: "Flüssig-Fest" (Beladungsschritt; Verfahrensschritt **402**; an Koffein angereicherte wässrige Extraktionsflüssigkeit/Adsorberharz) plus "Fest-Flüssig" (Entladungsschritt; Verfahrensschritt **403**; beladenes Adsorberharz/DCM).

Das in Figur 3 gezeigte Verfahren ist zudem exemplarisch dafür, dass durch die (selektive) Desorption von an Adsorberharz gebundenem Koffein mittels Dichlormethan, das Adsorberharz von Koffein befreit oder entladen wird und somit erneut für die Adsorption von Koffein eingesetzt werden kann (effizienter Kreislaufprozess). Das Adsorberharz kann also erneut (und mehrfach) dazu eingesetzt werden, Koffein (selektiv) aus einer wässrigen Extraktionsflüssigkeit zu binden und anschließend (selektiv) an Dichlormethan abzugeben. Das erfindungsgemäße Verfahren ermöglicht so die effiziente Herstellung von qualitativ hochwertigen entkoffeinierten Rohkaffeebohnen unter Ausnutzung der Adsorptions- und Desorptionseigenschaften des Adsorberharzes.

### Beispiele:

### Beispielversuch 1 für Schritte S2 und S3 des erfindungsgemäßen Verfahrens:

*Kontaktieren einer an Koffein angereicherten, wässrigen Extraktionsflüssigkeit mit einem Adsorberharz bzw. mit einem sonstigen Adsorptionsmaterial und anschließendes Kontaktieren des resultierenden, mit Koffein beladenen Adsorberharzes bzw. des resultierenden sonstigen Adsorptionsmaterials, mit Dichlormethan.*

Es wurden folgende Adsorberharze und sonstige Adsorptionsmaterialien eingesetzt:
[1] mikroporöser aktivkohleartiger Adsorber aus kugelförmigen Partikeln eines pyrolysierten Styrol-DVB-Copolymers (LEWATIT^{®} AF 5 von Lanxess)
[2] makroporöses, monodisperses, stark saures Kationenaustauscherharz in Lebensmittelqualität auf Basis eines Styrol-Divinylbenzol-Copolymers (LEWATIT^{®} S 2568 H von Lanxess)
[3] makroporöses Adsorberharz ohne funktionelle Gruppe auf Basis eines mit Divinylbenzol vernetzten Polystyrols (LEWATIT^{®} VP OC 1064 MD PH von Lanxess)
[4] poröse Aktivkohle (ColorSorb^{™} W7 Serie von Jacobi)

Die Auswahl der Adsorbermaterialien in diesem Beispiel ist lediglich exemplarisch und auch andere Adsorbermaterialien können durch den Fachmann verwendet werden, *mutatis mutandis.*

Der hier durchgeführte Beispielversuch 1 illustriert die Identifikation und Auswahl eines besonders geeigneten Adsorptionsmaterials (nämlich Adsorberharzes) zur Durchführung eines erfindungsgemäßen Verfahrens zur Herstellung entkoffeinierter Rohkaffeebohnen, wobei das Adsorberharz in den Schritten S2 und S3 des erfindungsgemäßen Verfahrens eingesetzt wird. Soweit nicht anders angegeben war die Versuchsdurchführung jeweils identisch.

### Beladen (Adsorotion) von Adsorberharzen und sonstigen Adsorptionsmaterialien mit Koffein aus einer wässrigen Lösung:

In Beispielversuch 1 wurden verschiedene Adsorberharze bzw. sonstige Adsorptionsmaterialien auf einer Rührplatte eingewogen und mit Koffein vermischt, in einem Massenverhältnis von 7,5:1 (15 g des jeweiligen Adsorberharzes oder des jeweiligen sonstigen Adsorptionsmaterials pro 2 g Koffein). Zu dieser Mischung wurde Wasser gegeben, so dass eine Mischung aus einer koffeinhaltigen wässrigen Extraktionsflüssigkeit mit einem Adsorberharz bzw. mit einem sonstigen Adsorptionsmaterial resultierte. Diese Mischung wurde gerührt und anschließend wurde die wässrige Lösung abfiltriert. Die wässrige (abfiltrierte) Lösung wurde mittels HPLC-UV gemäß oder analog zu DIN ISO 20481 untersucht, so dass ein Rückschluss auf die Adsorptionsfähigkeit des Adsorbers getroffen werden konnte. So wurde die Adsorptionsleistung (= Koffein-Adsorptionsrate: adsorbierte Masse an Koffein pro Volumen an Adsorberharz oder sonstigem Adsorptionsmaterial) der verwendeten Materialen bestimmt.

### Lösen (Desorption) von Koffein aus den mit Koffein beladenen Adsorberharzen bzw. aus den mit Koffein beladenen Adsorptionsmaterialien:

Anschließend wurden ca. 200g Dichlormethan (DCM) zu den zuvor mit Koffein beladenen Adsorberharzen oder sonstigen Adsorptionsmaterialien hinzugegeben. Das Dichlormethan wurde abfiltriert und der Koffeingehalt der Dichlormethanlösung mittels HPLC-UV gemäß oder analog zu DIN ISO 20481 analysiert. So konnte eine DCM-Koffein-Entladungskapazität (mittels DCM desorbierte Menge an Koffein in %) der verwendeten Materialen bestimmt werden.

Analog wurden die zuvor mit Koffein beladenen Adsorberharze oder sonstigen Adsorptionsmaterialien mit Wasser einer Temperatur von 80 °C gespült. Das Wasser wurde abfiltriert und der Koffeingehalt der wässrigen Lösung wurde analysiert. So konnte eine Koffeindesorptionsrate (mittels Wasser einer Temperatur von 80 °C desorbierte Menge an Koffein in %) der verwendeten Materialen bestimmt werden.

Tabelle 1 zeigt die Ergebnisse des Beispielversuchs 1.

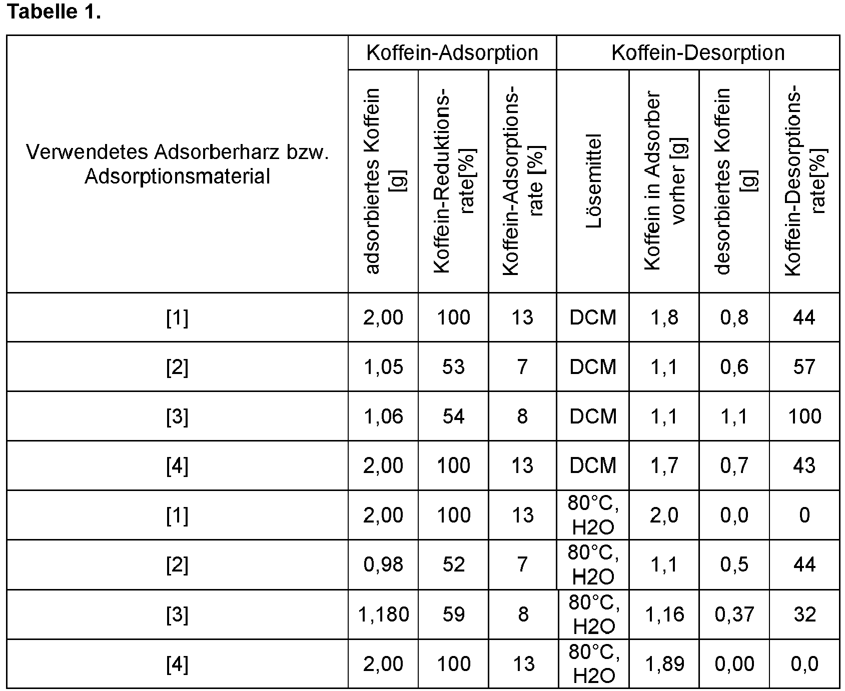

Die eingesetzten makroporösen Adsorberharze [2] und [3] haben die vorteilhafte Eigenschaft, eine große Menge an Koffein bei Kontaktieren eines zuvor mit Koffein beladenen Adsorberharzes mit Dichlormethan zu desorbieren, so dass Koffein im Dichlormethan gelöst wird. Dies ergibt sich aus der DCM-Koffein-Entladungskapazität (mittels DCM desorbierte Menge an Koffein; desorbiertes Koffein [%] in Tabelle 1), welche bei Adsorberharz [2] 57 % und bei Adsorberharz [3] 100 % beträgt.

Die eingesetzten makroporösen Adsorberharze [2] und [3] binden zudem eine ausreichend große Menge an Koffein aus einer an Koffein angereicherten, wässrigen Extraktionsflüssigkeit. Dies ergibt sich aus der prozentuellen Beladung der Adsorberharze mit dem eingesetzten Koffein (adsorbiertes Koffein [%] in Tabelle 1), welches bei Adsorberharz [2] 53 % und bei Adsorberharz [3] 54 % beträgt. Die Adsorptionsleistung (= Koffein-Beladungskapazität: adsorbierte Masse an Koffein pro Masse an Adsorberharz oder sonstigem Adsorptionsmaterial), wurde für das Adsorberharz [2] auf 7 % bestimmt und bei Adsorberharz [3] auf 8 % bestimmt. Zwar sind diese Werte niedriger als bei den Vergleichsmaterialien [1] und [4]; entscheidend ist aber primär die vorstehend diskutierte DCM-Koffein-Entladungskapazität.

Die Behandlung mit Wasser erreichte keine gute Koffein-Entladungskapazität; eine Behandlung mit Wasser ist zudem nicht selektiv.

Es hat sich somit gezeigt, dass der Einsatz eines makroporösen Adsorberharzes, welches ausgewählt ist aus der Gruppe bestehend aus Polystyrol, Polydivinylbenzol sowie deren Copolymere miteinander und mit anderen Monomeren (die verwendeten Adsorberharze [2] und [3]), besonders vorteilhaft ist, um:
i) Koffein aus einer an Koffein angereicherten, wässrigen Extraktionsflüssigkeit zu binden
   und
ii) Koffein bei Kontaktieren eines zuvor mit Koffein beladenen Adsorberharzes mit Dichlormethan zu desorbieren, so dass Koffein im Dichlormethan gelöst wird.

Es hat sich zudem gezeigt, dass der Einsatz eines makroporösen Adsorberharzes, welches ein nicht-funktionalisiertes, nichtionisches und mit Divinylbenzol vernetztes Polystyrol ist (das verwendete Adsorberharz [3]), ganz besonders vorteilhaft ist, um Koffein bei Kontaktieren eines zuvor mit Koffein beladenen Adsorberharzes mit Dichlormethan zu desorbieren, so dass Koffein im Dichlormethan gelöst wird, vgl. die DCM-Koffein-Entladungskapazität von 100% des Adsorberharzes [3].

Es hat sich weiterhin gezeigt, dass Dichlormethan besonders gut geeignet ist, um Koffein von einem zuvor mit Koffein beladenem Adsorberharz zu desorbieren. Dies ist ein großer Vorteil des erfindungsgemäßen Verfahrens, insbesondere von Schritt S3, gegenüber aus dem Stand der Technik bekannten Verfahren (vgl. u.a. DE 2600492 A1 und DE 2832267 A1).

Der Einsatz von Wasser einer Temperatur von 80 °C hingegen zeigte eine wesentlich schlechtere Performance.

### Beispielversuch 2: Adsorption von Koffein an einem Adsorberharz durch Kontaktieren einer an Koffein angereicherten, wässrigen Extraktionsflüssigkeit mit einem Adsorberharz

Es wurden folgende Adsorberharze eingesetzt:
[1] makroporöses Adsorberharz ohne funktionelle Gruppe, nichtionisch, auf Basis eines mit Divinylbenzol vernetztem Polystyrols (Purolite^{®} XFP2700)
[2] makroporöses Adsorberharz ohne funktionelle Gruppe, nichtionisch, auf Basis von Polydivinylbenzol (PuroSorb^{™} PAD500 von Purolite)
[3] makroporöses Adsorberharz ohne funktionelle Gruppe, nichtionisch, auf Basis eines mit Divinylbenzol vernetztem Polystyrols (LEWATIT^{®} VP OC 1064 MD PH von Lanxess)
[4] makroporöses Adsorberharz ohne funktionelle Gruppe, nichtionisch, auf Basis eines mit Divinylbenzol vernetztem Polystyrols (Macronet^{™} MN202 von Purolite)
[5] makroporöses Adsorberharz ohne funktionelle Gruppe, nichtionisch, auf Basis von Polydivinylbenzol (PuroSorb^{™}PAD600 von Purolite)
[6] makroporöses Adsorberharz mit tertiären Aminogruppen funktionalisiert, basisch, auf Basis eines mit Divinylbenzol vernetztem Polystyrols (Macronet^{™} MN102 von Purolite)
[7] makroporöses Adsorberharz mit tertiären Aminogruppen funktionalisiert, basisch, auf Basis eines mit Divinylbenzol vernetztem Polystyrols (Macronet^{™} MN150 von Purolite)
[8] makroporöses Adsorberharz mit Sulfonsäuregruppen funktionalisiert, sauer, auf Basis eines mit Divinylbenzol vernetztem Polystyrols (Purolite^{®} C160H von Purolite)
[9] makroporöses Adsorberharz mit Sulfonsäuregruppen funktionalisiert, sauer, auf Basis eines mit Divinylbenzol vernetztem Polystyrols (Macronet ^{™} MN502 von Purolite)

Die Auswahl der Adsorberharze in diesem Beispielversuch 2 ist lediglich exemplarisch und auch andere Adsorberharze können durch den Fachmann in analoger Weise untersucht werden.

In Beispielversuch 2 wurden unterschiedliche Adsorberharze hinsichtlich ihrer Koffein-Adsorptionsleistung analysiert. Soweit nicht anders angegeben war die Versuchsdurchführung jeweils identisch. Es wurde eine an Koffein angereicherte, wässrige Extraktionsflüssigkeit mit einer Koffeinkonzentration von 1500 mg/L hergestellt. 40 g dieser an Koffein angereicherten, wässrige Extraktionsflüssigkeit wurden mit je 1 g bzw. 5 g des jeweiligen Adsorberharzes vermengt und die resultierende Mischung aus Adsorberharz und an Koffein angereicherter, wässriger Extraktionsflüssigkeit wurde jeweils für eine Stunde inkubiert. Der Koffeingehalt der wässrigen Extraktionsflüssigkeit wurde nach einer Inkubationszeit von einer Stunde mittels HPLC-UV gemäß oder analog zu DIN ISO 20481 analysiert. Hieraus wurden dann entsprechende Koffein-Reduktionsraten (reduzierte Menge an Koffein nach einer Stunde Inkubationszeit der wässrigen Extraktionsflüssigkeit mit dem jeweiligen Adsorberharz in %) und Koffein-Adsorptionsraten (adsorbierte Masse an Koffein pro Masse an verwendetem Adsorberharz in %) berechnet.

Tabelle 2 zeigt die Ergebnisse der Abnahme des Koffeingehalts in der wässrigen Extraktionsflüssigkeit bei Einsatz unterschiedlicher Adsorberharze (Koffein-Reduktionsraten).

Tabelle 3 zeigt die Ergebnisse der Aufnahme von Koffein aus der wässrigen Extraktionsflüssigkeit bei Einsatz unterschiedlicher Adsorberharze (Koffein-Adsorptionsraten).

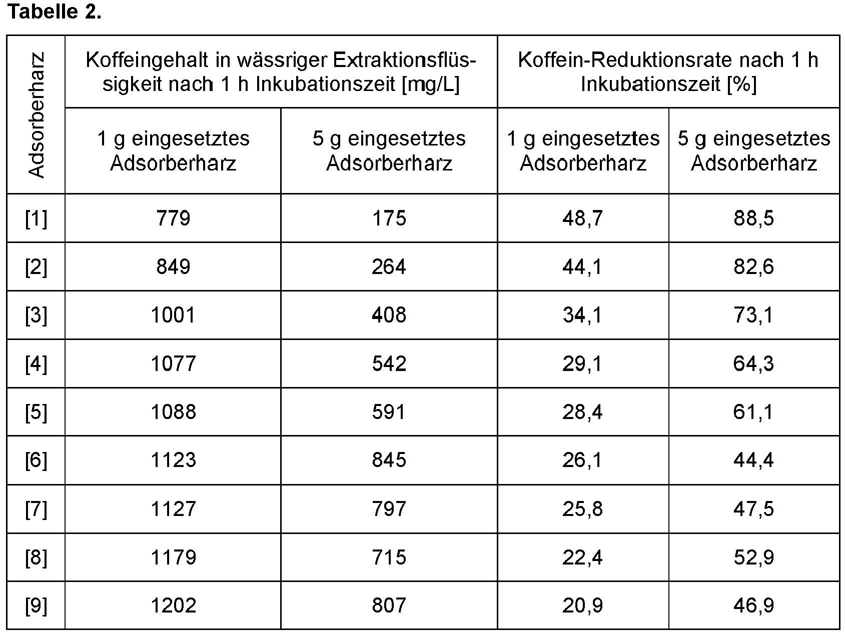

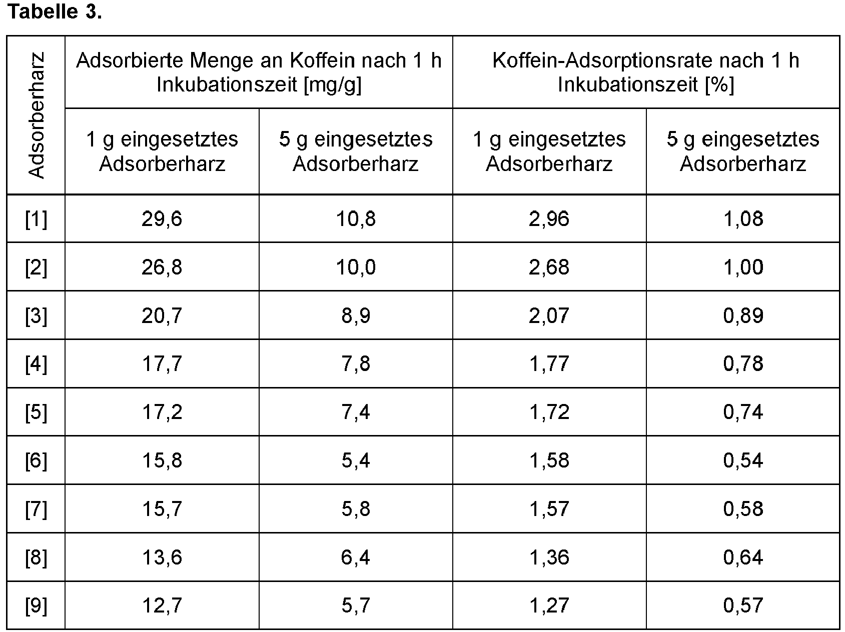

Sämtliche der hier eingesetzten makroporösen Adsorberharze [1] bis [9] sind dazu in der Lage, eine Menge an Koffein aus einer an Koffein angereicherten, wässrigen Extraktionsflüssigkeit zu binden (gemäß Schritt S2 des erfindungsgemäßen Verfahrens).

Hierbei wird der Koffeingehalt einer koffeinhaltigen wässrigen Extraktionsflüssigkeit deutlich gesenkt. Die Koffein-Reduktionsraten (reduzierte Menge an Koffein nach einer Stunde Inkubationszeit der wässrigen Extraktionsflüssigkeit mit dem jeweiligen Adsorberharz in %) liegen im Bereich zwischen 20,9 % und 48,7 % (bei Einsatz von je 1 g Adsorberharz) bzw. im Bereich zwischen 44,4 % und 88,5 % (bei Einsatz von je 5 g Adsorberharz).

Entsprechend sind sämtliche der hier eingesetzten makroporösen Adsorberharze [1] bis [9] dazu in der Lage, eine Menge an Koffein zu adsorbieren (gemäß Schritt S2 des erfindungsgemäßen Verfahrens). Die Koffein-Adsorptionsraten (adsorbierte Masse an Koffein pro Masse verwendeten Adsorberharz in %) liegen im Bereich zwischen 1,27 % und 2,96 % (bei Einsatz von je 1 g Adsorberharz) bzw. im Bereich zwischen 0,54 % und 1,08 % (bei Einsatz von je 5 g Adsorberharz).

Es hat sich zudem gezeigt, dass der Einsatz eines makroporösen Adsorberharzes, welches ausgewählt ist aus der Gruppe bestehend aus Polystyrol, Polydivinylbenzol sowie deren Copolymere miteinander und mit anderen Monomeren, und welches nicht-funktionalisiert und nichtionisch ist, ganz besonders vorteilhaft ist, um bei Kontaktieren mit einer an Koffein angereicherten, wässrigen Extraktionsflüssigkeit Koffein aus der Extraktionsflüssigkeit an das Adsorberharz zu binden (vgl. die jeweils besonders guten Koffein-Reduktionsraten und Koffein-Adsorptionsraten der Adsorberharze [1] bis [5]).

### Beispielversuch 3: Adsorption von Koffein an einem Adsorberharz durch (kontinuierliches) Durchleiten einer an Koffein angereicherten, wässrigen Extraktionsflüssigkeit durch eine mit Adsorberharz befüllte Adsorbersäule

In Beispielversuch 3 wurde jeweils eine "Coextrakt-Koffeinlösung" (eine an Koffein angereicherte, wässrige Extraktionsflüssigkeit; Koffeinkonzentration: siehe die nachfolgenden Tabellenüberschriften) durch eine Adsorbersäule mit einem Volumen von 100 mL geleitet (100 mL = ein Bettvolumen, BV), wobei die Adsorbersäule jeweils mit einem Adsorberharz befüllt war. Das Adsorberharz wurde also mit einer koffeinhaltigen wässrigen Extraktionsflüssigkeit durchströmt. Jeweils nach Durchlauf von je 2,5 BV bzw. 5 BV (= Durchlauf von 250 mL bzw. 500 mL) der Coextrakt-Koffeinlösung durch die Adsorbersäule wurde eine Probe der durchgelaufen Coextrakt-Koffeinlösung entnommen und der Koffeingehalt der jeweiligen Probe gemäß oder analog zu DIN ISO 20481 analysiert. Hieraus konnten dann jeweils Rückschlüsse gezogen werden auf die
i) Menge an durchgelaufenem (nicht-adsorbiertem) Koffein,
ii) Menge an am Adsorberharz adsorbiertem Koffein pro Durchlauf von je 2,5 BV bzw. von 5 BV,
iii) akkumulierte Menge an am Adsorberharz adsorbiertem Koffein,
iv) die Koffeinbeladung des Adsorberharzes in g/l (Masse an adsorbiertem Koffein pro Volumen an Adsorberharz in g/l), und
v) die Koffeinbeladung des Adsorberharzes in mol/l (Menge an adsorbiertem Koffein pro Volumen an Adsorberharz in mol/l)

Es wurden folgende Adsorberharze eingesetzt:
[1] makroporöses Adsorberharz ohne funktionelle Gruppe, nichtionisch, auf Basis eines mit Divinylbenzol vernetztem Polystyrols (LEWATIT^{®} VP OC 1064 MD PH von Lanxess)
[2] mikroporöser aktivkohleartiger Adsorber aus kugelförmigen Partikeln eines pyrolisierten Styrol-DVB-Copolymers (LEWATIT^{®} AF 5 von Lanxess)
[3] makroporöses, monodisperses, stark saures Kationenaustauscherharz in Lebensmittelqualität auf Basis eines Styrol-Divinylbenzol-Copolymers (LEWATlT^{®} S 2568 H von Lanxess)
[4] makroporöses, monodisperses, stark saures Kationenaustauscherharz in Lebensmittelqualität auf Basis eines Styrol-Divinylbenzol-Copolymers (LEWATIT^{®} S 2568, Lieferform Na⁺ von Lanxess)
[5] makroporöses Adsorberharz ohne funktionelle Gruppe, nichtionisch, auf Basis eines mit Divinylbenzol vernetztem Polystyrols (Macronet^{™} MN270 von Purolite)

Die Auswahl der Adsorberharze in diesem Beispielversuch 3 ist lediglich exemplarisch und auch andere Adsorberharze können durch den Fachmann in analoger Weise untersucht werden.

Die Tabellen 4 bis 8 zeigen die jeweiligen Ergebnisse von Beispielversuch 3 bei Einsatz von Adsorberharzen [1] bis [5].

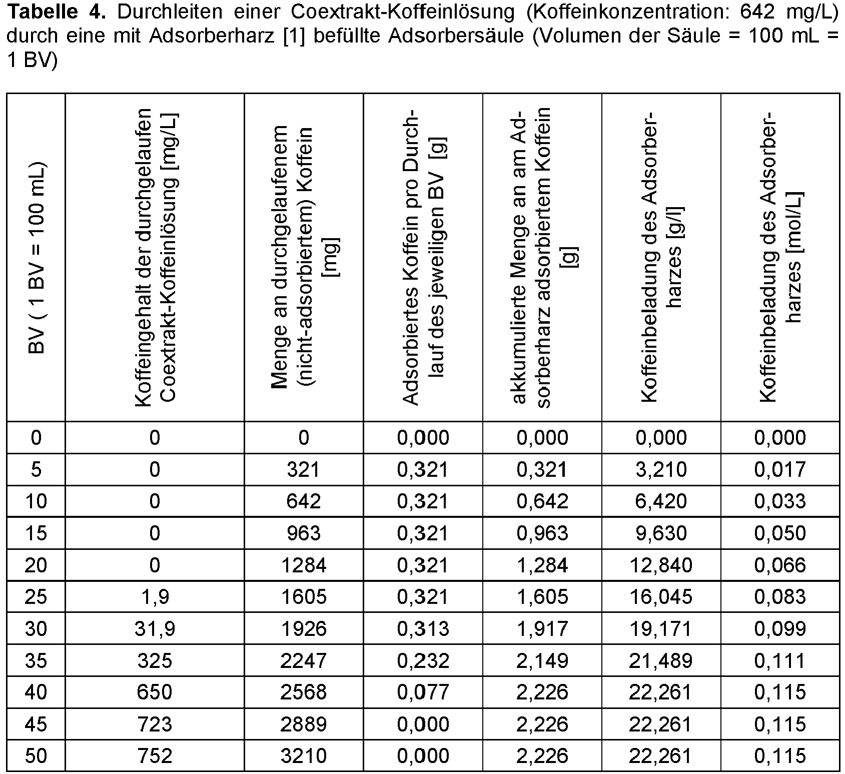

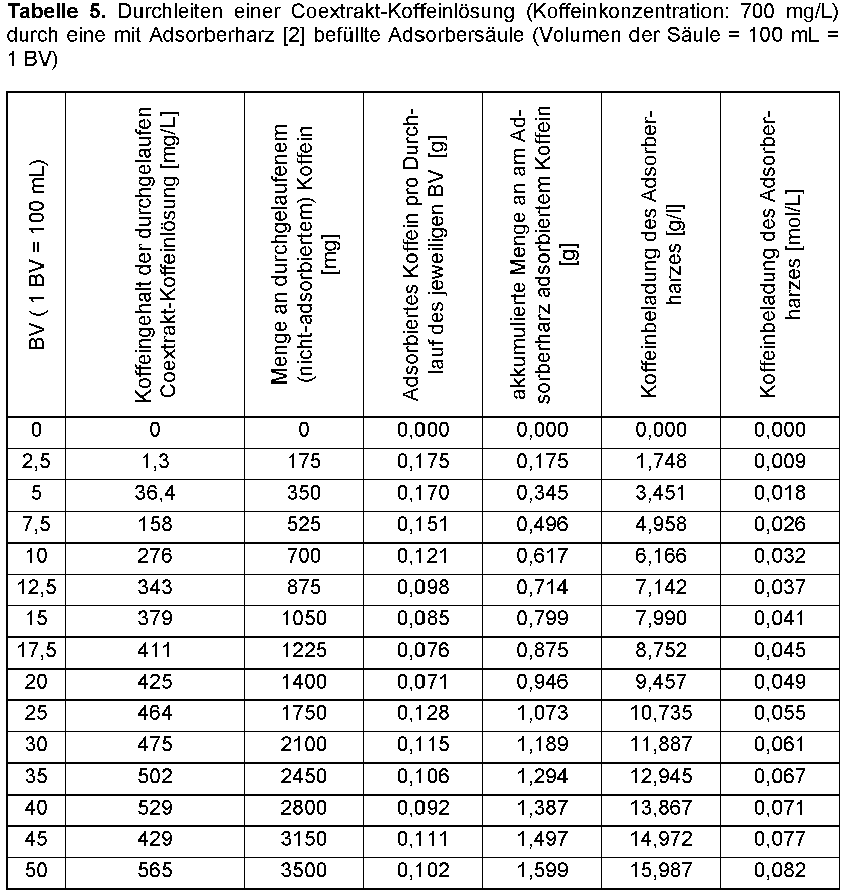

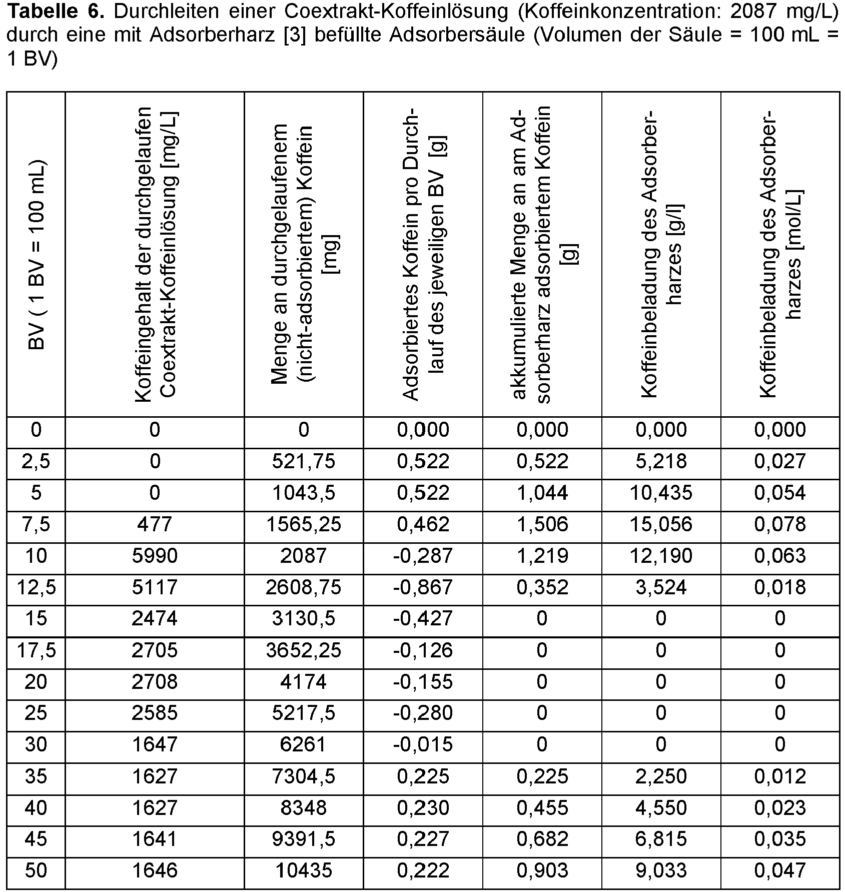

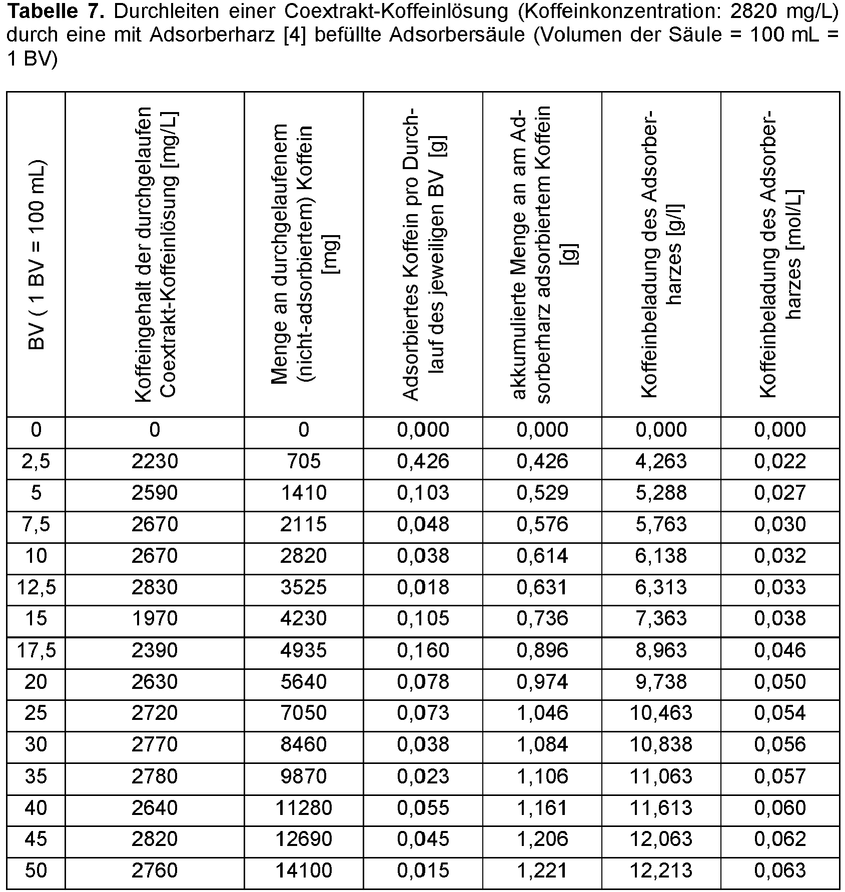

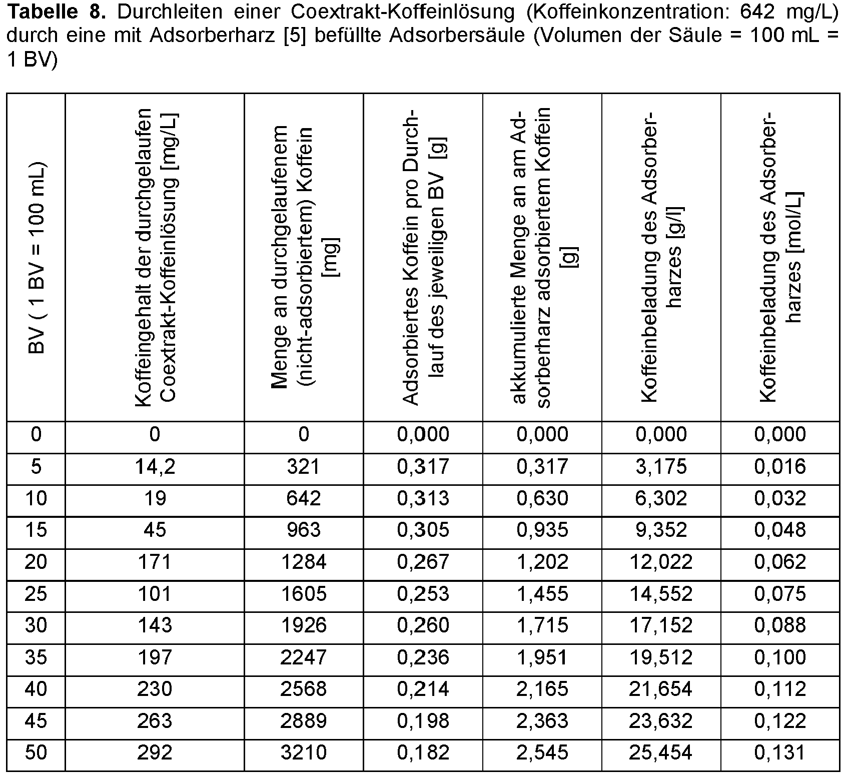

Sämtliche der hier eingesetzten makroporösen Adsorberharze [1] bis [5] sind dazu in der Lage, eine Menge an Koffein aus einer an Koffein angereicherten, wässrigen Coextraktionsflüssigkeit zu binden (gemäß Schritt S2 des erfindungsgemäßen Verfahrens). Es hat sich zudem gezeigt, dass ein Kontaktieren (gemäß Schritt S2 des erfindungsgemäßen Verfahrens), welches das Überströmen eines Adsorberharzes mit einer, an Koffein angereicherten, wässrigen Extraktionsflüssigkeit in eine definierte erste Strömungsrichtung umfasst, besonders vorteilhaft ist.

Es hat sich zudem gezeigt, dass der Einsatz eines makroporösen Adsorberharzes, welches ausgewählt ist aus der Gruppe bestehend aus Polystyrol, Polydivinylbenzol sowie deren Copolymere miteinander und mit anderen Monomeren, und welches nicht-funktionalisiert und nichtionisch ist (die verwendeten Adsorberharze [1] und [5]), ganz besonders vorteilhaft ist, um bei mehrmaligem Kontaktieren bzw. bei Kontaktierung mittels Durchströmen mit einer an Koffein angereicherten, wässrigen Extraktionsflüssigkeit Koffein aus der Extraktionsflüssigkeit an das Adsorberharz zu binden. Dies zeigt sich an der hohen maximalen Koffeinbeladung von 22,261 g/l bei Adsorberharz [1] und von 25,454 g/l bei Adsorberharz [5] (jeweils erreicht nach Durchströmen von 40 BV bzw. 50 BV) sowie an der akkumulierten Menge vom am Adsorberharz adsorbiertem Koffein von 2,226 g bei Einsatz von 100 mL des Adsorberharzes [1] und von 2,545 g bei Einsatz von 100 mL des Adsorberharzes [5] (jeweils erreicht nach Durchströmen von 40 BV bzw. 50 BV).

Anhand des Beispielversuchs 3 ist zudem ersichtlich, dass zu Beginn des Durchströmens der Adsorberharze mit der Coextrakt-Koffeinlösung eine große Menge an Koffein an das Adsorberharz gebunden wird, teilweise wird das Koffein dabei vollständig aus der wässrigen Lösung entfernt (vgl. die Anfangswerte an adsorbiertem Koffein pro Durchlauf des jeweiligen BV in Spalte 4 der Tabellen 4 bis 8). Diese nach Kontaktierung mit dem jeweiligen Adsorberharz resultierende teilweise oder vollständig entkoffeinierte wässrige Lösung (an Koffein abgereicherte, wässrige Extraktionsflüssigkeit) kann so in einem Schritt S1 des erfindungsgemäßen Verfahrens erneut als wässrige Extraktionsflüssigkeit eingesetzt werden (vorteilhafter Kreislaufprozess).

Je nach Art des eingesetzten Adsorberharzes tritt jedoch ab einer gewissen Menge an gebundenem Koffein eine Sättigung (Koffein-Aufnahmekapazitätsgrenze) des Adsorberharzes ein. Dies wird u.a. ersichtlich durch Erhöhung des Koffeingehalts der durchgelaufen Coextrakt-Koffeinlösung. So wird im hier durchgeführten Beispielversuch 3 bei Einsatz von 100 mL Adsorberharz [1] die Koffein-Aufnahmekapazitätsgrenze etwa bei Durchlauf von 35 BV der Coextrakt-Koffeinlösung erreicht, da ab diesem Zeitpunkt kaum oder gar kein Koffein mehr an das Adsorberharz gebunden wird, sondern es in der durchgelaufenen Coextrakt-Koffeinlösung verbleibt.

Hieraus ergibt sich: Vorzugsweise wird in einem erfindungsgemäßen Verfahren bei Erreichen der Sättigung von Schritt S2 (Beladung des Adsorberharzes mit Koffein) zu Schritt S3 (Entladung mittels Kontaktieren mit DCM) übergegangen. Spätestens bei Sättigung mit Koffein ist nämlich eine vorbestimmte Beladung des Adsorberharzes mit Koffein erreicht.

### Beispielversuch 4: Mehrmalige Adsorption von Koffein an einem Adsorberharz durch Durchleiten einer an Koffein angereicherten, wässrigen Extraktionsflüssigkeit durch eine mit Adsorberharz befüllte Adsorbersäule in zwei Beladungszyklen (zwei voneinander getrennte Adsorptionsschritte) mit zwischengeschaltetem Koffein-Desorptionsschritt

In Beispielversuch 4 wurde eine Adsorbersäule mit einem Fassungsvolumen pro Adsorbersäule von 100 mL jeweils mit einem Adsorberharz befüllt. Über diese mit Adsorberharz befüllten Adsorbersäulen wurde eine Coextrakt-Koffeinlösung (eine an Koffein angereicherte, wässrige Extraktionsflüssigkeit mit einer Koffeinkonzentration von 4500 mg/l) geleitet (Zyklus 1). Der Volumenstrom der durchgeleiteten Coextrakt-Koffeinlösung betrug 5 BV/h. Nach Durchlauf von je 2,5 BV bzw. 5 BV der Coextrakt-Koffeinlösung durch die Adsorbersäule wurde eine Probe der durchgelaufen Coextrakt-Koffeinlösung entnommen und der Koffeingehalt der Probe analysiert.

Nach Beendigung des ersten Beladungszyklus wurden die mit Koffein beladenen Adsorbersäulen mit Dichlormethan gespült, um Koffein von den Adsorbersäulen zu desorbieren. Der Gehalt an Koffein in der resultierenden Dichlormethanlösung wurde bestimmt und hieraus wurde die Wiedergewinnung an Koffein errechnet.

Anschließend wurde der Beladungszyklus wie oben beschrieben wiederholt (Zyklus 2). Auch im zweiten Beladungszyklus wurde nach Durchlauf von je 2,5 BV bzw. von 5 BV der Coextrakt-Koffeinlösung durch die Adsorbersäule eine Probe der durchgelaufen Coextrakt-Koffeinlösung entnommen und der Koffeingehalt der Probe analysiert. Hieraus konnten dann jeweils Rückschlüsse gezogen werden auf die
i) Menge an am Adsorberharz adsorbiertem Koffein pro Durchlauf von je 2,5 BV bzw. von 5 BV,
ii) akkumulierte Menge an am Adsorberharz adsorbiertem Koffein,
iii) die Koffeinbeladung des Adsorberharzes (Masse an adsorbiertem Koffein pro Volumen an Adsorberharz in g/l), und
iv) die Wiedergewinnung an Koffein.

Es wurden folgende Adsorberharze eingesetzt:
[1] makroporöses Adsorberharz ohne funktionelle Gruppe, nichtionisch, auf Basis eines mit Divinylbenzol vernetzten Polystyrols (LEWATIT^{®} VP OC 1064 MD PH von Lanxess)
[2] makroporöses Adsorberharz ohne funktionelle Gruppe, nichtionisch, auf Basis von Polydivinylbenzol (PuroSorb^{™} PAD600FM von Purolite)
[3] makroporöses Adsorberharz ohne funktionelle Gruppe, nichtionisch, auf Basis von Polydivinylbenzol (PuroSorb^{™} PAD500 von Purolite)

Die Auswahl der Adsorberharze in diesem Beispiel ist lediglich exemplarisch und auch andere Adsorberharze können verwendet werden.

Die Tabellen 9 bis 11 zeigen die jeweiligen Ergebnisse von Beispielversuch 4 bei Einsatz von Adsorberharzen [1] bis [3].

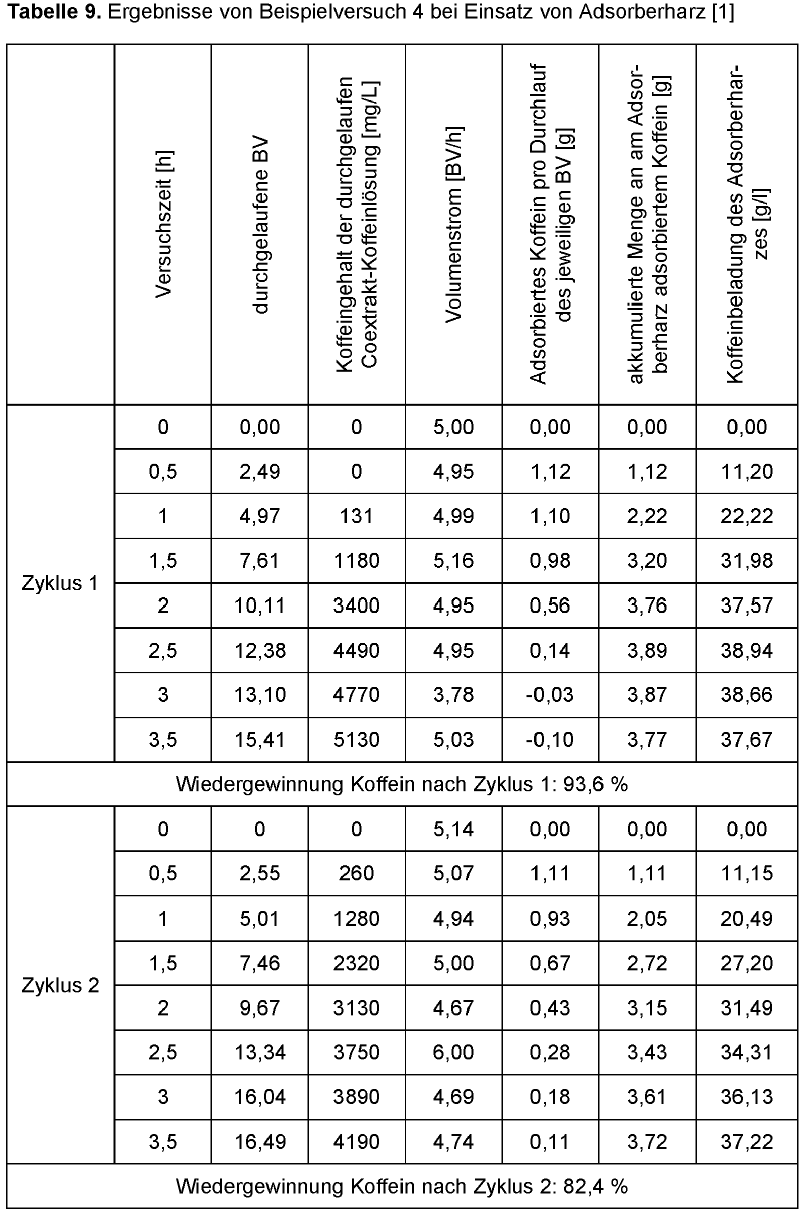

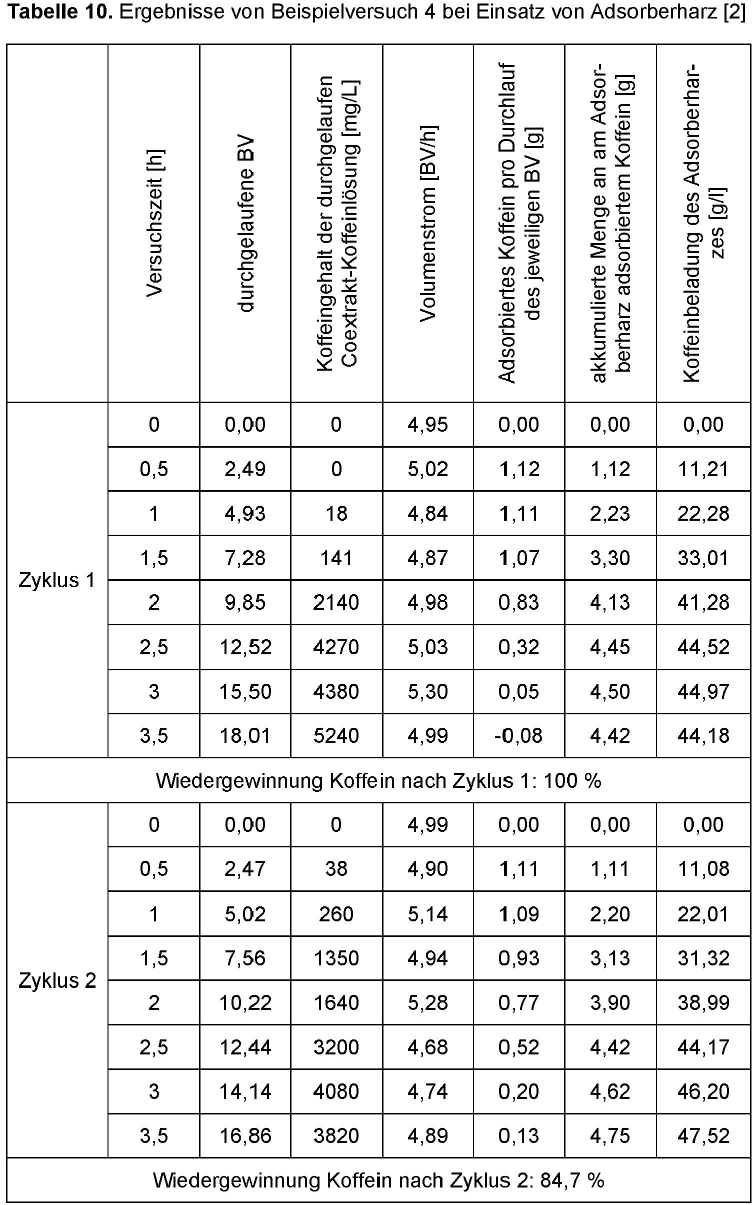

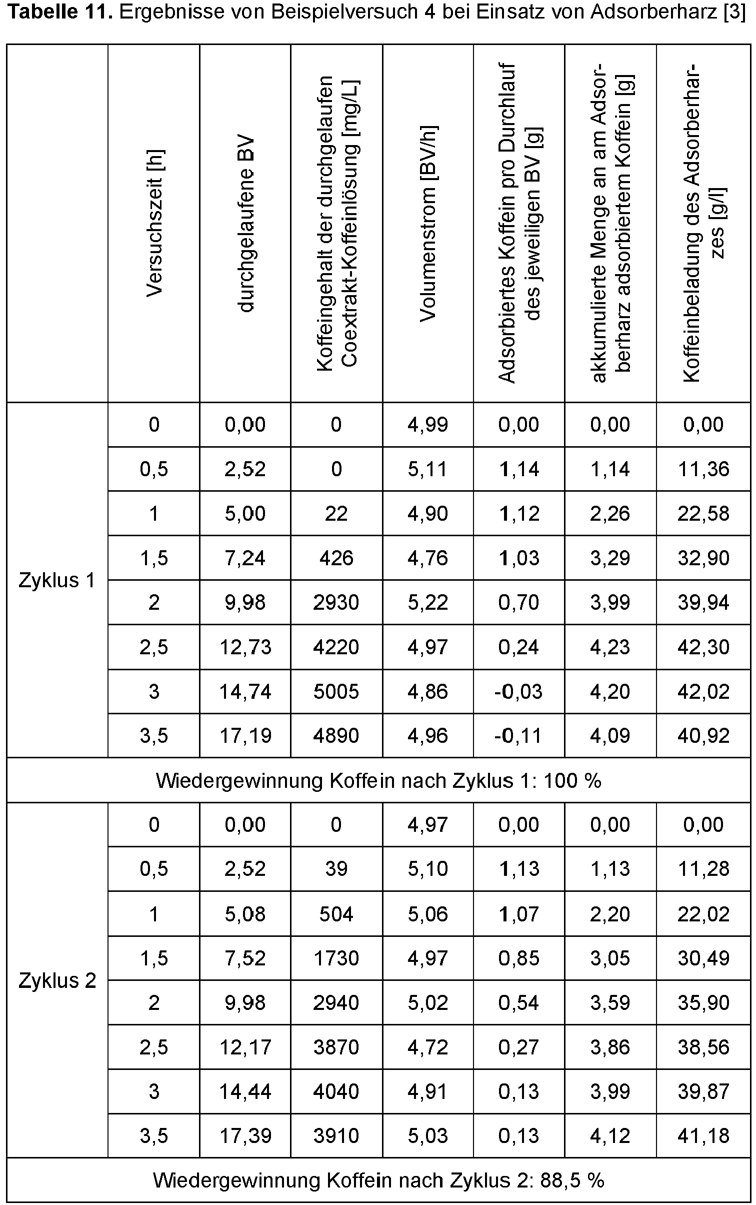

Die Versuchsdurchführung bzw. -anordnung von Beispielversuch 4 entspricht einem erfindungsgemäßen Verfahren, in welchem die Schritte S2 (Koffeinadsorption) und S3 (Koffeindesorption) abwechselnd und mehrfach hintereinander durchgeführt werden. Es hat sich hier gezeigt, dass eine solche Durchführung des erfindungsgemäßen Verfahrens insbesondere mit den hier verwendeten Adsorberharzen [1] bis [3], also mit makroporösen Adsorberharzen, welche ausgewählt sind aus der Gruppe bestehend aus Polystyrol, Polydivinylbenzol sowie deren Copolymere miteinander und mit anderen Monomeren, und welche nicht-funktionalisiert und nichtionisch sind, besonders gute Resultate zeigt.

Sowohl im ersten als auch im zweiten Beladungszyklus (jeweils gemäß Schritt S2 des erfindungsgemäßen Verfahrens) konnte eine große Menge Koffein aus der eingesetzten koffeinhaltigen Extraktionsflüssigkeit an das Adsorberharz gebunden werden. So lag die jeweils maximale akkumulierte Menge an am Adsorberharz adsorbiertem Koffein bei Einsatz von Adsorberharz [1] bei 3,89 g (Zyklus 1) und 3,72 g (Zyklus 2), bei Einsatz von Adsorberharz [2] bei 4,50 g (Zyklus 1) und 4,75 g (Zyklus 2), und bei Einsatz von Adsorberharz [3] bei 4,23 g (Zyklus 1) und 4,12 g (Zyklus 2). Die jeweilige maximale Koffeinbeladung der Adsorberharze (Gesamtkapazität in g/l) lag bei Einsatz von Adsorberharz [1] bei 38,94 g/l (Zyklus 1) und 37,22 g/l (Zyklus 2), bei Einsatz von Adsorberharz [2] bei 44,97 g/l (Zyklus 1) und 47,52 g/l (Zyklus 2), und bei Einsatz von Adsorberharz [3] bei 42,30 g/l (Zyklus 1) und 41,18 g/l (Zyklus 2). Die Koffein-Adsorptions-Performance im ersten und zweiten Beladungszyklus ist somit nahezu identisch. Geeignete Adsorberharze können in einem erfindungsgemäßen Verfahren also in technisch vorteilhafter Weise mehrfach als "Koffeinzwischenspeicher" genutzt werden.

Der vereinzelte Rückgang der Koffeinbeladung am Ende bestimmter Zyklen ist möglicherweise das Ergebnis von Messungenauigkeiten in einer komplexen technischen Anlage mit mehreren Säulen.

Die Wiedergewinnung an Koffein durch Spülen der mit Koffein beladenen Adsorberharze mittels DCM (gemäß Schritt S3 des erfindungsgemäßen Verfahrens) nach dem ersten Beladungszyklus lag mit 93,6 % (Adsorberharz [1]) und 100 % (Adsorberharze [2] und [3]) ebenfalls bei sehr hohen Werten. Ein mit Koffein beladenes Adsorberharz kann also so mit Dichlormethan gespült (kontaktiert) werden, so dass zumindest 90 % des Koffeins aus dem mit Koffein beladenen Adsorberharz in das Dichlormethan gelöst werden.

Auch die Wiedergewinnung an Koffein durch Spülen der mit Koffein beladenen Adsorberharze mittels DCM (gemäß Schritt S3 des erfindungsgemäßen Verfahrens) nach dem zweiten Beladungszyklus lag mit 82,4 % (Adsorberharz [1]), 84,7 % (Adsorberharz [2]) und 88,5 % (Adsorberharz [3]) bei hohen Werten. Auch bei repetitivem Durchführen der Verfahrensschritte S2 und S3 kann ein mit Koffein beladenes Adsorberharz ein zweites Mal so mit Dichlormethan gespült (kontaktiert) werden, dass zumindest 80 % des Koffeins aus dem mit Koffein beladenen Adsorberharz in das Dichlormethan gelöst werden.

Ein erfindungsgemäßes Verfahren kann also effizient so durchgeführt werden, dass sowohl entkoffeinierte Rohkaffeebohnen als auch Koffein bzw. Koffeinextrakt als (separate) Produkte resultieren.

### Beispielversuch 5: Extraktion von Koffein aus koffeinhaltigen Rohkaffeebohnen mit einer wässrigen Extraktionsflüssigkeit, so dass Koffein aus den koffeinhaltigen Rohkaffeebohnen in die Extraktionsflüssigkeit extrahiert wird, anschließendes Kontaktieren der resultierenden, an Koffein angereicherten, wässrigen Extraktionsflüssigkeit mit einem Adsorberharz, so dass Koffein aus der Extraktionsflüssigkeit an das Adsorberharz gebunden wird und Kontaktieren des mit Koffein beladenen Adsorberharzes mit Dichlormethan, so dass Koffein im Dichlormethan gelöst wird

In einem Reaktor wurden Rohkaffeebohnen und Wasser im Massenverhältnis 1:1,27 vorgelegt. Diese Extraktionsmischung wurde mit einer Mantelheizung auf eine Temperatur von 80°C erwärmt und für einen Zeitraum von 30 Minuten gerührt. Nach 30 Minuten Rührzeit wurde die resultierende Extraktionsflüssigkeit (flüssige Phase der Extraktionsmischung) von den extrahierten Rohkaffeebohnen getrennt und durch zwei hintereinander geschaltete Adsorbersäulen geleitet. Die Adsorbersäulen hatten ein Gesamtvolumen von 2 × 400 mL = 800 mL (= 1 BV) und waren jeweils mit 240 g eines makroporösen Adsorberharzes ohne funktionelle Gruppe, nichtionisch, auf Basis eines mit Divinylbenzol vernetztem Polystyrols (LEWATIT^{®} VP OC 1064 MD PH von Lanxess) befüllt. Der Volumenstrom betrug ca. 5 BV/h. Nach Durchleiten durch die Adsorbersäulen wurde die Extraktionsflüssigkeit zurück in den Reaktor zu den dort verbliebenen (bereits teilextrahierten) Rohkaffeebohnen geleitet und nach deren erneuter Extraktion von dort erneut über die Adsorbersäulen geleitet (Kreislaufsystem).

Der Koffeingehalt der wässrigen Extraktionsflüssigkeit wurde nach einem Durchsatz von je ca. 5 BV (in Zeitabständen von 30-60 Minuten) sowohl vor als auch nach der Durchleitung durch die Adsorbersäulen analysiert (siehe Tabelle 12). Hieraus wurden bestimmt:
i) Menge an am Adsorberharz adsorbiertem Koffein pro Durchlauf des jeweiligen BV,
ii) akkumulierte Menge an am Adsorberharz adsorbiertem Koffein, und
iii) Koffeinbeladung des Adsorberharzes (Masse an adsorbiertem Koffein pro Volumen an Adsorberharz in g/l).

Zudem wurde eine Probe der wässrigen Extraktionsflüssigkeit zu Beginn des Versuchs und zum Ende des Versuchs (nach 6,3 Stunden) entnommen und die Konzentration einiger gängiger Kaffeeinhaltsstoffe analysiert (siehe Tabelle 13).

Nach Beendigung des Versuchs wurden die mit Koffein beladene Adsorbersäulen mit Dichlormethan gespült, um Koffein von den Adsorbersäulen zu desorbieren. Es wurden annähernd 100% in der Dichlormethanphase wiedergefunden. Desweiteren wurde die Phase auf Chlorogensäuren, Asparagin, Gesamttrockenrückstand (GTR), Asche im GTR, Gesamtfett, Gesamtprotein und Gesamtzucker analysiert. Der Gehalt an Chlorogensäuren in der resultierenden Dichlormethanlösung betrug <2 ppm, Asparagin <12,5ppm, Gesamtfett <0,3g/100mL, Gesamtprotein <0,5g/100mL und Gesamtzucker <0,5g/100mL. Der GTR betrug 1600mg/L und die Asche in diesem war mit 5,36% vorhanden.

Nach Beendigung des Versuchs wurden die extrahierten Rohkaffeebohnen von der wässrigen Extraktionslösung getrennt und getrocknet. Der Koffeingehalt der extrahierten Rohkaffeebohnen wurde analysiert und betrug 0,09 %.

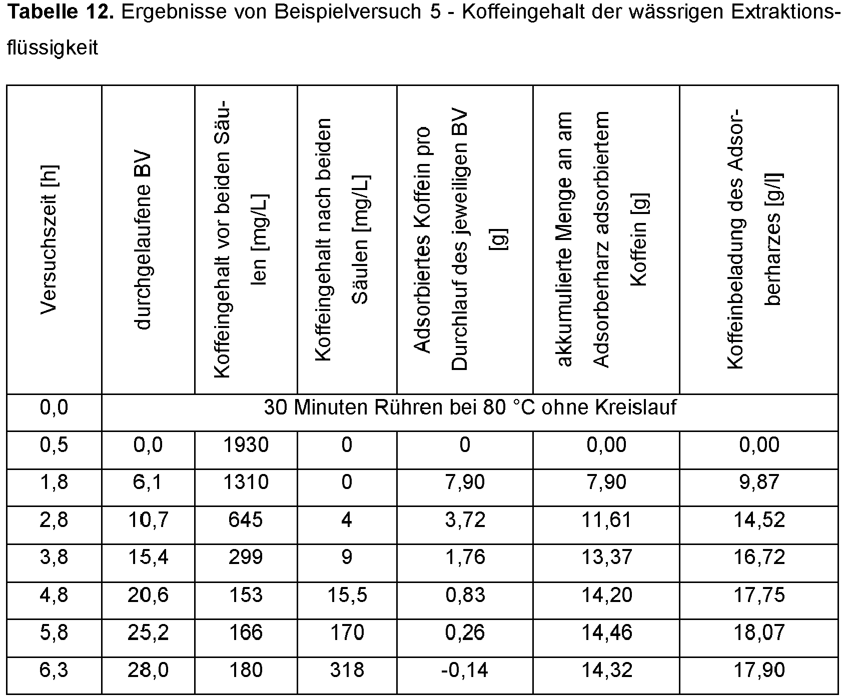

**Tabelle 13. Analyse der Konzentration einiger Kaffeeinhaltsstoffe in der wässrigen Extraktionsflüssigkeit zu Beginn des Versuchs und zum Ende des Versuchs (nach 6,3 Stunden)**

| Kaffeeinhaltsstoff | Einheit | zu Beginn des Versuchs | nach 6,3 h |
|---|---|---|---|
| Koffein | mg/L | 1930 | 318 |
| Asparagin | mg/kg | 200 | 200 |
| Gesamtfett | g/100g | <0,3 | <0,3 |
| Gesamtprotein | g/100g | 0,65 | <0,5 |
| Chlorogensäure | mg/L | 10017 | 8858 |

Die Versuchsdurchführung bzw. -anordnung von Beispielversuch 5 entspricht einem erfindungsgemäßen Verfahren, in welchem die Schritte S1 (Koffeinextraktion aus Rohkaffeebohnen mittels einer wässrigen Extraktionsflüssigkeit) und S2 (Koffeinadsorption aus der wässrigen Extraktionsflüssigkeit an einem Adsorberharz) mehrfach durchgeführt werden und die wässrige Extraktionsflüssigkeit ein oder mehrfach im Kreis gefördert wird. Hierbei wird die in Schritt S2 resultierende, an Koffein abgereicherte, wässrige Extraktionsflüssigkeit oder ein Aufbereitungsprodukt davon in Schritt S1 erneut als wässrige Extraktionsflüssigkeit eingesetzt.

Die Ergebnisse des Beispielversuchs 5 zeigen, dass mittels eines erfindungsgemäßen Verfahrens in effizienter Weise entkoffeinierte Rohkaffeebohnen mit einem Koffeingehalt von nur 0,09 % hergestellt werden können. In vorteilhafter Weise kommen hierbei die Rohkaffeebohnen nicht in Kontakt mit organischen Lösungsmitteln wie DCM; Koffein wird vielmehr ausschließlich durch Kontaktieren mit einer wässrigen Extraktionsflüssigkeit extrahiert.

Zudem zeigt Beispielversuch 5 die Effizienz der Koffeinadsorption (gemäß Schritt S2 des erfindungsgemäßen Verfahrens) an makroporösen Adsorberharzen, welche ausgewählt sind aus der Gruppe bestehend aus Polystyrol, Polydivinylbenzol sowie deren Copolymere miteinander und mit anderen Monomeren, und welche nicht-funktionalisiert und nichtionisch sind (vgl. das hier verwendete Adsorberharz [1]). Das hier verwendete Adsorberharz ist dazu in der Lage, eine besonders große Menge an Koffein aus einer koffeinhaltigen wässrigen Extraktionslösung zu binden, vgl. hierzu insbesondere die maximale akkumulierte Menge an am Adsorberharz adsorbiertem Koffein von 14,46 g und die maximale Koffeinbeladung des Adsorberharzes von 18,07 g/l. Der Rückgang der Koffeinbeladung zwischen den Zeitpunkten 5,8 und 6,3 Stunden des Versuches ist möglicherweise das Ergebnis von Messungenauigkeiten in einer komplexen technischen Anlage und/oder der Einstellung von Gleichgewichten unter den experimentellen Bedingungen.

Das eingesetzte Adsorberharz ist zudem dazu in der Lage, Koffein in einem Schritt S2 des erfindungsgemäßen Verfahrens selektiv zu binden. Selektiv heißt hier, dass andere in der wässrigen Extraktionsflüssigkeit enthaltene Kaffeeinhaltsstoffe wie beispielsweise Asparagin, Fette, Proteine, Zucker und Chlorogensäuren gar nicht oder weniger stark an das Adsorberharz binden (vgl. die Werte aus Tabelle 13). Dies ist besonders vorteilhaft, da für die sensorische Qualität von Kaffee relevante Substanzen in der wässrigen Extraktionsflüssigkeit verbleiben und somit auch eine geringere Menge dieser Substanzen aus den Rohkaffeebohnen extrahiert wird.

Zudem erfolgt auch die Desorption von Koffein aus einem zuvor mit Koffein und sonstigen Kaffeeinhaltsstoffen beladenem Adsorberharz mit Dichlormethan, so dass Koffein im Dichlormethan gelöst wird (gemäß Schritt S3 des erfindungsgemäßen Verfahrens), sehr effizient und selektiv. Die Wiedergewinnung von Koffein in der Dichlormethanlösung war sehr effizient und betrug 90,4 %.

Beispielversuch 5 zeigt, dass zwar eine gewisse Menge an Chlorogensäure an das Adsorberharz bindet, - vgl. den Gehalt an Chlorogensäure in der wässrigen Extraktionsflüssigkeit zu Beginn des Versuchs von 10017 mg/L und den Gehalt an Chlorogensäure in der wässrigen Extraktionsflüssigkeit zum Ende des Versuchs nach 6,3 Stunden von 8858 mg/L - dass diese an das Adsorberharz gebundene Menge an Chlorogensäure jedoch bei Kontaktieren mit Dichlormethan nicht desorbiert wird. In der Dichlormethanlösung befanden sich nur < 2 ppm an Chlorogensäure.

Das Adsorberharz kann also (in den Schritten S2 und S3 des erfindungsgemäßen Verfahrens) erneut (und mehrfach) dazu eingesetzt werden, Koffein (selektiv) aus einerwässrigen Extraktionsflüssigkeit zu binden und anschließend (selektiv) an Dichlormethan abzugeben. Versuchsbeispiel 5 zeigt somit eindrücklich, dass die Erfindung insbesondere den technischen Umstand nutzt, dass Koffein eine eher mittelmäßige Löslichkeit in Wasser besitzt (und deshalb von einem Adsorberharz aus wässriger Lösung effizient gebunden werden kann), aber besonders gut in Dichlormethan löslich ist (und deshalb effizient vom Adsorberharz an Dichlormethan abgegeben wird).

### Beispielversuch 6:

In Beispielversuch 6 wurde der die Vorgehensweise gemäß Beispielversuch 5 insgesamt 13 Mal wiederholt (13 Beladungs- und Entladungszyklen jeweils gemäß der Schritte S2 und S3 des erfindungsgemäßen Verfahrens) und es wurde jeweils die maximale Koffeinbeladung des Adsorberharzes in g/l sowie die Wiedergewinnung an Koffein in der Dichlormethanlösung in % bestimmt (vgl. Tabelle 14).

**Tabelle 14.**

| Zyklus | maximale Koffeinbeladung des Adsorberharzes [g/l] | Wiedergewinnung Koffein [%] |
|---|---|---|
| 1 | 18,53 | 90,40 |
| 2 | 16,91 | 101,86 |
| 3 | 18,65 | 117,97 |
| 4 | 19,37 | 108,72 |
| 5 | 16,72 | nicht gemessen |
| 6 | 18,53 | 107,79 |
| 7 | 16,65 | 92,96 |
| 8 | 17,31 | 108,62 |
| 9 | 19,55 | 102,34 |
| 10 | 17,74 | 94,81 |
| 11 | 18,16 | 113,58 |
| 12 | 18,05 | nicht gemessen |
| 13 | 18,21 | 103,90 |

Die Wiedergewinnung an Koffein liegt hier teilweise über dem theoretisch möglichen Wert von 100 %. Dies liegt vermutlich an üblichen Messabweichungen.

Dieser Versuch zeigt eindrücklich, dass das Adsorberharz mehrfach dazu eingesetzt werden kann, Koffein (selektiv) aus einer wässrigen Extraktionsflüssigkeit zu binden (gemäß Schritt S2 des erfindungsgemäßen Verfahrens) und anschließend (selektiv) an Dichlormethan abzugeben (gemäß Schritt S3 des erfindungsgemäßen Verfahrens).

## Patentansprüche

1. Verfahren zur Herstellung entkoffeinierter Rohkaffeebohnen,
mit folgenden Schritten:
(S1) Kontaktieren einer Menge an koffeinhaltigen Rohkaffeebohnen mit einer wässrigen Extraktionsflüssigkeit, so dass Koffein aus den koffeinhaltigen Rohkaffeebohnen in die Extraktionsflüssigkeit extrahiert wird,
(S2) Kontaktieren der in Schritt S1 resultierenden, an Koffein angereicherten, wässrigen Extraktionsflüssigkeit mit einem Adsorberharz, so dass Koffein aus der Extraktionsflüssigkeit an das Adsorberharz gebunden wird,
(S3) Kontaktieren des in Schritt S2 resultierenden, mit Koffein beladenen Adsorberharzes, mit Dichlormethan, so dass Koffein im Dichlormethan gelöst wird.

2. Verfahren nach Anspruch 1, wobei in Schritt S1 als wässrige Extraktionsflüssigkeit
- Wasser eingesetzt wird
oder
- eine wässrige Lösung eingesetzt wird, die einzelne oder mehrere Kaffeeinhaltsstoffe umfasst, die nicht Koffein sind, ausgewählt aus der Gruppe bestehend aus Säuren, Mineralien, Aromastoffe, durch Maillard-Reaktion in Aromastoffe überführbare Verbindungen, und Antioxidantien, so dass eine Extraktion von entsprechenden Kaffeeinhaltsstoffen aus den koffeinhaltigen Rohkaffeebohnen in die Extraktionsflüssigkeit verhindert oder erschwert wird.

3. Verfahren nach einem der vorangehenden Ansprüche, wobei in Schritt S2
- ein Adsorberharz eingesetzt wird, welches vorbeladen ist mit einzelnen oder mehreren Kaffeeinhaltsstoffen, die nicht Koffein sind, ausgewählt aus der Gruppe bestehend aus Säuren, Mineralien, Aromastoffe, durch Maillard-Reaktion in Aromastoffe überführbare Verbindungen, und Antioxidantien, so dass eine Bindung von entsprechenden Kaffeeinhaltsstoffen aus der in Schritt S1 resultierenden, Koffein enthaltenden Extraktionsflüssigkeit an das Adsorberharz verhindert oder erschwert wird
und/oder
- ein makroporöses Adsorberharz eingesetzt wird, welches ausgewählt ist aus der Gruppe bestehend aus Polystyrol, Polydivinylbenzol sowie deren Copolymere miteinander und mit anderen Monomeren,
wobei das makroporöse Adsorberharz vorzugsweise ein Polystyrol oder ein Copolymer des Polystyrol ist, bevorzugt ein vernetztes Polystyrol, besonders bevorzugt ein mit Divinylbenzol vernetztes Polystyrol, ganz besonders bevorzugt ein nichtfunktionalisiertes, nichtionisches und mit Divinylbenzol vernetztes Polystyrol,
und/oder
- zumindest 90 %, bevorzugt zumindest 95 %, ganz besonders bevorzugt zumindest 99 % des Koffeins aus der Koffein enthaltenden Extraktionsflüssigkeit an das Adsorberharz gebunden werden.

4. Verfahren nach einem der vorangehenden Ansprüche, wobei in Schritt S3
- das Kontaktieren so durchgeführt wird, dass zumindest 80 %, bevorzugt zumindest 90 %, besonders bevorzugt zumindest 95 %, ganz besonders bevorzugt zumindest 99 % des Koffeins aus dem mit Koffein beladenen Adsorberharz in das Dichlormethan gelöst werden,
und/oder
- die Temperatur des Dichlormethans niedriger ist als 35 °C, bevorzugt niedriger ist als 30 °C, besonders bevorzugt niedriger ist als 25 °C.

5. Verfahren nach einem der vorangehenden Ansprüche, wobei
Schritt S1 so durchgeführt wird, dass zumindest eine vorbestimmte Menge an Koffein aus der Menge an koffeinhaltigen Rohkaffeebohnen extrahiert wird
und/oder
die in Schritt S1 resultierenden, entkoffeinierten Rohkaffeebohnen getrocknet werden.

6. Verfahren nach einem der vorangehenden Ansprüche, umfassend den zusätzlichen Schritt nach Schritt S3:
(S4) Behandeln des Adsorberharzes
(S4-1) zum Entfernen von Dichlormethan
und/oder
(S4-2) zum Regenerieren der Beladbarkeit des Adsorberharzes mit Koffein unter den Bedingungen des Schrittes S2,
wobei vorzugsweise in Schritt S4-1 das Behandeln des Adsorberharzes zum Entfernen von Dichlormethan ein oder mehrere der folgenden Maßnahmen umfasst:
- Behandeln des Adsorberharzes mit flüssigem Wasser oder einer wässrigen Lösung, bevorzugt bei einer Wassertemperatur von zumindest 70 °C, besonders bevorzugt von zumindest 85 °C, so dass DCM aus dem Adsorberharz entfernt wird, vorzugsweise aus Poren des Adsorberharzes entfernt wird,
- Behandeln des Adsorberharzes mit Wasserdampf, so dass DCM aus dem Adsorberharz entfernt wird, vorzugsweise aus Poren des Adsorberharzes entfernt wird, und wobei vorzugsweise in Schritt S4-2 das Behandeln des Adsorberharzes zum Regenerieren der Beladbarkeit des Adsorberharzes mit Koffein unter den Bedingungen des Schrittes S2 die folgende Maßnahme umfasst:
- Behandeln des Adsorberharzes mit einer wässrigen, alkalischen Lösung, vorzugsweise einer Natriumhydroxid enthaltenden wässrigen Lösung, vorzugsweise bei einer Temperatur im Bereich von 60 °C bis 80 °C.

7. Verfahren nach einem der vorangehenden Ansprüche, wobei
das Kontaktieren in Schritt S2 das Überströmen des Adsorberharzes mit der in Schritt S1 resultierenden, an Koffein angereicherten, wässrigen Extraktionsflüssigkeit umfasst
und/oder
das nachfolgende Kontaktieren in Schritt S3 das Überströmen des mit Koffein beladenen Adsorberharzes mit Dichlormethan umfasst,
wobei vorzugsweise
das Kontaktieren in Schritt S2 das Überströmen des Adsorberharzes mit der in Schritt S1 resultierenden, an Koffein angereicherten, wässrigen Extraktionsflüssigkeit in eine definierte erste Strömungsrichtung umfasst und das nachfolgende Kontaktieren in Schritt S3 das Überströmen des mit Koffein beladenen Adsorberharzes mit Dichlormethan in eine definierte zweite Strömungsrichtung umfasst.

8. Verfahren nach einem der vorangehenden Ansprüche, wobei
- der erreichte Fortschritt der Extraktion in Schritt S1 und/oder die in Schritt S2 erreichte Beladung des Adsorberharzes mit Koffein bestimmt wird
und
von Schritt S2 zu Schritt S3 übergegangen wird, vorzugsweise automatisch umgeschaltet wird, sobald ein vorbestimmter Fortschritt der Extraktion in Schritt S1 erreicht ist und/oder sobald in Schritt S2 eine vorbestimmte Beladung des Adsorberharzes mit Koffein erreicht ist.
und/oder
- wobei wässrige Extraktionsflüssigkeit ein oder mehrfach im Kreis gefördert wird, wobei vorzugsweise die in Schritt S2 resultierende, an Koffein abgereicherte, wässrige Extraktionsflüssigkeit oder ein Aufbereitungsprodukt davon in Schritt S1 erneut als wässrige Extraktionsflüssigkeit eingesetzt wird.

9. Verfahren nach einem der vorangehenden Ansprüche, wobei das Verfahren ein Verfahren ist zur Herstellung von entkoffeinierten Rohkaffeebohnen und von Koffeinkonzentrat, umfassend den zusätzlichen Schritt:
(S5) Gewinnen von Koffeinkonzentrat aus der nach Schritt S3 vorliegenden Lösung von Koffein in Dichlormethan, vorzugsweise durch Abtrennen von Koffein.

10. Vorrichtung zur Herstellung entkoffeinierter Rohkaffeebohnen in einem Verfahren nach einem der vorangehenden Ansprüche, umfassend
- einen mit einer Menge an Rohkaffeebohnen befüllbaren Extraktor (10) zum Kontaktieren der Menge an koffeinhaltigen Rohkaffeebohnen mit einer wässrigen Extraktionsflüssigkeit,
- eine Adsorptionseinheit (30) mit einem Adsorberharz (32), zum Kontaktieren einer wässrigen, an Koffein angereicherten Extraktionsflüssigkeit mit dem Adsorberharz (32), wobei der Extraktor so mit der Adsorptionseinheit (30) verbunden ist, dass wässrige, an Koffein angereicherte Extraktionsflüssigkeit aus dem Extraktor (10) in die Adsorptionseinheit (30) geleitet werden kann,
- einen Vorratsbehälter (40) für wässrige Extraktionsflüssigkeit, der so mit dem Extraktor (10) verbunden ist, dass wässrige Extraktionsflüssigkeit aus dem Vorratsbehälter (40) für wässrige Extraktionsflüssigkeit in den Extraktor (10) geleitet werden kann,
- einen Vorratsbehälter (70) für Dichlormethan, der so mit der Adsorptionseinheit (30) verbunden ist, dass Dichlormethan in Kontakt mit dem Adsorberharz (32) gebracht werden kann,
- ein oder mehrere Steuerungseinrichtungen
zum Steuern der Förderung von wässriger Extraktionsflüssigkeit und/oder von Dichlormethan innerhalb der Vorrichtung
und/oder
zum automatischen Umschalten von Schritt S2 zu Schritt S3, sobald ein vorbestimmter Fortschritt der Extraktion in Schritt S1 erreicht ist und/oder sobald in Schritt S2 eine vorbestimmte Beladung des Adsorberharzes (32) mit Koffein erreicht ist.

11. Vorrichtung nach Anspruch 10,
- wobei die Vorrichtung dazu eingerichtet ist, eine wässrige Extraktionsflüssigkeit im Kreislauf zu fördern, wobei der Extraktor (10) und die Adsorptionseinheit (30) sowie vorzugsweise der Vorratsbehälter (40) für wässrige Extraktionsflüssigkeit Teil des Kreislaufs sind
und/oder
- mit einer Abtrenneinheit (90) zum Abtrennen von Koffein aus einer Lösung des Koffeins in Dichlormethan,
wobei die Vorrichtung dazu eingerichtet ist, Dichlormethan aus dem Vorratsbehälter (70) für Dichlormethan zur Adsorptionseinheit (30) und von dort zu der Abtrenneinheit (90) zu fördern.

12. Vorrichtung nach einem der Ansprüche 10 bis 11, wobei
- der Extraktor (10) mit Rohkaffeebohnen befüllt ist,
- der Vorratsbehälter (40) für wässrige Extraktionsflüssigkeit eine wässrige Extraktionsflüssigkeit enthält,
- der Vorratsbehälter (70) für Dichlormethan eine Menge an Dichlormethan enthält
und/oder
- das Adsorberharz (32) ein makroporöses Adsorberharz ist, welches ausgewählt ist aus der Gruppe bestehend aus Polystyrol, Polydivinylbenzol sowie deren Copolymere miteinander und mit anderen Monomeren,
wobei das makroporöse Adsorberharz vorzugsweise ein Polystyrol oder ein Copolymer des Polystyrol ist, bevorzugt ein vernetztes Polystyrol, besonders bevorzugt ein mit Divinylbenzol vernetztes Polystyrol, ganz besonders bevorzugt ein nicht-funktionalisiertes, nichtionisches und mit Divinylbenzol vernetztes Polystyrol.

13. Verwendung einer Vorrichtung nach einem der Ansprüche 10 bis 12 zur Durchführung eines Verfahrens nach einem der Ansprüche 1 bis 9.

14. Verwendung von Dichlormethan zum Entfernen von Koffein von einem Adsorberharz, welches mit Koffein und weiteren Kaffeeinhaltsstoffen beladen ist,
wobei das Adsorberharz vorzugsweise ein makroporöses Adsorberharz ist, welches ausgewählt ist aus der Gruppe bestehend aus Polystyrol, Polydivinylbenzol sowie deren Copolymere miteinander und mit anderen Monomeren,
wobei das makroporöse Adsorberharz besonders vorzugsweise ein Polystyrol oder ein Copolymer des Polystyrol ist, bevorzugt ein vernetztes Polystyrol, besonders bevorzugt ein mit Divinylbenzol vernetztes Polystyrol, ganz besonders bevorzugt ein nicht-funktionalisiertes, nichtionisches und mit Divinylbenzol vernetztes Polystyrol und/oder
wobei die Verwendung in einer Vorrichtung nach einem der Ansprüche 10 bis 12 erfolgt.

15. Verwendung eines Adsorberharzes,
wobei das Adsorberharz vorzugsweise ein makroporöses Adsorberharz ist, welches ausgewählt ist aus der Gruppe bestehend aus Polystyrol, Polydivinylbenzol sowie deren Copolymere miteinander und mit anderen Monomeren,
wobei das makroporöse Adsorberharz besonders vorzugsweise ein Polystyrol oder ein Copolymer des Polystyrol ist, bevorzugt ein vernetztes Polystyrol, besonders bevorzugt ein mit Divinylbenzol vernetztes Polystyrol, ganz besonders bevorzugt ein nicht-funktionalisiertes, nichtionisches und mit Divinylbenzol vernetztes Polystyrol,
zum Adsorbieren von Koffein aus einer an Koffein angereicherten, wässrigen Extraktionsflüssigkeit,
in einem Verfahren zur Herstellung entkoffeinierter Rohkaffeebohnen, wobei das mit aus den Rohkaffeebohnen extrahiertem Koffein beladene Adsorberharz mit Dichlormethan behandelt wird, so dass Koffein im Dichlormethan gelöst wird,
vorzugsweise in einem Verfahren nach einem der Ansprüche 1 bis 9 und/oder in einer Vorrichtung nach einem der Ansprüche 10 bis 12.
